(19) Europäisches Patentamt / European Patent Office / Office européen des brevets

(11) **EP 4 657 855 A1**

(12) **EUROPEAN PATENT APPLICATION**
published in accordance with Art. 153(4) EPC

(43) Date of publication:
**03.12.2025 Bulletin 2025/49**

(21) Application number: **24747099.0**

(22) Date of filing: **11.01.2024**

(51) International Patent Classification (IPC):
**H04N 19/13** (2014.01)     **H04N 19/50** (2014.01)
**H04N 19/96** (2014.01)

(52) Cooperative Patent Classification (CPC):
**H04N 19/13; H04N 19/50; H04N 19/96**

(86) International application number:
**PCT/JP2024/000343**

(87) International publication number:
**WO 2024/157768 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.01.2023 JP 2023008157**

(71) Applicant: **Sony Group Corporation
Tokyo 108-0075 (JP)**

(72) Inventors:
• **KAWAI Wataru
Tokyo 108-0075 (JP)**
• **NAKAGAMI Ohji
Tokyo 108-0075 (JP)**

(74) Representative: **D Young & Co LLP
3 Noble Street
London EC2V 7BQ (GB)**

(54) **INFORMATION PROCESSING DEVICE AND METHOD**

(57)    The present disclosure relates to an information processing device and method to make it possible to suppress a decrease in coding efficiency.

A composite vector is generated by combining a plurality of context vectors corresponding to a processing target node of 3D data having a tree structure, by using an importance coefficient vector for controlling a degree of contribution to prediction. A predicted probability vector indicating a probability value of an occupancy state that can be taken by each child node of the processing target node is derived on the basis of the composite vector. Information indicating an occupancy state of the child node of the processing target node is coded using the predicted probability vector. The present disclosure may be applied to, for example, an information processing device, an electronic device, an information processing method, a program, or the like.

*FIG. 4*

| | |
|---|---|
| METHOD 1 | PREDICTED PROBABILITY VECTOR IS DERIVED BY USING WEIGHTED SUM OF CONTEXT VECTOR USING IMPORTANCE COEFFICIENT VECTOR. IMPORTANCE COEFFICIENT VECTOR IS TRANSMITTED |
| METHOD 1-1 | IMPORTANCE COEFFICIENT VECTOR IS CODED BY VECTOR QUANTIZATION |
| METHOD 1-2 | IMPORTANCE COEFFICIENT VECTOR IS DERIVED BY ATTENTION CALCULATION USING QUERY VECTOR AND CONTEXT VECTOR. QUERY VECTOR IS TRANSMITTED |
| METHOD 1-2-1 | QUERY VECTOR IS CODED BY VECTOR QUANTIZATION |
| METHOD 1-2-1-1 | PARAMETER OF ENTROPY MODEL OF QUERY VECTOR IS DERIVED USING CONTEXT VECTOR |
| METHOD 1-2-2 | EACH ELEMENT OF QUERY VECTOR IS ENTROPY CODED |
| METHOD 1-2-3 | MULTI-HEAD ATTENTION IS APPLIED TO ATTENTION CALCULATION |
| METHOD 1-2-4 | QUERY VECTOR IS SHARED IN UNITS OF MACROBLOCKS |
| METHOD 1-3 | NEIGHBORING VOXEL IS DIVIDED IN SPACE DIRECTION |
| METHOD 1-4 | METADATA SUCH AS COORDINATE VALUES AND DEPTH OF 0ctree IS ADDED TO CONTEXT VECTOR |

EP 4 657 855 A1

**Description**

TECHNICAL FIELD

The present disclosure relates to an information processing device and method, and more particularly relates to an information processing device and method capable of reducing a decrease in coding efficiency.

BACKGROUND ART

Conventionally, as a geometry coding method for 3D data, there has been a method of coding an octree by using a neural network (see, for example, Non-Patent Document 1). In this method, a context vector is derived on the basis of an occupancy state of a neighboring region, a predicted probability vector is derived on the basis of the context vector, and the occupancy state is coded by using the predicted probability vector. At that time, the context vector is derived not only for a processing target frame but also for neighboring frames, and is applied to the derivation of the predicted probability vector. Therefore, the geometry can be coded using intra-frame correlation and inter-frame correlation, such as intra-prediction and inter-prediction of 2D coding.

CITATION LIST

NON-PATENT DOCUMENT

Non-Patent Document 1: Zizheng Que, Guo Lu, Dong Xu, "VoxelContext-Net: An Octree based Framework for Point Cloud Compression", Proceedings of the IEEE/CVF Conference on Computer Vision and Pattern Recognition (CVPR), 2021, pp. 6042-6051

SUMMARY OF THE INVENTION

PROBLEMS TO BE SOLVED BY THE INVENTION

However, in the method described in Non-Patent Document 1, a degree of contribution of each context vector to prediction has been determined at a time of learning. Therefore, there has been a possibility that it is difficult to obtain an optimal predicted probability vector for a coding target at a time of inference, and there has been a possibility that the coding efficiency is decreased.

The present disclosure has been made in view of such a situation, and an object thereof is to make it possible to suppress a decrease in coding efficiency.

SOLUTIONS TO PROBLEMS

An information processing device according to one aspect of the present technology is an information processing device including: a vector composition unit configured to generate a composite vector by combining a plurality of context vectors corresponding to a processing target node of 3D data having a tree structure, by using an importance coefficient vector for controlling a degree of contribution to prediction; a predicted probability vector deriving unit configured to derive a predicted probability vector indicating a probability value of an occupancy state that can be taken by each child node of the processing target node on the basis of the composite vector; and an occupancy state coding unit configured to code information indicating an occupancy state of the child node of the processing target node by using the predicted probability vector, in which a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction, a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and the prediction is prediction of an occupancy state of the child node of the processing target node by using intra-frame correlation and inter-frame correlation.

An information processing method according to one aspect of the present technology is an information processing method including: generating a composite vector by combining a plurality of context vectors corresponding to a processing target node of 3D data having a tree structure, by using an importance coefficient vector for controlling a degree of contribution to prediction; deriving a predicted probability vector indicating a probability value of an occupancy state that can be taken by each child node of the processing target node on the basis of the composite vector; and coding information indicating an occupancy state of the child node of the processing target node by using the predicted probability vector, in which a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction, a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and the prediction is prediction of an occupancy state of the child node of the processing target node by using intra-frame correlation and inter-frame correlation.

An information processing device according to another aspect of the present technology is an information processing device including: a vector composition unit configured to generate a composite vector by combining a plurality of context vectors corresponding to a processing target node of 3D data having a tree structure, by using an importance coefficient vector for controlling a degree of contribution to prediction; a predicted probability vector deriving unit configured to derive a predicted probability vector indicating a probability value of an occupancy state that can be taken by each child node of the processing target node on the basis of the composite vector; and an occupancy state decoding unit configured to decode a bitstream by using the predicted probability vector to generate information indicating an occupancy state of the child node of the processing target node, in which a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction, a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and the prediction is prediction of an occupancy state of the child node of the processing target node by using intra-frame correlation and inter-frame correlation.

An information processing method according to another aspect of the present technology is an information processing method including: generating a composite vector by combining a plurality of context vectors corresponding to a processing target node of 3D data having a tree structure, by using an importance coefficient vector for controlling a degree of contribution to prediction; deriving a predicted probability vector indicating a probability value of an occupancy state that can be taken by each child node of the processing target node on the basis of the composite vector; and decoding a bitstream by using the predicted probability vector to generate information indicating an occupancy state of the child node of the processing target node, in which a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction, a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and the prediction is prediction of an occupancy state of the child node of the processing target node by using intra-frame correlation and inter-frame correlation.

In the information processing device and the method according to one aspect of the present technology, a composite vector is generated by combining a plurality of context vectors corresponding to a processing target node of 3D data having a tree structure, by using an importance coefficient vector for controlling a degree of contribution to prediction. A predicted probability vector indicating a probability value of an occupancy state that can be taken by each child node of the processing target node is derived on the basis of the composite vector. Information indicating an occupancy state of the child node of the processing target node is coded using the predicted probability vector.

In the information processing device and the method according to another aspect of the present technology, a composite vector is generated by combing a plurality of context vectors corresponding to a processing target node of 3D data having a tree structure, by using an importance coefficient vector for controlling a degree of contribution to prediction. A predicted probability vector indicating a probability value of an occupancy state that can be taken by each child node of the processing target node is derived on the basis of the composite vector. A bitstream is decoded using the predicted probability vector, to generate information indicating an occupancy state of the child node of the processing target node.

BRIEF DESCRIPTION OF DRAWINGS

Fig. 1 is a diagram illustrating an example of a processing order of an octree.

Fig. 2 is a diagram illustrating an example of a state of prediction of an occupancy state.

Fig. 3 is a diagram illustrating an example of a state of derivation of a predicted probability vector.

Fig. 4 is a table illustrating an example of a geometry coding method.

Fig. 5 is a block diagram illustrating a main configuration example of a geometry coding device.

Fig. 6 is a block diagram illustrating a main configuration example of an octree coding unit.

Fig. 7 is a flowchart for explaining an example of a flow of a coding process.

Fig. 8 is a flowchart for explaining an example of a flow of an octree coding process.

Fig. 9 is a flowchart subsequent to Fig. 8, for explaining an example of a flow of the octree coding process.

Fig. 10 is a block diagram illustrating a main configuration example of a geometry decoding device.

Fig. 11 is a block diagram illustrating a main configuration example of an octree decoding unit.

Fig. 12 is a flowchart for explaining an example of a flow of a decoding process.

Fig. 13 is a flowchart for explaining an example of a flow of an octree decoding process.

Fig. 14 is a block diagram illustrating a main configuration example of the octree coding unit.

Fig. 15 is a flowchart for explaining an example of a flow of an octree coding process.

Fig. 16 is a flowchart subsequent to Fig. 15, for explaining an example of a flow of the octree coding process.

Fig. 17 is a block diagram illustrating a main configuration example of the octree decoding unit.

Fig. 18 is a flowchart for explaining an example of a flow of an octree decoding process.

Fig. 19 is a block diagram illustrating a main configuration example of the octree coding unit.

Fig. 20 is a block diagram illustrating a main configuration example of a probability vector generation unit.

Fig. 21 is a flowchart for explaining an example of a flow of an octree coding process.

Fig. 22 is a flowchart subsequent to Fig. 21, for explaining an example of a flow of the octree coding process.

Fig. 23 is a flowchart for explaining an example of a flow of a probability vector generation process.

Fig. 24 is a block diagram illustrating a main configuration example of the octree decoding unit.

Fig. 25 is a flowchart for explaining an example of a flow of an octree decoding process.

Fig. 26 is a view illustrating an example of a macroblock.

Fig. 27 is a diagram illustrating an example of sub-neighboring regions.

Fig. 28 is a block diagram illustrating a main configuration example of a computer.

MODE FOR CARRYING OUT THE INVENTION

A mode for carrying out the present disclosure (hereinafter, referred to as an embodiment) is hereinafter described. Note that the description will be made in the following order.

1. Documents and the like supporting technical content and technical terms
2. Geometry coding
3. Importance coefficient vector
4. Query vector
5. Division of neighboring region
6. Addition of metadata
7. Appendix

<1. Documents and the like supporting technical content and technical terms>

The scope disclosed in the present technology includes, in addition to the contents disclosed in the embodiment, contents described in following Non-Patent Documents and the like known at the time of filing, the contents of other documents referred to in following Non-Patent Documents and the like.

Non-Patent Document 1: (As described above)

That is, the contents described in the above-described Non-Patent Documents, the contents of other documents referred to in the above-described Non-Patent Documents, and the like are also basis for determining the support requirement.

<2. Geometry coding>

<Point cloud>

Conventionally, as 3D data representing a three-dimensional structure of a stereoscopic structural object (object having a three-dimensional shape), there has been a point cloud representing the object as a set of a large number of points. Data (also referred to as point cloud data) of the point cloud includes a geometry (position information) and an attribute (attribute information) of each point constituting the point cloud. The geometry indicates a position of the point in a three-dimensional space. The attribute indicates an attribute of the point. This attribute can include any information. For example, color information, reflectance information, normal line information, and the like regarding each point may be included in the attribute. As described above, the point cloud has a relatively simple data structure and can represent any stereoscopic structural object with a sufficient accuracy, by using a sufficiently large number of points.

<Voxel representation>

However, since such a point cloud has a relatively large data amount, compression of the data amount by coding or the like has been required. For example, as positional accuracy of the geometry of each point increases, the data amount increases. Therefore, a method of representing a geometry by using voxels has been considered. The voxel is a region obtained by dividing a three-dimensional space region including the object. A position of each point in the point cloud is located at a predetermined location (for example, a center) within such a voxel. In other words, whether or not a point is present in each voxel is indicated. By doing in this way, the geometry of each point can be quantized in units of voxels. Therefore, an increase in data amount of the geometry can be suppressed. Note that, in the present specification, such a representation method of geometry using voxels is also referred to as voxel representation.
One voxel can be divided into a plurality of voxels. That is, by recursively and repeatedly dividing the voxel, a size of each voxel can be further reduced. A resolution is higher as the size of the voxels is smaller. That is, a position of each point can be represented more accurately. In other words, an effect of reducing the data amount of the geometry by the above-described quantization is suppressed.
Note that, in such voxel representation, only voxels in which a point is present are divided. The voxel in which a point is present is divided into eight voxels (2 x 2 x 2). Among the eight voxels, only a voxel in which a point is present is further divided into eight. In this way, the voxel in which a point is present is recursively divided until the minimum unit is obtained. In this way, a layer structure is formed.

<Octree representation>

As described above, the voxel representation indicates whether or not a point is present in each voxel. That is, a voxel of each layer is used as a node, and whether or not a point is present is represented by 0 and 1 for each divided voxel, whereby the geometry can be represented in a tree structure. For example, when the voxel is divided into eight for each layer as described above, the geometry can be represented as an octree. In the present specification, such a representation method of the geometry using an octree is also referred to as octree representation. Such a bit pattern of each node is arranged and coded in a predetermined order. By using the octree representation, scalable decoding of the geometry can be achieved. That is, only necessary information can be decoded to obtain the geometry of any layer (resolution).
Furthermore, as described above, in the voxel representation, since division of voxels in which points are not present can be omitted, nodes in which points are not present can also be omitted in the octree representation. Therefore, an increase in data amount of the geometry can be suppressed.

<VoxelContext-Net>

Meanwhile, Non-Patent Document 1 discloses a technique called VoxelContext-Net using context, as such a coding method of an octree. In this method, a context vector is derived on the basis of an occupancy state of a neighboring region, a predicted probability vector indicating a predicted probability of an occupancy state of a child node of a processing target node is derived on the basis of the context vector, and the occupancy state is coded using the predicted probability vector. At that time, the context vector is derived not only for a processing target frame but also for neighboring frames, and is applied to the derivation of the predicted probability vector. That is, not only an octree at a processing target time t (an octree corresponding to a point cloud at time t) but also an octree at time t - 1, time t + 1, and the like is used. That is, an octree of a plurality of frames (a plurality of times) is used for coding and decoding. That is, as in intra prediction and inter prediction of 2D coding, an occupancy state of a child node of a processing target node is predicted using intra-frame correlation and inter-frame correlation, and the geometry can be coded or decoded using a prediction result.
Note that, in the present specification, such an octree of a plurality of frames (a plurality of times) is also referred to as an octree sequence. Furthermore, a frame at the processing target time t is also referred to as a processing target frame.

Furthermore, a frame at a time near the processing target frame is also referred to as a neighboring frame. In particular, among the neighboring frames, a frame adjacent to the processing target frame (that is, a frame at time t - 1 or a frame at time t + 1) is also referred to as an adjacent frame. Furthermore, the neighboring region indicates a region near a processing target node in the processing target frame in a space direction, or a region near, in the space direction, a node (for example, a node at the same position as the processing target node) corresponding to the processing target node in the neighboring frame. For example, in a case of the processing target frame, the neighboring region indicates a peripheral region (a region of the processing target frame within a predetermined range based on the processing target node) in the space direction of the processing target node or a node group located in the region. Furthermore, in a case of the neighboring frame, the neighboring region indicates a region corresponding to a neighboring region in the processing target frame of the neighboring frame (a region having a predetermined positional relationship with the neighboring region in the processing target frame) or a node group located in the region.

Next, a processing order of each node of an octree will be described. For example, a layer (also referred to as LoD) of a depth k of an octree at time t is expressed as $Octree\_(t, k) \{0, 1\}^{(2^k \times 2^k \times 2^k)}$. Furthermore, a point cloud $PC\_t$ at time t is quantized by $2^K$ bits, and a depth of the octree is K. That is, k = 0, ..., K. Note that, in the present specification, x_y indicates that a subscript of x is y ($x_y$). Furthermore, x^y indicates that a superscript of x is y ($x^y$).

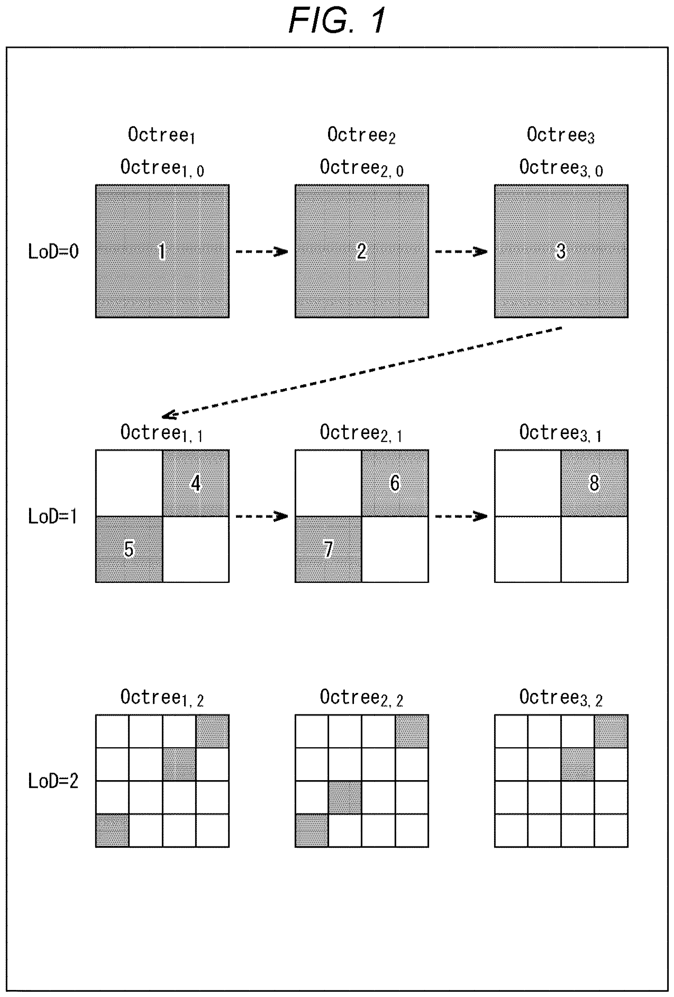

Intermediate nodes (= nodes other than leaf nodes) in all the octrees constituting the octree sequence are sequentially visited and processed. A visit order (processing order) of individual intermediate nodes is made the order of a time → LoD as illustrated in Fig. 1. That is, after all the nodes of the octree at each time of a processing target LoD are sequentially processed and the nodes at all the times are processed, the processing target is moved to an LoD one level lower.

Fig. 1 illustrates an example in a case of T = 3 (time t = 1, 2, 3) and K = 2 (LoD = 0, 1, 2). Each square in the figure indicates a voxel of each LoD. When LoD = 0, the number of voxels is one. When LoD = 1, the voxel is divided into 2 × 2, and the number of voxels is four. When LoD = 2, each voxel of LoD = 1 is further divided into 2 × 2, and the number of voxels is 16. Note that, although the voxel configuration is illustrated in a plane in Fig. 1 for convenience of description, the voxel is actually configured in a three-dimensional shape. Therefore, actually, the number of voxels for LoD = 1 is 8 (= 2 x 2 x 2), and the number of voxels for LoD = 2 is 64 (= 4 x 4 x 4). In the figure, a gray square indicates a voxel including a point (a voxel occupied by a point), and a white square indicates a voxel not including a point (a voxel not occupied by a point). Furthermore, a number in the square indicates a visit order (processing order). That is, only a voxel occupied by a point is a processing target.

Note that the visit order of the nodes in the same LoD at the same time may be any order. The visit order illustrated in Fig. 1 is an example, and the visit orders "4" and "5" may be interchanged, or "6" and "7" may be interchanged, for example. However, the visit order needs to match between a decoder and an encoder.

In this method, for an intermediate node (processing target node) being visited, occupancy states of eight child nodes thereof are coded. The occupancy state of the eight child nodes is expressed by 8 bits, and has $2^8 = 256$ patterns in total. For the coding, the encoder predicts an occupancy state of a child node of the processing target node on the basis of an occupancy state of a neighboring region. That is, a probability vector (normalization is performed such that all elements of 256 elements are non-negative and the sum is 1) indicating the occupancy state of the child node of the processing target node is predicted from the occupancy state of each node in the neighboring region. Each element of the prediction result (also referred to as a predicted probability vector) corresponds to one occupancy state. With the predicted probability vector used as an entropy model, an actual occupancy state is entropy coded. As described above, when coding of occupancy states of child nodes are ended for all the intermediate nodes in all the octrees, a bitstream is output.

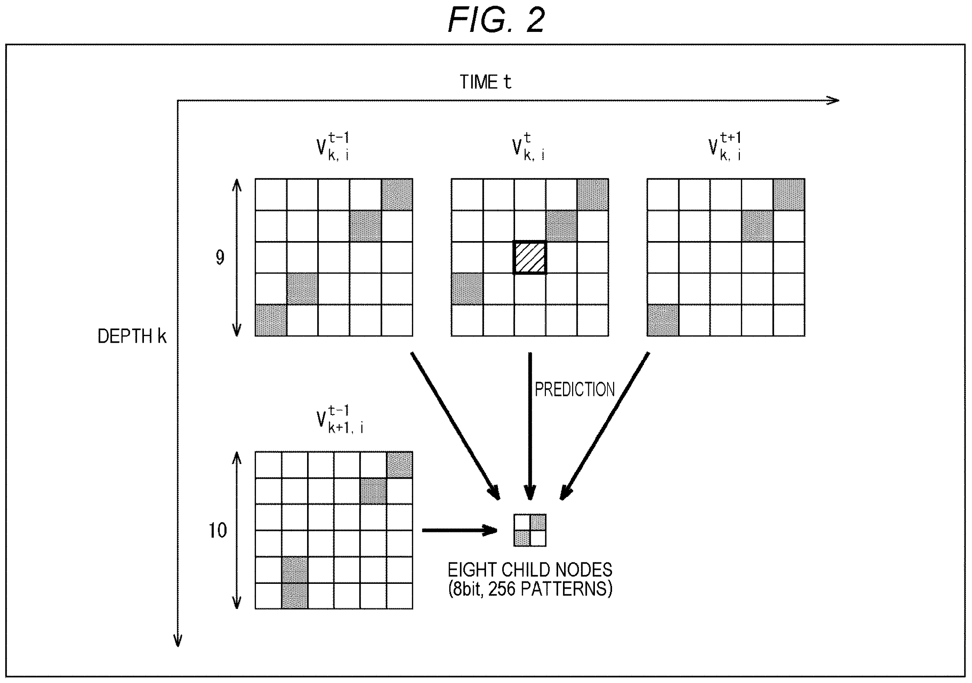

The prediction of (the probability vector of) the occupancy state of the child node of the processing target node can be performed on the basis of an occupancy state of a neighboring region in a processing target frame or a neighboring frame (for example, an adjacent frame), or both of them. For example, as illustrated in Fig. 2, (the probability vector of) the occupancy state of the child node of the processing target node may be predicted on the basis of an occupancy state of a neighboring region of a processing target frame of a processing target LoD, an occupancy state of a neighboring region of an adjacent frame (frame immediately before) of the processing target LoD, an occupancy state of a neighboring region of an adjacent frame (frame immediately after) of the processing target LoD, and an occupancy state of a neighboring region of an adjacent frame (frame immediately before) of an LoD one level lower.

For example, an occupancy state $\{V\_(k, i)\}^t$ of a neighboring region (9 x 9 x 9) (also referred to as a neighboring voxel) of a processing target node $n\_i$ in $Octree\_(t, k)$ can be expressed by the following Expression (1). Furthermore, an occupancy state $\{V\_(k, i)\}^{(t-1)}$ of a neighboring region (9 x 9 x 9) of a processing target node $n\_i$ in $Octree\_(t-1, k)$ can be expressed by the following Expression (2). Furthermore, an occupancy state $\{V\_(k, i)\}^{(t+1)}$ of a neighboring region (9 x 9 x 9) of a processing target node $n\_i$ in $Octree\_(t+1, k)$ can be expressed by the following Expression (3). Furthermore, an occupancy state $\{V\_(k+1, i)\}^{(t-1)}$ of a neighboring region (10 x 10 x 10) of a processing target node $n\_i$ in $Octree\_(t-1, k+1)$ can be expressed by the following Expression (4).

[Math. 1]

$$V_{k,i}^{t} \in \left\{0,1\right\}^{9x9x9}$$

$$\cdots (1)$$

[Math. 2]

$$V_{k,i}^{t-1} \in \left\{0,1\right\}^{9x9x9}$$

$$\cdots (2)$$

[Math. 3]

$$V_{k,i}^{t+1} \in \left\{0,1\right\}^{9x9x9}$$

$$\cdots (3)$$

[Math. 4]

$$V_{k+1,i}^{t-1} \in \left\{0,1\right\}^{10x10x10}$$

$$\cdots (4)$$

Note that this neighboring region may have any size. As in the example of Fig. 2, the neighboring region of the processing target LoD may be a region including $9 \times 9 \times 9$ voxels, and the neighboring region in an LoD one level lower may be a region including $10 \times 10 \times 10$ voxels. Of course, the size of the neighboring region of the processing target LoD may be a size other than $9 \times 9 \times 9$, and the size of the neighboring region in an LoD one level lower may be a size other than $10 \times 10 \times 10$. For example, as in the example indicated by squares in Fig. 2, the neighboring region of the processing target LoD may be a region including $5 \times 5 \times 5$ voxels, and the neighboring region in an LoD one level lower may be a region including $6 \times 6 \times 6$ voxels.

By inputting this neighboring voxel V to a predetermined 3D convolution neural network (3DCNN), a context vector f is obtained. The neural network is a composite function of a plurality of linear transformations and nonlinear transformations. The linear transformation and nonlinear transformation are alternately performed on an input vector x, to derive an output vector y. In the linear transformation, addition of a matrix product and a bias vector to a vector is performed. In the nonlinear transformation, a nonlinear function is applied for each element of a vector. Weight matrices and bias vectors of all the linear transformations are parameters that can be learned. By stacking such a linear transformation and a nonlinear transformation in multiple layers and optimizing the parameters, it is possible to approximate a complicated transformation (function) to x -> y. Note that this neural network is also referred to as a fully connected network or a multilayer perceptron. The 3DCNN is a fully connected neural network in which a linear layer is a 3D convolution layer (or a 3D deconvolution layer), and includes a 3D convolution layer and a pooling layer (downsampling operation, for example, average pooling for calculating an average value, or the like). The 3D convolution layer performs 3D convolution operation. The 3D convolution operation is obtained by extending an input/output and a filter of two-dimensional convolution operation (2D convolution operation) to three dimensions (3D), and is operation of convoluting a filter having a predetermined size (three dimensions) for each piece of data in a three-dimensional region. A filter coefficient corresponds to a learnable weight.

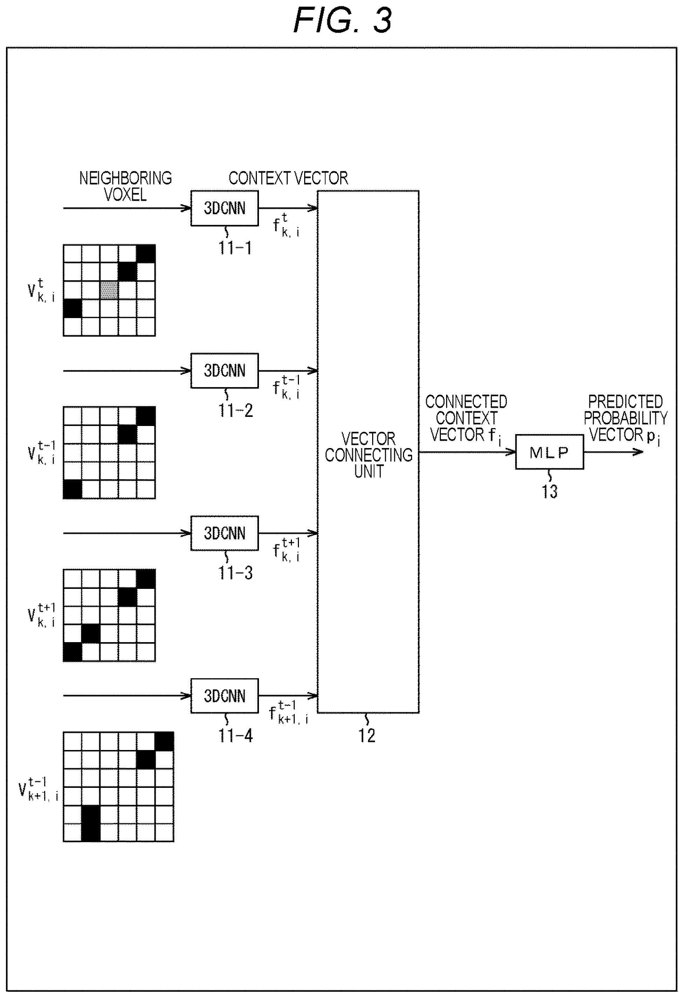

For example, as illustrated in Fig. 3, by inputting the above-described four neighboring voxels $\{V\_(k, i)\}^t$, $\{V\_(k, i)\}^{(t - 1)}$, $\{V\_(k, i)\}^{(t + 1)}$, and $\{V\_(k + 1, i)\}^{(t - 1)}$ into mutually independent 3DCNNs (3DCNN 11-1 to 3DCNN 11-4), context vectors f corresponding individually thereto are obtained. For example, assuming that a context vector $\{f\_(k, i)\}^t$ is obtained by inputting the neighboring voxel $\{V\_(k, i)\}^t$ to the 3DCNN 11-1 ($\{(3DCNN\_0)^0\}()$), this operation can be expressed as the following Expression (5). Furthermore, assuming that a context vector $\{f\_(k, i)\}^{(t - 1)}$ is obtained by inputting the neighboring voxel $\{V\_(k, i)\}^{(t - 1)}$ to the 3DCNN 11-2 ($\{(3DCNN\_0)^{-1}\}()$), this operation can be expressed as the following Expression (6). Furthermore, assuming that a context vector $\{f\_(k, i)\}^{(t + 1)}$ is obtained by inputting the neighboring voxel {V_(k, i)}^(t + 1) to the 3DCNN 11-3 ({(3DCNN_0)^+1}()), this operation can be expressed as the following Expression (7). Furthermore, assuming that a context vector {f_(k + 1, i)}^(t - 1) is obtained by inputting the neighboring voxel {V_(k + 1, i)}^(t - 1) to the 3DCNN 11-4 ({(3DCNN_+1)^-1}()), this operation can be expressed as the following Expression (8).

[Math. 5]

$$f_{k,i}^{t} = 3DCNN_{0}^{0}\left(V_{k,i}^{t}\right)$$

$$\cdots (5)$$

[Math. 6]

$$f_{k,i}^{t-1} = 3DCNN_{0}^{-1}\left(V_{k,i}^{t-1}\right)$$

$$\cdots (6)$$

[Math. 7]

$$f_{k,i}^{t+1} = 3DCNN_{0}^{+1}\left(V_{k,i}^{t+1}\right)$$

$$\cdots (7)$$

[Math. 8]

$$f_{k+1,i}^{t-1} = 3DCNN_{+1}^{-1}\left(V_{k+1,i}^{t-1}\right)$$

$$\cdots (8)$$

Next, the obtained four context vectors are connected in a dimensional direction by a vector connecting unit 12, and a connected context vector f_i is obtained. The connected context vector f_i can be expressed as the following Expression (9).

[Math. 9]

$$f_{i} = \left[ f_{k,i}^{t}{}^{T}, f_{k,i}^{t-1}{}^{T}, f_{k,i}^{t+1}{}^{T}, f_{k+1,i}^{t-1}{}^{T} \right]^{T}$$

$$\cdots (9)$$

Next, this connected context vector f_i is input to a Multilayer perceptron (MLP) 13. The MLP 13 is a multilayer perceptron, and derives a 256 dimensional predicted probability vector p_i on the basis of the input connected context vector f_i. The predicted probability vector p_i can be expressed as the following Expression (10). The input dimension of the MLP 13 is equal to the number of dimensions of the connected context vector, and the output dimension is 256. That is, the predicted probability vector p_i is derived as in the following Expression (11). Note that an activation function of a final layer of the MLP 13 is a softmax function in order to perform normalization such that each element of the predicted probability vector p_i is non-negative and the sum is 1. The softmax function (also referred to as a normalized exponential function) is a function that performs conversion such that the sum of a plurality of output values becomes 1.0 (= 100%) and outputs the result. A range of each output value is 0.0 to 1.0.

[Math. 10]

$$p_i \in \left[0,1\right]^{256}$$

$$\cdots (10)$$

[Math. 11]

$$p_i = MLP\left(f_i\right)$$

$$\cdots (11)$$

The decoder visits and processes all the intermediate nodes in all the octrees in the same order as the encoder. However, at a start of decoding, only an occupancy state of LoD = 0 (nodes with visit orders "1", "2", and "3" in Fig. 1) is known. Occupancy states of deeper LoD = 1, 2, ... are reconstructed while being decoded.

Similarly to the case of the encoder described above, the decoder predicts a probability vector corresponding to an occupancy state of a child node of an intermediate node being visited, decodes a bitstream by using a predicted probability vector as an entropy model, to generate (restore) an occupancy state (one of 256 patterns) of the child node. The encoder and the decoder use only contexts that are known at the time of decoding for the prediction. Therefore, the contexts applied to the prediction by the encoder and the decoder are the same as each other, and as a result, the obtained predicted probability vectors are also the same as each other. That is, the occupancy states of the child nodes of the processing target node are also the same as each other. That is, lossless compression can be achieved.

The decoder adds the occupancy state of the child node obtained by entropy decoding of the bitstream using such a predicted probability vector, to the octree as the child node of the intermediate node being visited. The decoder constructs an octree sequence by repeating such a process.

As described above, in the VoxelContext-Net, a predicted probability vector is derived by inputting a vector obtained by connecting context vectors in a dimension direction into the MLP. A weight parameter of the MLP is optimized using learning data in a learning stage, and fixed before an inference stage thereafter. Since the predicted probability vector is derived on the basis of this weight parameter, it can be said that which context vector contributes to the prediction to what extent is learned so as to be optimal for the learning data at the learning stage, and stored and fixed in a form of a value of the weight parameter of the MLP. That is, it has been difficult to control the predicted probability vector so as to minimize a bit size for inference data.

Therefore, for example, when the number of parameters of the MLP is not sufficient, when the number of pieces of learning data is not sufficient, when characteristics of learning data and inference data deviate, or the like, the predicted probability vector obtained by the MLP may not have been optimal for the inference data. Therefore, as a result, coding efficiency may have been decreased.

<3. Importance coefficient vector>

<Method 1>

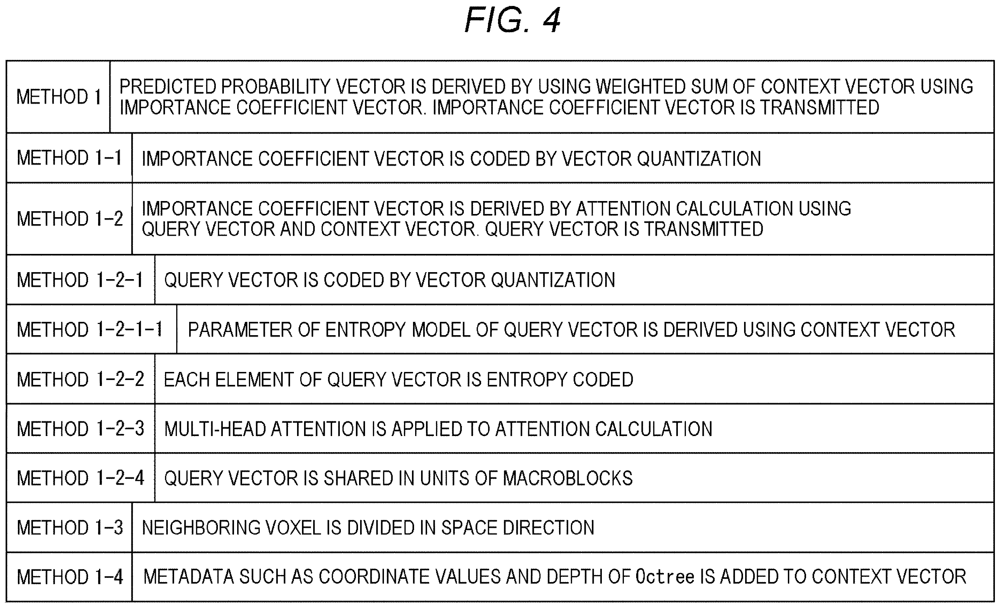

Therefore, as shown in the uppermost part of the table in Fig. 4, an importance coefficient vector for controlling a degree of contribution of a context vector to prediction is adopted, and a predicted probability vector is derived using the importance coefficient vector (Method 1).

For example, an information processing device (also referred to as a first information processing device) that codes a geometry of 3D data includes: a vector composition unit configured to generate a composite vector by combining a plurality of context vectors corresponding to a processing target node of 3D data having a tree structure, by using an importance coefficient vector for controlling a degree of contribution to prediction; a predicted probability vector deriving unit configured to derive a predicted probability vector indicating a probability value of an occupancy state that can be taken by each child node of the processing target node on the basis of the composite vector; and an occupancy state coding unit configured to code information indicating an occupancy state of the child node of the processing target node by using the predicted probability vector.

For example, in an information processing method (also referred to as a first information processing method) executed by the first information processing device, a composite vector is generated by combining a plurality of context vectors corresponding to a processing target node of 3D data having a tree structure, by using an importance coefficient vector for controlling a degree of contribution to prediction, a predicted probability vector indicating a probability value of an occupancy state that can be taken by each child node of the processing target node is derived on the basis of the composite vector, and information indicating an occupancy state of the child node of the processing target node is coded using the predicted probability vector.

For example, an information processing device (also referred to as a second information processing device) that decodes a bitstream obtained by coding a geometry of 3D data includes: a vector composition unit configured to generate a composite vector by combining a plurality of context vectors corresponding to a processing target node of the 3D data having a tree structure, by using an importance coefficient vector for controlling a degree of contribution to prediction; a predicted probability vector deriving unit configured to derive a predicted probability vector indicating a probability value of an occupancy state that can be taken by each child node of the processing target node on the basis of the composite vector; and an occupancy state decoding unit configured to decode a bitstream by using the predicted probability vector to generate information indicating an occupancy state of the child node of the processing target node.

For example, in an information processing method (also referred to as a second information processing method) executed by the second information processing device, a composite vector is generated by combining a plurality of context vectors corresponding to a processing target node of 3D data having a tree structure, by using an importance coefficient vector for controlling a degree of contribution to prediction, a predicted probability vector indicating a probability value of an occupancy state that can be taken by each child node of the processing target node is derived on the basis of the composite vector, and a bitstream is decoded using the predicted probability vector, to generate information indicating an occupancy state of the child node of the processing target node.

Note that the above-described context vector corresponds to an occupancy state of a neighboring region in a space direction of the processing target node in a processing target frame or an occupancy state of a neighboring region in a space direction of a node corresponding to the processing target node in a neighboring frame in a time direction. Furthermore, the plurality of context vectors described above may include: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame. Furthermore, the above-described prediction is prediction of an occupancy state of the child node of the processing target node by using intra-frame correlation and inter-frame correlation.

By doing in this way, a degree of contribution of each context vector to prediction can be controlled by using the importance coefficient vector. Therefore, at the time of inference, a degree of contribution of each context vector can be adapted to 3D data to be coded. A decrease in the coding efficiency, therefore, can be suppressed.

Note that the composite vector may be a weighted sum obtained by weighting each of the plurality of context vectors with each element of the importance coefficient vector. For example, in the first information processing device and the second information processing device, the vector composition unit may derive a weighted sum by weighting each of the plurality of context vectors with each element of the importance coefficient vector, and use the weighted sum as the composite vector. By doing in this way, by controlling a value of each element of the importance coefficient vector, a degree of contribution of each context vector to the prediction can be controlled.

Furthermore, the predicted probability vector may be derived by inputting a composite vector to a multilayer perceptron. For example, in the first information processing device and the second information processing device, the predicted probability vector deriving unit may derive a predicted probability vector by using a multilayer perceptron using a composite vector as an input.

Furthermore, a context vector may be derived. For example, the first information processing device and the second information processing device may further include a context vector deriving unit configured to derive a context vector on the basis of an occupancy state of a neighboring region.

In that case, a context vector corresponding to a processing target frame of a processing target LoD, a context vector corresponding to a frame immediately before the processing target frame of the processing target LoD, a context vector corresponding to a frame immediately after the processing target frame of the processing target LoD, and a context vector corresponding to a frame immediately before a processing target frame of an LoD one level lower than the processing target LoD may be derived using mutually different 3DCNNs. For example, in the first information processing device and the second information processing device, the context vector deriving unit may derive, by using mutually different neural networks, the context vector corresponding to an occupancy state of the neighboring region in a processing target layer of the processing target frame, the context vector corresponding to an occupancy state of the neighboring region in a processing target layer of a frame immediately before the processing target frame, the context vector corresponding to an occupancy state of the neighboring region in a processing target layer of a frame immediately after the processing target frame, and the context vector corresponding to an occupancy state of the neighboring region in a layer lower than the processing target layer of the frame immediately before the processing target frame.

In this case, the number of dimensions of the importance coefficient vector may be fixed to four. For example, in the first information processing device and the second information processing device, the number of dimensions of the importance coefficient vector may be four.

Furthermore, in this case, an occupancy state of a neighboring region may be set. For example, the first information processing device and the second information processing device may further include a neighboring region occupancy state setting unit configured to set: an occupancy state of the neighboring region in a processing target layer of the processing target frame; an occupancy state of the neighboring region in a processing target layer of a frame immediately before the processing target frame; an occupancy state of the neighboring region in a processing target layer of a frame immediately after the processing target frame; and an occupancy state of the neighboring region in a layer lower than the processing target layer of the frame immediately before the processing target frame. Then, the context vector deriving unit may derive each context vector on the basis of an occupancy state of each neighboring region set by the neighboring region occupancy state setting unit.

Note that, in the encoder, any method of setting the above-described importance coefficient vector may be adopted. For example, a plurality of candidates of the importance coefficient vector may be prepared, a code amount of a case where each candidate is applied may be estimated, and a candidate to minimize the code amount may be selected. Note that the decoder applies candidates set by the encoder. For example, the first information processing device may further include: a code amount estimation unit configured to estimate a code amount of a case where the predicted probability vector derived by the predicted probability vector deriving unit is applied; and a selection unit configured to select an importance coefficient vector to be applied, from among a plurality of candidates on the basis of a code amount estimated by the code amount estimation unit. Then, the vector composition unit may generate a composite vector corresponding to each of the plurality of candidates of the importance coefficient vector. Then, the predicted probability vector deriving unit may derive a predicted probability vector corresponding to each of the plurality of candidates. Then, the code amount estimation unit may estimate a code amount corresponding to each of the plurality of candidates. Then, the selection unit may select a candidate corresponding to the smallest code amount among the code amounts each corresponding to each of the plurality of candidates, as the importance coefficient vector to be applied to coding of information indicating an occupancy state of a child node of a processing target node. Then, the occupancy state coding unit may code information indicating the occupancy state of the child node of the processing target node by using the candidate selected by the selection unit. By doing in this way, the importance coefficient vector can be more easily optimized for data to be coded at the time of inference. A decrease in the coding efficiency, therefore, can be suppressed.

Note that the importance coefficient vector may be transmitted from the encoder to the decoder as shown at the top of the table in Fig. 4. For example, the importance coefficient vector may be coded and transmitted as a bitstream from the encoder to the decoder, and the bitstream may be decoded to generate (restore) the importance coefficient vector. For example, the first information processing device may further include an importance coefficient vector coding unit configured to code an importance coefficient vector. Furthermore, the second information processing device may further include an importance coefficient vector decoding unit configured to decode a bitstream to generate an importance coefficient vector. By transmitting the importance coefficient vector, the decoder can more easily utilize the importance coefficient vector used in the encoder. Furthermore, by coding the importance coefficient vector and transmitting the coded vector as a bitstream, an increase in amount of data transmission can be suppressed.

<Method 1-1>

In this case, as shown in the second row from the top of the table in Fig. 4, an importance coefficient vector may be coded by vector quantization (Method 1-1). That is, an index corresponding to the importance coefficient vector may be entropy coded.

For example, in the first information processing device, the importance coefficient vector coding unit may perform entropy coding on an index indicating the importance coefficient vector. Furthermore, in the second information processing device, the importance coefficient vector decoding unit may perform entropy decoding on a bitstream to generate (restore) an index indicating the importance coefficient vector.

<Geometry coding device>

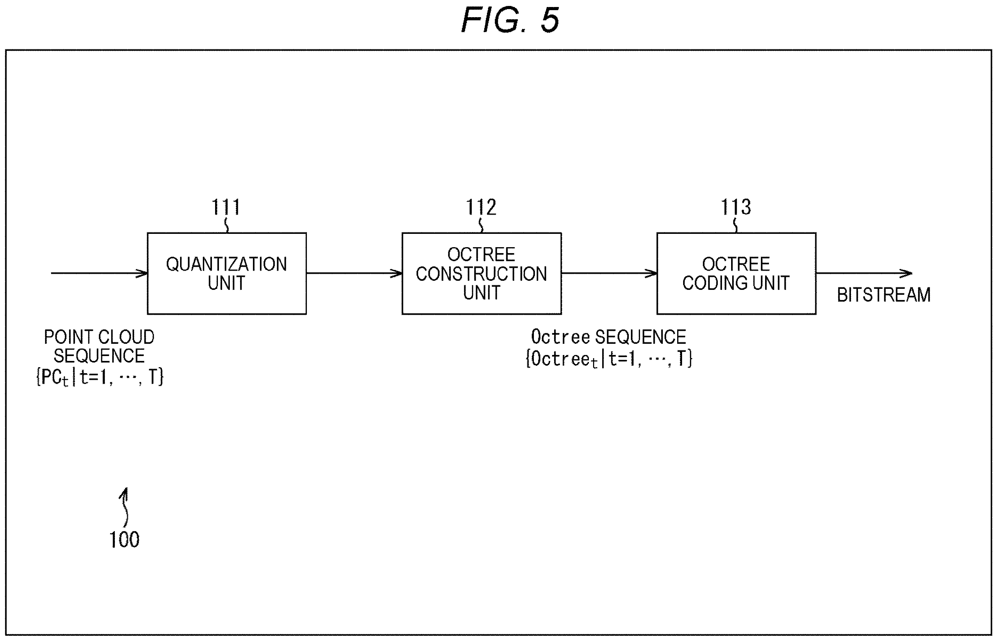

Fig. 5 is a block diagram illustrating an example of a configuration of a geometry coding device which is one mode of an information processing device to which the present technology is applied. A geometry coding device 100 illustrated in Fig. 5 is a device that codes a geometry of a point cloud (3D data). The geometry coding device 100 codes the geometry by applying Method 1 or Method 1-1 described above.

Note that, in Fig. 5, main processing units, data flows, and the like are illustrated, and those illustrated in Fig. 5 are not necessarily all. That is, in the geometry coding device 100, there may be a processing unit not illustrated as a block in Fig. 5, or there may be processing or a data flow not illustrated as an arrow or the like in Fig. 5.

As illustrated in Fig. 5, the geometry coding device 100 includes a quantization unit 111, an octree construction unit 112, and an octree coding unit 113.

The quantization unit 111 acquires and quantizes a geometry (point cloud sequence $\{Pc\_t \mid t = 1, ..., T\}$) of a point cloud at each time. That is, the quantization unit 111 converts a representation method of the input geometry into the voxel representation. The quantization unit 111 supplies the quantized geometry (voxel data) at each time to the octree construction unit 112.

The octree construction unit 112 converts a representation method of voxel data at each time into the octree representation, and constructs an octree (that is, an octree sequence $\{Octree\_t \mid t = 1, ..., T\}$) at each time. The octree construction unit 112 supplies the octree sequence to the octree coding unit 113.

The octree coding unit 113 codes the octree sequence (the octree at each time) to generate a bitstream. The octree coding unit 113 outputs the generated bitstream to the outside of the geometry coding device 100. This bitstream may be provided to a geometry decoding device that decodes a geometry bitstream, via any transmission path or any recording medium.

<Octree coding unit>

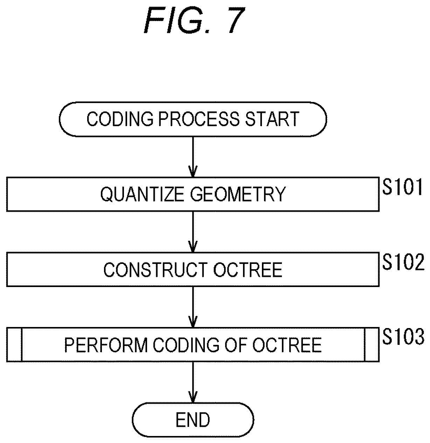

Fig. 7 is a block diagram illustrating an example of a configuration of the octree coding unit 113 in Fig. 5. The octree coding unit 113 codes an octree sequence by applying Method 1 or Method 1-1 described above.

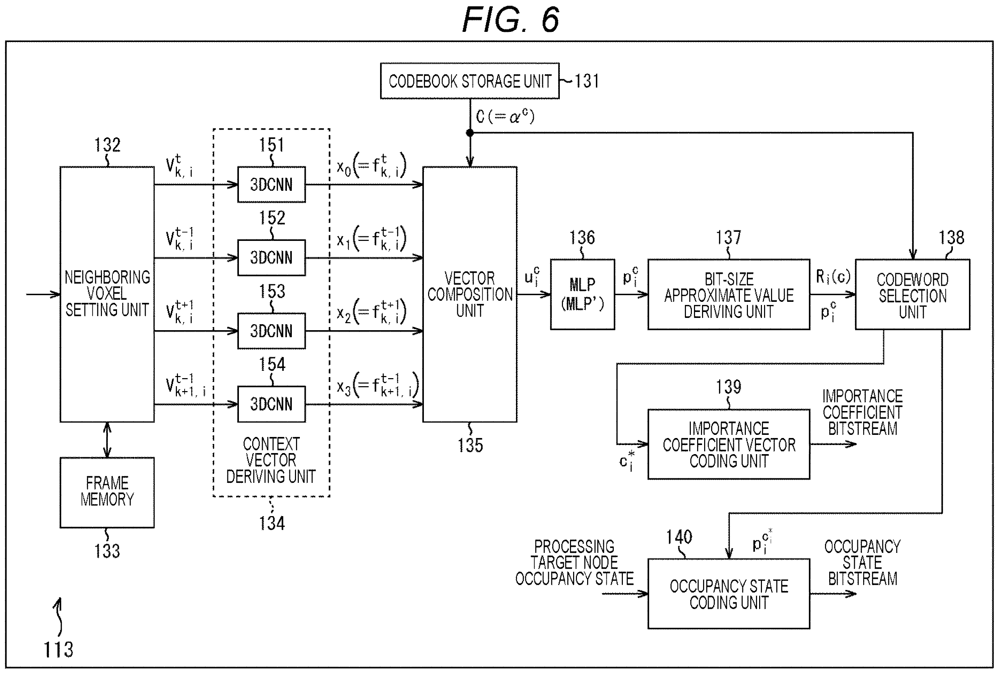

Note that, in Fig. 6, main processing units, data flows, and the like are illustrated, and those illustrated in Fig. 6 are not necessarily all. That is, in the octree coding unit 113, there may be a processing unit not illustrated as a block in Fig. 6, or there may be a flow of processing or data not illustrated as an arrow or the like in Fig. 6.

As illustrated in Fig. 6, the octree coding unit 113 includes a codebook storage unit 131, a neighboring voxel setting unit 132, a frame memory 133, a context vector deriving unit 134, a vector composition unit 135, an MLP 136, a bit-size approximate value deriving unit 137, a codeword selection unit 138, an importance coefficient vector coding unit 139, and an occupancy state coding unit 140.

The codebook storage unit 131 includes a storage medium, and stores a codebook C. The codebook storage unit 131 supplies the stored codebook C to the vector composition unit 135 and the codeword selection unit 138. The codebook C is a set of (candidates of) importance coefficient vectors, and can be represented as the following Expression (12). Note that each importance coefficient vector $\alpha^c$ ($c = 0, ..., |C|-1$) included in the codebook C is also referred to as a codeword. It is assumed that a size $|C|$ of the codebook is set as a hyperparameter of a model before learning. Furthermore, it is also assumed that all codewords in the codebook and a probability table of $|C|$ elements for entropy coding of indexes of codewords are optimized, for example, as part of parameters of a model during learning.
[Math. 12]

$$C = \left\{ \alpha^0, \dots, \alpha^{|C|-1} \right\}$$

$$\cdots (12)$$

The neighboring voxel setting unit 132 acquires an octree (octree sequence) at each time. The neighboring voxel setting unit 132 supplies the acquired octree to the frame memory 133 to be stored. Furthermore, the neighboring voxel setting unit 132 also reads, from the frame memory 133, an octree sequence (octrees of a processing target frame and a neighboring frame) necessary for setting neighboring voxels. The neighboring voxel setting unit 132 sets the neighboring voxels for the processing target frame, the neighboring frame, and the like on the basis of the read octree sequence. That is, the neighboring voxel setting unit 132 can also be referred to as a neighboring voxel setting unit or a neighboring region occupancy state setting unit.

As described above, the neighboring voxel indicates an occupancy state of a neighboring region of a processing target node. For example, the neighboring voxel setting unit 132 sets a neighboring voxel $\{V\_(k, i)\}^t$ in a processing target frame of a processing target LoD, a neighboring voxel $\{V\_(k, i)\}^{(t - 1)}$ in a frame immediately before the processing target frame of the processing target LoD, a neighboring voxel $\{V\_(k, i)\}^{(t + 1)}$ in a frame immediately after the processing target frame of the processing target LoD, and a neighboring voxel $\{V\_(k + 1, i)\}^{(t - 1)}$ in a frame immediately before a processing target frame of an LoD one level lower than the processing target LoD.

The neighboring voxel setting unit 132 supplies the set neighboring voxels to the context vector deriving unit 134. For example, the neighboring voxel setting unit 132 supplies the neighboring voxel $\{V\_(k, i)\}^t$ to a 3DCNN 151. Furthermore, the neighboring voxel setting unit 132 supplies the neighboring voxel $\{V\_(k, i)\}^{(t - 1)}$ to a 3DCNN 152. Furthermore, the neighboring voxel setting unit 132 supplies the neighboring voxel $\{V\_(k, i)\}^{(t + 1)}$ to a 3DCNN 153. Furthermore, the neighboring voxel setting unit 132 supplies the neighboring voxel $\{V\_(k + 1, i)\}^{(t - 1)}$ to a 3DCNN 154.

The frame memory 133 includes a storage medium, and stores the octree supplied from the neighboring voxel setting unit 132. Furthermore, the frame memory 133 also supplies the neighboring voxel setting unit 132 with an octree (or an octree sequence) requested by the neighboring voxel setting unit 132.

The context vector deriving unit 134 derives a context vector on the basis of the neighboring voxel (that is, an occupancy state of the neighboring region) supplied from the neighboring voxel setting unit 132, and supplies the context vector to the vector composition unit 135. For example, this context vector corresponds to an occupancy state of a neighboring region in a space direction of a processing target node in a processing target frame or an occupancy state of a neighboring region in a space direction of a node corresponding to a processing target node in a neighboring frame in a time direction.

For example, the context vector deriving unit 134 derives a context vector corresponding to each of a plurality of neighboring voxels by using mutually different neural networks. The plurality of context vectors includes: a context vector corresponding to an occupancy state of a neighboring region in a processing target layer of a processing target frame; a context vector corresponding to an occupancy state of a neighboring region in a processing target layer of a neighboring frame; and the context vector corresponding to an occupancy state of a neighboring region in a layer lower than the processing target layer of the neighboring frame. For example, the context vector deriving unit 134 includes the 3DCNNs 151 to 154. The 3DCNN 151 is $\{(3DCNN\_0)^0\}()$ corresponding to a processing target frame of a processing target LoD, generates a context vector $\{f\_(k, i)\}^t$ corresponding to the processing target frame of the processing target LoD on the basis of the input neighboring voxel $\{V\_(k, i)\}^t$, and supplies the context vector $\{f\_(k, i)\}^t$ to the vector composition unit 135. The 3DCNN 152 is $\{(3DCNN\_0)^{-1}\}()$ corresponding to a frame immediately before the processing target frame of the processing target LoD, generates a context vector $\{f\_(k, i)\}^{(t - 1)}$ corresponding to the frame immediately before the processing target frame of the processing target LoD on the basis of the input neighboring voxel $\{V\_(k, i)\}^{(t - 1)}$, and supplies the context vector $\{f\_(k, i)\}^{(t - 1)}$ to the vector composition unit 135. The 3DCNN 153 is $\{(3DCNN\_0)^{+1}\}()$ corresponding to a frame immediately after the processing target frame of the processing target LoD, generates a context vector $\{f\_(k, i)\}^{(t + 1)}$ corresponding to a frame immediately after the processing target frame of the processing target LoD on the basis of the input neighboring voxel $\{V\_(k, i)\}^{(t + 1)}$, and supplies the context vector $\{f\_(k, i)\}^{(t + 1)}$ to the vector composition unit 135. The 3DCNN 154 is $\{(3DCNN\_{+1})^{-1}\}()$ corresponding to a frame immediately before a processing target frame of an LoD one level lower than the processing target LoD, generates a context vector $\{f\_(k + 1, i)\}^{(t - 1)}$ corresponding to the frame immediately before the processing target frame of the LoD one level lower than the processing target LoD on the basis of the input neighboring voxels $\{V\_(k + 1, i)\}^{(t - 1)}$, and supplies $\{f\_(k + 1, i)\}^{(t - 1)}$ the context vector to the vector composition unit 135.

That is, the context vector deriving unit 134 may derive, by using mutually different neural networks, a context vector corresponding to an occupancy state of a neighboring region in a processing target layer of a processing target frame, a context vector corresponding to an occupancy state of a neighboring region in a processing target layer of a frame immediately before the processing target frame, a context vector corresponding to an occupancy state of a neighboring region in a processing target layer of a frame immediately after the processing target frame, and a context vector corresponding to an occupancy state of a neighboring region in a layer lower than the processing target layer of the frame immediately before the processing target frame.

Note that, in the present specification, the context vector $\{f\_(k, i)\}^t$ is also referred to as $x\_0$ for simplification of description. Similarly, the context vector $\{f\_(k, i)\}^{(t - 1)}$ is also referred to as $x\_1$. Similarly, the context vector $\{f\_(k, i)\}^{(t + 1)}$ is also referred to as $x\_2$. Similarly, the context vector $\{f\_(k + 1, i)\}^{(t - 1)}$ is also referred to as $x\_3$.

The vector composition unit 135 acquires a plurality of context vectors supplied from the context vector deriving unit 134. For example, the vector composition unit 135 acquires the context vector $\{f\_(k, i)\}^t$ supplied from the 3DCNN 151. Furthermore, the vector composition unit 135 acquires the context vector $\{f\_(k, i)\}^{(t - 1)}$ supplied from the 3DCNN 152. Furthermore, the vector composition unit 135 acquires the context vector $\{f\_(k, i)\}^{(t + 1)}$ supplied from the 3DCNN 153. Furthermore, the vector composition unit 135 acquires the context vector $\{f\_(k + 1, i)\}^{(t - 1)}$ supplied from the 3DCNN 154. Furthermore, the vector composition unit 135 reads and acquires the codebook C ((candidates of) an importance coefficient vector $\alpha$) from the codebook storage unit 131.

The vector composition unit 135 combines the plurality of acquired context vectors by using the acquired importance coefficient vector, generates a composite vector $u\_i$, and supplies the composite vector $u\_i$ to the MLP 136. That is, the vector composition unit 135 generates a composite vector by combining a plurality of context vectors corresponding to a processing target node of 3D data having a tree structure by using the importance coefficient vector for controlling a degree of contribution of the context vector to prediction of an occupancy state of a child node of the processing target node by using the intra-frame correlation and the inter-frame correlation.

For example, the vector composition unit 135 may derive a weighted sum by weighting each of the plurality of context vectors with each element of the importance coefficient vector, and use the weighted sum as the composite vector. For example, when the four context vectors ($\{f\_(k, i)\}^t$, $\{f\_(k, i)\}^{(t - 1)}$, $\{f\_(k, i)\}^{(t + 1)}$, and $\{f\_(k + 1, i)\}^{(t - 1)}$) are acquired from the context vector deriving unit 134 as illustrated in Fig. 6, the vector composition unit 135 obtains a composite vector by deriving a weighted sum of the context vectors by using an importance coefficient vector $\alpha\_i = [\alpha\_(i, 0), \alpha\_(i, 1), \alpha\_(i, 2), \alpha\_(i, 3)] [0, 1]^4$ (where, normalization is performed to obtain $\Sigma\_j [\{\alpha\_(i, j)\} = 1$ (the subscript i is added because there is a difference for each node $n\_i$)). In this manner, the number of dimensions of the importance coefficient vector may be four.

As described above, the vector composition unit 135 may generate the composite vector u_i by the following Expression (13).
[Math. 13]

$$u_i = \sum_j \alpha_{i,j} x_j$$

$$\cdots (13)$$

In this manner, how much each context vector contributes to prediction can be explicitly controlled by using a value of the importance coefficient vector $\alpha$_i. That is, it is possible to control an explicit prediction mode of how much a feature amount of which frame is emphasized. For example, when intra-screen prediction should be more emphasized, it suffices that the vector composition unit 135 sets a value of the importance coefficient corresponding to the context vector corresponding to the processing target frame to be large, and sets a value of the importance coefficient corresponding to the context vector corresponding to the adjacent frame to be small. Conversely, when inter-screen prediction should be more emphasized, it suffices that the vector composition unit 135 sets a value of the importance coefficient corresponding to the context vector corresponding to the adjacent frame to be large, and sets a value of the importance coefficient corresponding to the context vector corresponding to the processing target frame to be small.

Note that the vector composition unit 135 may generate a composite vector (u_i)^c for each of the plurality of candidates of the importance coefficient vector included in the codebook C by the above-described method, and supply the composite vector (u_i)^c to the MLP 136. For example, the vector composition unit 135 may generate the composite vector (u_i)^c for each candidate of the importance coefficient vector by the following Expression (14).
[Math. 14]

$$u_i^c = \sum_j \alpha_j^c x_j$$

$$\cdots (14)$$

The MLP 136 derives a predicted probability vector p_i indicating a probability value of an occupancy state that can be taken by each child node of a processing target node, on the basis of the composite vector u_i supplied from the vector composition unit 135. That is, the MLP 136 can also be referred to as a predicted probability vector deriving unit. Note that the MLP 136 may be a multilayer perceptron that uses the composite vector u_i supplied from the vector composition unit 135 as an input, to derive the predicted probability vector p_i. That is, the MLP 136 may derive the predicted probability vector by using a multilayer perceptron using a composite vector as an input. The MLP 136 supplies the derived predicted probability vector p_i to the bit-size approximate value deriving unit 137.

Note that the MLP 136 may derive a predicted probability vector (p_i)^c for each of the plurality of candidates of the importance coefficient vector included in the codebook C by the above-described method, and supply the predicted probability vector (p_i)^c to the bit-size approximate value deriving unit 137. For example, the MLP 136 may generate the predicted probability vector (p_i)^c for each candidate of the importance coefficient vector by the following Expression (15). Note that, in Expression (15), an MLP' is used to distinguish from the MLP 13 of Fig. 3 (clearly indicate that the neural network is different). The number of input dimensions of the MLP' is equal to the number of dimensions of the context vector, the number of output dimensions is 256, and the softmax function is used as an activation function of a final layer.
[Math. 15]

$$p_i^c = MLP'\left(u_i^c\right)$$

$$\cdots (15)$$

The bit-size approximate value deriving unit 137 acquires the predicted probability vector p_i supplied from the MLP 136, estimates a code amount (a total bit size after compression) of a case where the predicted probability vector p_i is applied, and derives an estimated value of the code amount (also referred to as a bit-size approximate value R_i). That is, the bit-size approximate value deriving unit 137 can also be referred to as a code amount estimation unit. Note that the bit-size approximate value deriving unit 137 may estimate a code amount corresponding to each of the plurality of candidates of the importance coefficient vector included in the codebook C. For example, the bit-size approximate value deriving unit 137 may derive a bit-size approximate value R_i(c) for each candidate of the importance coefficient vector by the following Expression (16).

R_i(c) = -$\log_2$ ({element value of pic corresponding to true occupancy state}) -$\log_2$ ({c-th element value of probability table for importance coefficient compression})  (16)

The bit-size approximate value deriving unit 137 supplies the bit-size approximate value R_i(c) corresponding to each candidate of the importance coefficient vector derived in this way and the predicted probability vector (p_i)^c used for the estimation, to the codeword selection unit 138.

The codeword selection unit 138 acquires the bit-size approximate value R_i(c) corresponding to each candidate of the importance coefficient vector and the predicted probability vector (p_i)^c, which are supplied from the bit-size approximate value deriving unit 137. Furthermore, the codeword selection unit 138 reads and acquires the codebook C (an importance coefficient vector $\alpha$^c) from the codebook storage unit 131. On the basis of the bit-size approximate value R_i(c), the codeword selection unit 138 selects an importance coefficient vector corresponding to a predicted probability vector to be applied to coding of the occupancy state, from among the plurality of candidates. That is, the codeword selection unit 138 can also be referred to as a selection unit that selects an importance coefficient vector to be applied, from among the plurality of candidates, on the basis of a code amount estimated by the code amount estimation unit.

For example, the codeword selection unit 138 may select a candidate to minimize the code amount. That is, the codeword selection unit 138 may select a candidate corresponding to the smallest code amount among the code amounts each corresponding to each of the plurality of candidates, as the importance coefficient vector to be applied to coding of information indicating an occupancy state of a child node of a processing target node. For example, the codeword selection unit 138 may calculate an index (c_i)^* of the candidate of the importance coefficient vector to minimize the bit-size approximate value R_i(c), by performing operation of the following Expression (17).

[Math. 16]

$$c_i^* = \arg \min_c R_i(c)$$

$$\cdots (17)$$

The codeword selection unit 138 supplies the index (c_i)^* corresponding to the selected candidate of the importance coefficient vector to the importance coefficient vector coding unit 139. Furthermore, the codeword selection unit 138 supplies a predicted probability vector (p_i)^{(c_i)^*} corresponding to the selected index (c_i)^* to the occupancy state coding unit 140.

The importance coefficient vector coding unit 139 performs entropy coding on the index (c_i)^* supplied from the codeword selection unit 138, to generate a bitstream thereof (also referred to as an importance coefficient bitstream). That is, it can also be said that the importance coefficient vector coding unit 139 codes the selected importance coefficient vector. The importance coefficient vector coding unit 139 outputs the generated importance coefficient bitstream to the outside of the octree coding unit 113 (the outside of the geometry coding device 100). This importance coefficient bitstream may be provided to the geometry decoding device that decodes a geometry bitstream, via any transmission path or any recording medium.

The occupancy state coding unit 140 acquires the predicted probability vector (p_i)^{(c_i)^*} supplied from the codeword selection unit 138. Furthermore, the occupancy state coding unit 140 acquires information (that is, an actual occupancy state) supplied from the octree construction unit 112 and indicating an occupancy state of a child node of a processing target node. The occupancy state coding unit 140 codes the information indicating the occupancy state of the child node of the processing target node by using the predicted probability vector, to generate a bitstream thereof (occupancy state bitstream). For example, the occupancy state coding unit 140 may perform entropy coding on the information indicating the occupancy state of the child node of the processing target node by using the predicted probability vector (p_i)^{(c_i)^*} corresponding to the candidate of the importance coefficient vector selected by the codeword selection unit 138 as an entropy model, to generate the occupancy state bitstream. The occupancy state coding unit 140 outputs the generated occupancy state bitstream to the outside of the octree coding unit 113 (the outside of the geometry coding device 100). This occupancy state bitstream may be provided to the geometry decoding device that decodes a geometry bitstream, via any transmission path or any recording medium.

Note that the geometry coding device 100 (the octree coding unit 113) may collectively output the importance coefficient bitstream and the occupancy state bitstream into one bitstream. That is, the importance coefficient bitstream and the occupancy state bitstream may be provided to the geometry decoding device as one bitstream.

With the above configuration, the geometry coding device 100 can control a contribution rate of each context vector to prediction by using the importance coefficient vector, and can suppress a decrease in coding efficiency. Furthermore, since the geometry coding device 100 can perform continuous prediction mode control instead of discrete prediction mode selection in a 2D moving image codec or the like, a decrease in coding efficiency can be suppressed.

<Flow of coding process>

The geometry coding device 100 codes a geometry as described above by executing a coding process. An example of a flow of the coding process will be described with reference to a flowchart in Fig. 7.

When the coding process is started, the quantization unit 111 quantizes a geometry of a point cloud in step S101, and converts the geometry into the voxel representation. The quantization unit 111 performs such a process at each time (each frame), and generates voxel data at each time (each frame).

In step S102, the octree construction unit 112 converts the voxel data into the octree representation. That is, the octree construction unit 112 constructs an octree. The octree construction unit 112 performs such a process at each time (each frame) to generate an octree sequence.

In step S103, the octree coding unit 113 performs an octree coding process, and codes the octree to generate a bitstream (an importance coefficient bitstream and an occupancy state bitstream). At that time, the octree coding unit 113 performs coding using not only an octree of a processing target frame but also an octree of neighboring frames. Furthermore, the octree coding unit 113 performs such a process at each time (each frame) to code the octree sequence.

When the process of step S113 ends, the coding process ends.

<Flow of octree coding process>

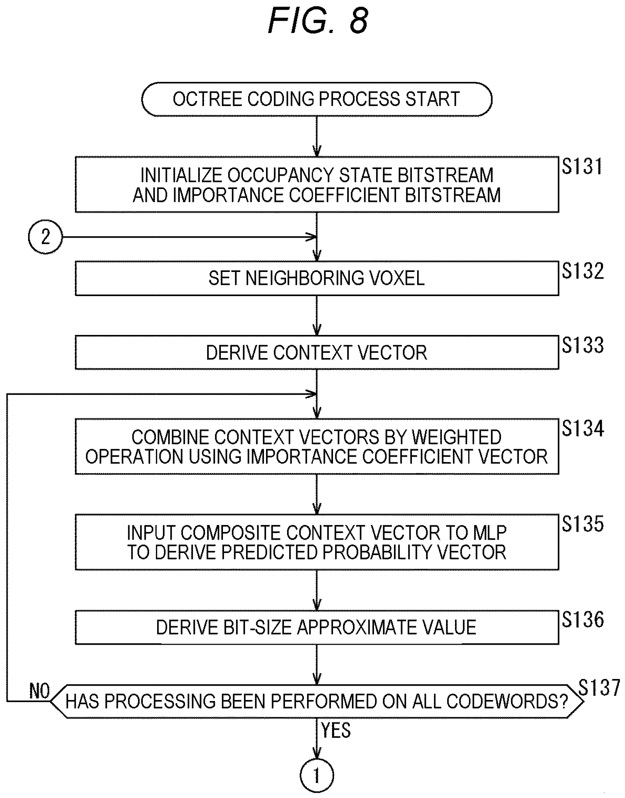

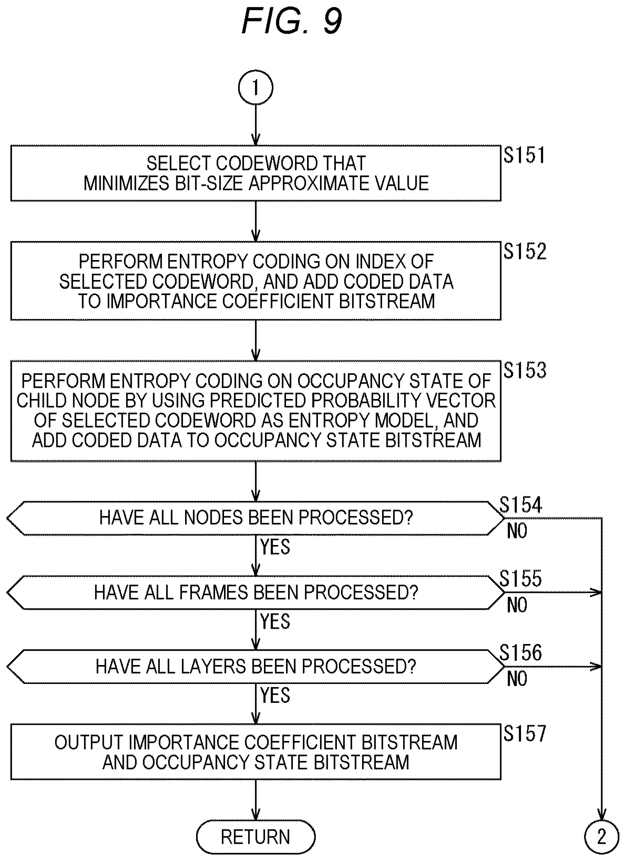

Next, an example of a flow of the octree coding process executed in step S103 in Fig. 7 will be described with reference flowcharts in Figs. 8 and 9.

When the octree coding process is started, in step S131 in Fig. 8, the importance coefficient vector coding unit 139 and the occupancy state coding unit 140 initialize the occupancy state bitstream and the importance coefficient bitstream.

In step S132, the neighboring voxel setting unit 132 sets neighboring voxels as described above. In step S133, the context vector deriving unit 134 derives a context vector corresponding to each neighboring voxel as described above.

In step S134, as described above, the vector composition unit 135 combines the context vectors by using (a candidate of the processing target of) the importance coefficient vector to generate a composite vector. For example, the vector composition unit 135 combines the context vectors by weighted operation using the importance coefficient vector.

In step S135, the MLP 136 inputs the composite vector to the multilayer perceptron (MLP') to derive a predicted probability vector. That is, the MLP 136 generates a predicted probability vector corresponding to the candidate of the processing target of the importance coefficient.

In step S136, the bit-size approximate value deriving unit 137 derives a bit-size approximate value of a case where the predicted probability vector is applied. That is, the bit-size approximate value deriving unit 137 derives a bit-size approximate value corresponding to the candidate of the processing target of the importance coefficient.

In step S137, the codeword selection unit 138 determines whether or not the processing has been performed on all codewords included in the codebook, and executes each process of steps S134 to S137 for each codeword until it is determined that the processing has been performed on all codewords. Then, when it is determined in step S137 that the processing has been performed on all the codewords, the process proceeds to Fig. 9.

In step S151 of Fig. 9, the codeword selection unit 138 selects a codeword (a candidate of the importance coefficient vector) that minimizes the bit-size approximate value derived in step S136.

In step S152, the importance coefficient vector coding unit 139 performs entropy coding on an index of the selected codeword, and adds the coded data to the importance coefficient bitstream.

In step S153, the occupancy state coding unit 140 performs entropy coding on information indicating an occupancy state of a child node of a processing target node by using the predicted probability vector corresponding to the selected codeword as an entropy model, and adds the coded data to the occupancy state bitstream.

In step S154, the occupancy state coding unit 140 determines whether or not all the nodes have been processed, and executes each process of steps S132 to S137 of Fig. 8 and each process of steps S151 to S154 of Fig. 9 for each node until it is determined that all the nodes of the processing target frame of the processing target LoD have been processed. Then, when it is determined in step S154 of Fig. 9 that the processing has been performed on all the nodes, the process proceeds to step S155.

In step S155, the occupancy state coding unit 140 determines whether or not all the frames have been processed, and executes each process of steps S132 to S137 of Fig. 8 and each process of steps S151 to S155 of Fig. 9 for each node of each frame until it is determined that all the nodes of all the frames of the processing target LoD have been processed. Then, when it is determined in step S155 of Fig. 9 that the processing has been performed on all the frames, the process proceeds to step S156.

In step S156, the occupancy state coding unit 140 determines whether or not all the layers have been processed, and executes each process of steps S132 to S137 of Fig. 8 and each process of steps S151 to S156 of Fig. 9 for each node of each frame of each LoD until it is determined that all the nodes of all the frames of all LoDs have been processed. Then, when it is determined in step S156 of Fig. 9 that the processing has been performed on all the layers, the process proceeds to step S157.

In step S157, the importance coefficient vector coding unit 139 outputs the importance coefficient bitstream. Furthermore, the occupancy state coding unit 140 outputs the occupancy state bitstream.

When the process of step S157 ends, the octree coding process ends, and the process returns to Fig. 7.

By executing each process as described above, the geometry coding device 100 can control a contribution rate of each context vector to prediction by using the importance coefficient vector, and can suppress a decrease in coding efficiency. Furthermore, since the geometry coding device 100 can perform continuous prediction mode control instead of discrete prediction mode selection in a 2D moving image codec or the like, a decrease in coding efficiency can be suppressed.

<Geometry decoding device>

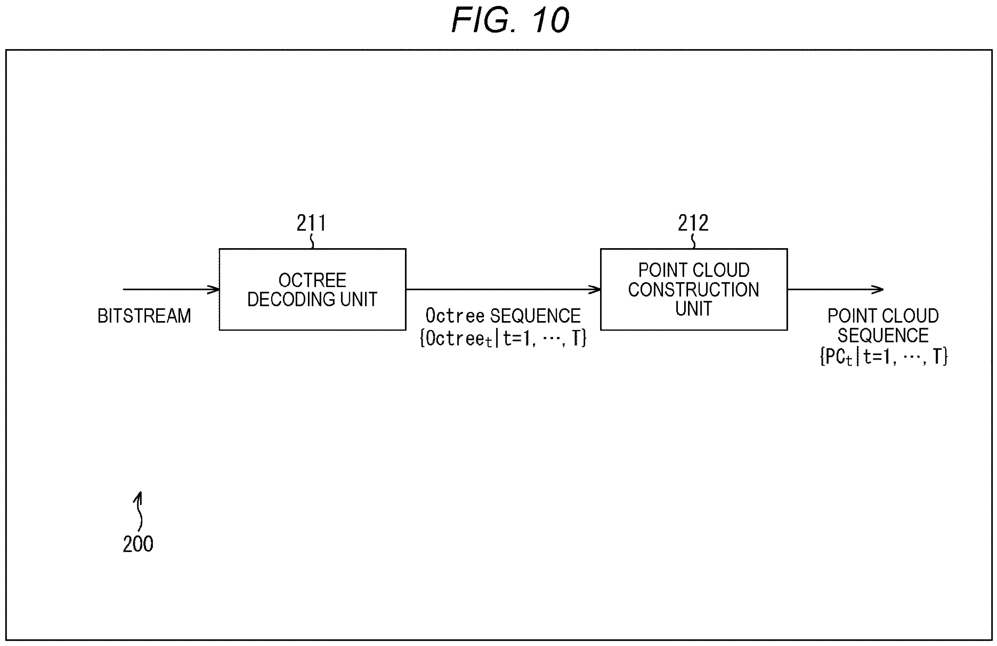

Fig. 10 is a block diagram illustrating an example of a configuration of a geometry decoding device which is one mode of an information processing device to which the present technology is applied. A geometry decoding device 200 illustrated in Fig. 10 is a device that decodes a bitstream obtained by coding a geometry of a point cloud (3D data). The geometry decoding device 200 applies Method 1 or Method 1-1 described above to decode a bitstream to generate (restore) the geometry.

Note that, in Fig. 10, main processing units, data flows, and the like are illustrated, and those illustrated in Fig. 10 are not necessarily all. That is, in the geometry decoding device 200, there may be a processing unit not illustrated as a block in Fig. 10, or there may be a flow of processing or data not illustrated as an arrow or the like in Fig. 10.

As illustrated in Fig. 10, the geometry decoding device 200 includes an octree decoding unit 211 and a point cloud construction unit 212.

The octree decoding unit 211 acquires a bitstream of a geometry of a point cloud input to the geometry decoding device 200. For example, the octree decoding unit 211 acquires an importance coefficient bitstream and an occupancy state bitstream generated by the geometry coding device 100 or the like. The octree decoding unit 211 decodes the acquired bitstreams (the importance coefficient bitstream and the occupancy state bitstream), constructs an octree, and supplies the octree to the point cloud construction unit 212. The octree decoding unit 211 performs such a process for each time (each frame), and supplies an octree sequence to the point cloud construction unit 212.

The point cloud construction unit 212 constructs a point cloud (point cloud sequence) on the basis of the octree (octree sequence). The point cloud construction unit 212 outputs the constructed point cloud (point cloud sequence) to the outside of the geometry decoding device 200, as a decoded geometry. This geometry may be used, for example, for rendering at a stage and the like thereafter.

<Octree decoding unit>

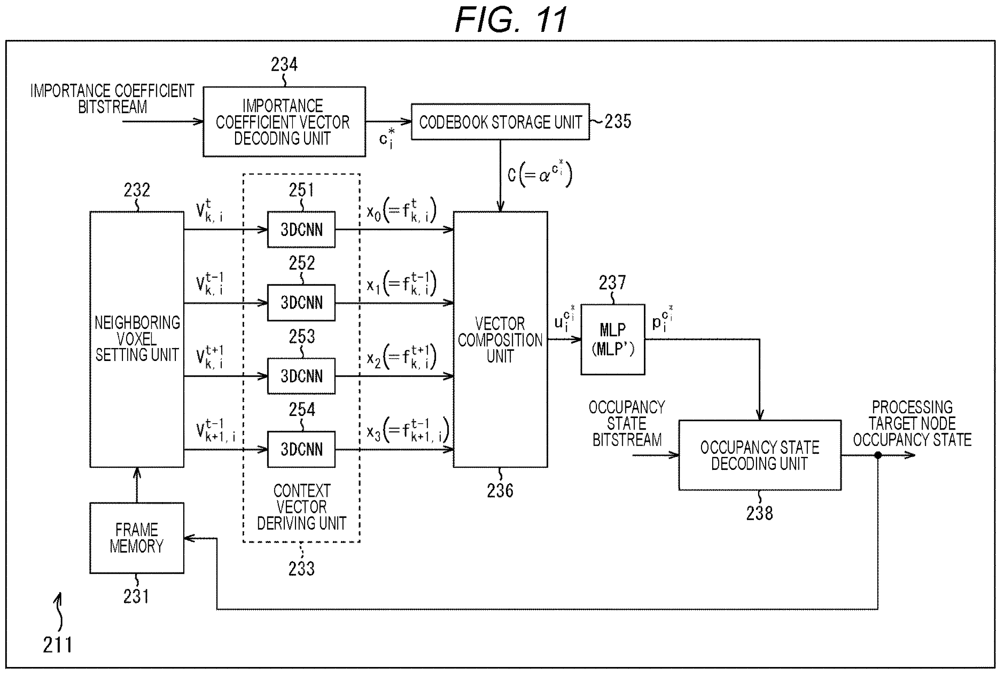

Fig. 11 is a block diagram illustrating an example of a configuration of the octree decoding unit 211 in Fig. 10. The octree decoding unit 211 applies Method 1 or Method 1-1 described above to decode a bitstream to generate (restore) an octree sequence.

Note that, in Fig. 11, main processing units, data flows, and the like are illustrated, and those illustrated in Fig. 11 are not necessarily all. That is, in the octree decoding unit 211, there may be a processing unit not illustrated as a block in Fig. 11, or there may be a flow of processing or data not illustrated as an arrow or the like in Fig. 11.

As illustrated in Fig. 11, the octree decoding unit 211 includes a frame memory 231, a neighboring voxel setting unit 232, a context vector deriving unit 233, an importance coefficient vector decoding unit 234, a codebook storage unit 235, a vector composition unit 236, an MLP 237, and an occupancy state decoding unit 238.

The frame memory 231 includes a storage medium, and constructs an octree by acquiring and storing information supplied from the occupancy state decoding unit 238 and indicating an occupancy state of a child node of a processing target node. That is, the frame memory 231 stores a generated (restored) octree. Note that, since decoding is performed for each frame, the frame memory 231 can store the octree of each frame. That is, it can be said that the frame memory 231 stores a generated (restored) octree sequence. Furthermore, the frame memory 231 also supplies the neighboring voxel setting unit 232 with an octree (or an octree sequence) requested by the neighboring voxel setting unit 232.

The neighboring voxel setting unit 232 performs processing similar to that of the neighboring voxel setting unit 132. For example, the neighboring voxel setting unit 232 also reads, from the frame memory 231, an octree sequence (octrees of a processing target frame and a neighboring frame) necessary for setting neighboring voxels. The neighboring voxel setting unit 232 sets neighboring voxels for the processing target frame, the neighboring frame, and the like on the basis of the read octree sequence. That is, the neighboring voxel setting unit 232 can also be referred to as a neighboring voxel setting unit or a neighboring region occupancy state setting unit.

For example, the neighboring voxel setting unit 232 sets a neighboring voxel $\{V\_(k, i)\}^t$ in a processing target frame of a processing target LoD, a neighboring voxel $\{V\_(k, i)\}^{(t - 1)}$ in a frame immediately before the processing target frame of the processing target LoD, a neighboring voxel $\{V\_(k, i)\}^{(t + 1)}$ in a frame immediately after the processing target frame of the processing target LoD, and a neighboring voxel $\{V\_(k + 1, i)\}^{(t - 1)}$ in a frame immediately before a processing target frame of an LoD one level lower than the processing target LoD.

The neighboring voxel setting unit 232 supplies the set neighboring voxels to the context vector deriving unit 233. For example, the neighboring voxel setting unit 232 supplies the neighboring voxel $\{V\_(k, i)\}^t$ to a 3DCNN 251. Furthermore, the neighboring voxel setting unit 232 supplies the neighboring voxel $\{V\_(k, i)\}^{(t - 1)}$ to a 3DCNN 252. Furthermore, the neighboring voxel setting unit 232 supplies the neighboring voxel $\{V\_(k, i)\}^{(t + 1)}$ to a 3DCNN 253. Furthermore, the neighboring voxel setting unit 232 supplies the neighboring voxel $\{V\_(k + 1, i)\}^{(t - 1)}$ to a 3DCNN 254.

The context vector deriving unit 233 performs processing similar to that of the context vector deriving unit 134. For example, the context vector deriving unit 233 derives a context vector on the basis of neighboring voxels (that is, an occupancy state of a neighboring region) supplied from the neighboring voxel setting unit 232, and supplies the context vector to the vector composition unit 236.

For example, the context vector deriving unit 233 derives a context vector corresponding to each of a plurality of neighboring voxels by using mutually different neural networks. For example, the context vector deriving unit 233 includes the 3DCNNs 251 to 254. The 3DCNN 251 is $\{(3DCNN\_0)^0\}()$ corresponding to a processing target frame of a processing target LoD, generates a context vector $\{f\_(k, i)\}^t$ corresponding to the processing target frame of the processing target LoD on the basis of the input neighboring voxel $\{V\_(k, i)\}^t$, and supplies the context vector to the vector composition unit 236. The 3DCNN 252 is $\{(3DCNN\_0)^{-1}\}()$ corresponding to a frame immediately before the processing target frame of the processing target LoD, generates a context vector $\{f\_(k, i)\}^{(t - 1)}$ corresponding to the frame immediately before the processing target frame of the processing target LoD on the basis of the input neighboring voxel $\{V\_(k, i)\}^{(t - 1)}$, and supplies the context vector to the vector composition unit 236. The 3DCNN 253 is $\{(3DCNN\_0)^{+1}\}()$ corresponding to a frame immediately after the processing target frame of the processing target LoD, generates a context vector $\{f\_(k, i)\}^{(t + 1)}$ corresponding to the frame immediately after the processing target frame of the processing target LoD on the basis of the input neighboring voxel $\{V\_(k, i)\}^{(t + 1)}$, and supplies the context vector to the vector composition unit 236. The 3DCNN 254 is $\{(3DCNN\_{+1})^{-1}\}()$ corresponding to a frame immediately before a processing target frame of an LoD one level lower than the processing target LoD, generates a context vector $\{f\_(k + 1, i)\}^{(t - 1)}$ corresponding to the frame immediately before the processing target frame of the LoD one level lower than the processing target LoD on the basis of the input neighboring voxels $\{V\_(k + 1, i) \}^{(t - 1)}$, and supplies the context vector to the vector composition unit 236.

That is, the context vector deriving unit 233 may derive, by using mutually different neural networks, a context vector corresponding to an occupancy state of a neighboring region in a processing target layer of a processing target frame, a context vector corresponding to an occupancy state of a neighboring region in a processing target layer of a frame immediately before the processing target frame, a context vector corresponding to an occupancy state of a neighboring region in a processing target layer of a frame immediately after the processing target frame, and a context vector corresponding to an occupancy state of a neighboring region in a layer lower than the processing target layer of the frame immediately before the processing target frame.

The importance coefficient vector decoding unit 234 acquires an importance coefficient bitstream input to the geometry decoding device 200. The importance coefficient vector decoding unit 234 decodes the importance coefficient bitstream to generate an importance coefficient vector. For example, the importance coefficient vector decoding unit 234 performs entropy decoding on the importance coefficient bitstream to generate (restore) an index $(c\_i)^*$ indicating the importance coefficient vector. The importance coefficient vector decoding unit 234 supplies the generated (restored) index $(c\_i)^*$ to the codebook storage unit 235.

Similarly to the codebook storage unit 131, the codebook storage unit 235 includes a storage medium and stores the codebook C. The codebook storage unit 235 supplies, to the vector composition unit 236, an importance coefficient vector $\alpha^{\{(c\_i)^*\}}$ (that is, an importance coefficient vector applied at the time of coding) included in the stored codebook C and corresponding to the index $(c\_i)^*$ supplied from the importance coefficient vector decoding unit 234. As a result, the vector composition unit 236 can combine vectors by applying (candidates of) the importance coefficient vector applied at the time of coding.

The vector composition unit 236 performs processing similar to that of the vector composition unit 135, to combine context vectors. For example, the vector composition unit 236 acquires a plurality of context vectors supplied from the context vector deriving unit 233. For example, the vector composition unit 236 acquires the context vector $\{f\_(k, i)\}^t$ supplied from the 3DCNN 251. Furthermore, the vector composition unit 236 acquires the context vector $\{f\_(k, i)\}^{(t - 1)}$ supplied from the 3DCNN 252. Furthermore, the vector composition unit 236 acquires the context vector $\{f\_(k, i)\}^{(t + 1)}$

supplied from the 3DCNN 253. Furthermore, the vector composition unit 236 acquires the context vector $\{f\_(k + 1, i)\}^{\wedge}(t - 1)$ supplied from the 3DCNN 254. Furthermore, the vector composition unit 236 acquires the codebook C (an importance coefficient vector $\alpha^{\wedge}\{(c\_i)^{\wedge*}\}$) supplied from the codebook storage unit 235.

The vector composition unit 236 combines the acquired plurality of context vectors by using the acquired importance coefficient vector, generates a composite vector $(u\_i)^{\wedge}\{(c\_i)^{\wedge*}\}$, and supplies the composite vector $(u\_i)^{\wedge}\{(c\_i)^{\wedge*}\}$ to the MLP 237. That is, the vector composition unit 236 generates the composite vector by combining a plurality of context vectors corresponding to a processing target node of 3D data having a tree structure by using the importance coefficient vector for controlling a degree of contribution of the context vector to prediction of an occupancy state of a child node of the processing target node by using the intra-frame correlation and the interframe correlation.

For example, the vector composition unit 236 may derive a weighted sum by weighting each of the plurality of context vectors with each element of the importance coefficient vector, and use the weighted sum as the composite vector. For example, when four context vectors $(\{f\_(k, i)\}^{\wedge}t, \{f\_(k, i)\}^{\wedge}(t - 1), \{f\_(k, i)\}^{\wedge}(t + 1),$ and $\{f\_(k + 1, i)\}^{\wedge}(t - 1))$ are acquired from the context vector deriving unit 233 as illustrated in Fig. 11, the vector composition unit 236 obtains a composite vector by deriving a weighted sum of the context vectors using an importance coefficient vector $(\alpha\_i)^{\wedge}\{(c\_i)^{\wedge*}\} = [\{\alpha\_(i, 0)\}^{\wedge}\{(c\_i)^{\wedge*}\},$ $\{\alpha\_(i, 1)\}^{\wedge}\{(c\_i)^{\wedge*}\}, \{\alpha\_(i, 2)\}^{\wedge}\{(c\_i)^{\wedge*}\}, \{\alpha\_(i, 3)\}^{\wedge}\{(c\_i)^{\wedge*}\}]$ [0, 1]$^{\wedge}$4 (where normalization is performed to obtain $\Sigma\_j [\{\alpha\_(i, j)\}^{\wedge}\{(c\_i)^{\wedge*}\}] = 1$). In this manner, the number of dimensions of the importance coefficient vector may be four. That is, the vector composition unit 236 may generate the composite vector $(u\_i)^{\wedge}\{(c\_i)^{\wedge*}\}$ by the following Expression (18).

[Math. 17]

$$u_i^{c_i^*} = \sum_j \alpha_j^{c_i^*} x_j$$

$$\cdots (18)$$

In this manner, how much each context vector contributes to prediction can be explicitly controlled by using a value of the importance coefficient vector $(\alpha\_i)^{\wedge}\{(c\_i)^{\wedge*}\}$. That is, it is possible to control an explicit prediction mode of how much a feature amount of which frame is emphasized. Furthermore, at the time of decoding, the importance coefficient vector $(\alpha\_i)^{\wedge}\{(c\_i)^{\wedge*}\}$ applied at the time of coding can be used. A decrease in the coding efficiency, therefore, can be suppressed.

The MLP 237 performs processing similar to that of the MLP 136 to derive the predicted probability vector $(p\_i)^{\wedge}\{(c\_i)^{\wedge*}\}$. That is, the MLP 237 derives the predicted probability vector $(p\_i)^{\wedge}\{(c\_i)^{\wedge*}\}$ indicating a probability value of an occupancy state that can be taken by each child node of a processing target node, on the basis of the composite vector $(u\_i)^{\wedge}\{(c\_i)^{\wedge*}\}$ supplied from the vector composition unit 236. That is, the MLP 237 can also be referred to as a predicted probability vector deriving unit. Note that the MLP 237 may be a multilayer perceptron that uses the composite vector $(u\_i)^{\wedge}\{(c\_i)^{\wedge*}\}$ supplied from the vector composition unit 236 as an input, to derive the predicted probability vector $(p\_i)^{\wedge}\{(c\_i)^{\wedge*}\}$. That is, the MLP 237 may derive the predicted probability vector by using a multilayer perceptron using a composite vector as an input. The MLP 237 supplies the derived predicted probability vector $(p\_i)^{\wedge}\{(c\_i)^{\wedge*}\}$ to the occupancy state decoding unit 238.

For example, the MLP 237 may generate the predicted probability vector $(p\_i)^{\wedge}\{(c\_i)^{\wedge*}\}$ corresponding to the importance coefficient vector $(\alpha\_i)^{\wedge}\{(c\_i)^{\wedge*}\}$ applied at the time of coding, by the following Expression (19). Note that, in Expression (18), an MLP' is used to distinguish from the MLP 13 of Fig. 3 (clearly indicate that the neural network is different). The number of input dimensions of the MLP' is equal to the number of dimensions of the context vector, the number of output dimensions is 256, and the softmax function is used as an activation function of a final layer.

[Math. 18]

$$p_i^{c_i^*} = MLP'\left(u_i^{c_i^*}\right)$$

$$\cdots (19)$$

The occupancy state decoding unit 238 decodes a bitstream by using the predicted probability vector to generate information indicating an occupancy state of a child node of the processing target node. For example, the occupancy state decoding unit 238 acquires the predicted probability vector $(p\_i)^{\wedge}\{(c\_i)^{\wedge*}\}$ supplied from the MLP 237. Furthermore, the occupancy state decoding unit 238 acquires an occupancy state bitstream input to the geometry decoding device 200. The occupancy state decoding unit 238 performs entropy decoding on the occupancy state bitstream by using the predicted probability vector $(p\_i)^{\wedge}\{(c\_i)^{\wedge*}\}$ as an entropy model, to generate (restore) the information indicating an occupancy state of the child node of the processing target node. The occupancy state decoding unit 238 supplies the generated (restored) information indicating the occupancy state of the child node of the processing target node to the frame memory 231 to be stored. Furthermore, the occupancy state decoding unit 238 supplies the generated (restored) information indicating the occupancy state of the child node of the processing target node to the point cloud construction unit 212 (Fig. 10) as a part of a generated (restored) octree. Note that the occupancy state decoding unit 238 may output (supply to the point cloud construction unit 212 or the frame memory 231) the octree (or the octree sequence) after the octree is completed.

With the above configuration, the geometry decoding device 200 can control a contribution rate of each context vector to prediction by using the importance coefficient vector, and can suppress a decrease in coding efficiency. Furthermore, since the geometry decoding device 200 can perform continuous prediction mode control instead of discrete prediction mode selection in a 2D moving image codec or the like, a decrease in coding efficiency can be suppressed.

<Flow of decoding processing>

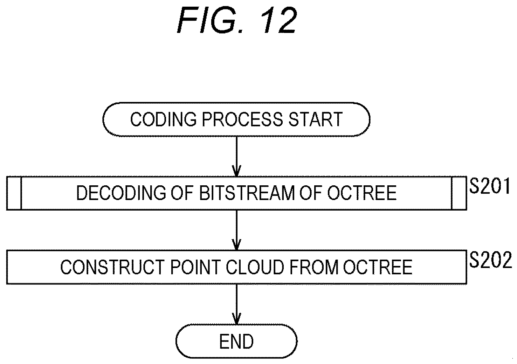

The geometry decoding device 200 decodes a bitstream of a geometry as described above by executing a decoding process. An example of a flow of this decoding process will be described with reference to a flowchart of Fig. 12.

When the decoding process is started, the octree decoding unit 211 performs the octree decoding process in step S201 to decode a bitstream of an octree. The octree decoding unit 211 performs such a process at each time (each frame) to generate an octree (that is, an octree sequence) at each time (each frame).

In step S202, the point cloud construction unit 212 constructs a point cloud by using the octree obtained by decoding the bitstream. The point cloud construction unit 212 performs such a process at each time (each frame) to generate a point cloud (that is, a point cloud sequence) at each time (each frame).

When the processing in step S202 ends, the decoding process ends.

<Flow of octree decoding process>

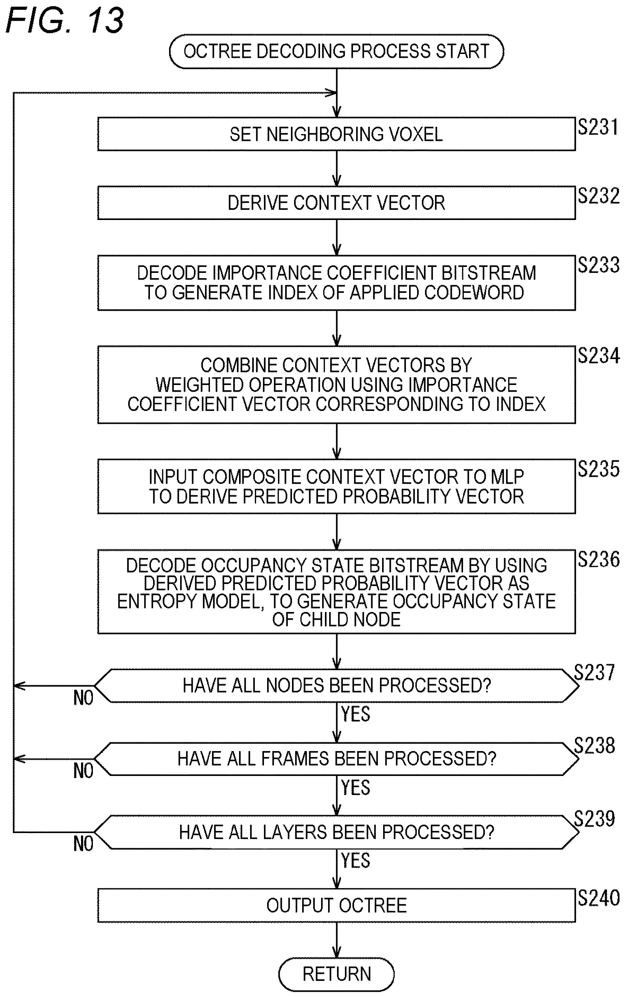

Next, an example of a flow of an octree decoding process executed in step S201 of Fig. 12 will be described with reference to a flowchart of Fig. 13.

When the octree decoding process is started, in step S231, the neighboring voxel setting unit 232 sets neighboring voxels as described above. In step S232, the context vector deriving unit 233 derives a context vector corresponding to each neighboring voxel as described above.

In step S233, the importance coefficient vector decoding unit 234 decodes an importance coefficient bitstream to generate an index $(c\_i)^{\wedge *}$ of a codeword applied at the time of coding.

In step S234, the vector composition unit 236 performs the process as described above, and combines context vectors by using the importance coefficient vector $(\alpha\_i)^{\wedge \{(c\_i)^{\wedge *}\}}$ corresponding to the index $(c\_i)^{\wedge *}$, to generate the composite vector $(u\_i)^{\wedge \{(c\_i)^{\wedge *}\}}$. For example, the vector composition unit 236 combines the context vectors by weighted operation using the importance coefficient vector $(\alpha\_i)^{\wedge \{(c\_i)^{\wedge *}\}}$.

In step S235, the MLP 237 inputs the composite vector $(u\_i)^{\wedge \{(c\_i)^{\wedge *}\}}$ to a multilayer perceptron (MLP'), to derive the predicted probability vector $(p\_i)^{\wedge \{(c\_i)^{\wedge *}\}}$.

In step S236, the occupancy state decoding unit 238 decodes an occupancy state bitstream by using the predicted probability vector $(p\_i)^{\wedge \{(c\_i)^{\wedge *}\}}$ as an entropy model, to generate (restore) information indicating an occupancy state of a child node of a processing target node.

In step S237, the occupancy state decoding unit 238 determines whether or not all the nodes have been processed, and executes each process of steps S231 to S237 for each node until it is determined that all the nodes of the processing target frame of the processing target LoD have been processed. Then, when it is determined in step S237 that the processing has been performed on all the nodes, the process proceeds to step S238.

In step S238, the occupancy state decoding unit 238 determines whether or not all the frames have been processed, and executes each process of steps S231 to S238 for each node of each frame until it is determined that all the nodes of all the frames of the processing target LoD have been processed. Then, when it is determined in step S238 that the processing has been performed on all the frames, the process proceeds to step S239.

In step S239, the occupancy state decoding unit 238 determines whether or not all the layers have been processed, and executes each process of steps S231 to S239 for each node of each frame of each LoD until it is determined that all the nodes of all the frames of all the LoDs have been processed. Then, when it is determined in step S239 that the processing has been performed on all the layers, the process proceeds to step S240.

In step S240, the occupancy state decoding unit 238 outputs an octree. When the process of step S240 ends, the octree decoding process ends, and the process returns to Fig. 12.

By executing each process as described above, the geometry decoding device 200 can control a contribution rate of each context vector to prediction by using the importance coefficient vector, and can suppress a decrease in coding efficiency. Furthermore, since the geometry decoding device 200 can perform continuous prediction mode control instead of discrete prediction mode selection in a 2D moving image codec or the like, a decrease in coding efficiency can be suppressed.

<4. Query vector>

<Method 1-2>

When Method 1 is applied, as shown in the third row from the top of the table in Fig. 4, an importance coefficient vector may be derived by attention calculation using a query vector and a context vector (Method 1-2). For example, in the first information processing device and the second information processing device, the vector composition unit may generate a composite vector by performing scaled dot-product attention calculation using a query vector having the number of dimensions same as the number of dimensions of as a context vector.

A query vector $q\_i$ (the number of dimensions is equal to the number of dimensions of the context vector) may be introduced, and an importance coefficient vector $\alpha\_i$ may be derived by the scaled dot-product attention calculation between the query vector $q\_i$ and each context vector, as shown in the following Expression (20). However, in Expression (20), $F\_i$ is a matrix having all context vectors (for example, $\{f\_{(k, i)}\}^t$) in a row. Therefore, the number of rows is equal to the number of context vectors, and the number of columns is equal to the number of dimensions of the context vector. Furthermore, $d\_k$ is the number of dimensions of the context vector (= the number of dimensions of the query vector). Since an output of the softmax function is matrix of 1 x {the number of context vectors}, that is, a row vector, an output is transposed to be output as a column vector.

[Math. 19]

$$\alpha_i = soft\max\left(\frac{q_i^T F_i^T}{\sqrt{d_k}}\right)^T$$

$$\cdots (20)$$

By applying such a query vector, the number of context vectors can be made variable while the number of dimensions of the query vector is fixed. That is, the number of reference frames can be changed without changing the number of dimensions of the query vector. For example, it is possible to achieve a change in the number of reference frames at some midpoint in the sequence, such as applying only the t - 1 frame in order to suppress calculation cost in one frame, and applying the t - 2, t - 1, t, t + 1, and t + 2 frames in other frames with priority given to a compression performance. Since such a change can be made without changing the number of dimensions of the query vector, the change can be more easily achieved.

Note that the context vector may be derived by a neural network (a 3DCNN common in LoDs) for each layer. For example, the first information processing device and the second information processing device may further include a context vector deriving unit configured to derive the context vector by a neural network for each layer. That is, the 3D-CNN may be completely common in a time direction. That is, two 3DCNNs of (3DCNN_0)^* and (3DCNN_+1)^* may be used.

Expressions (20) and (13) can be expressed as the following Expressions (21) to (23) by putting them together. Q is a matrix of 1 x $d\_k$. Furthermore, the matrix K in Expression (22) does not indicate a depth of an octree.

[Math. 20]

$$Q = q_i^T$$

$$\cdots (21)$$

[Math. 21]

$$K = V = F_i$$

$$\cdots (22)$$

[Math. 22]

$$u_i = Attention\left(Q, K, V\right)^T$$

$$\cdots (23)$$

<Method 1-2-1>

Note that, in this case, for example, a query vector may be transmitted instead of the importance coefficient vector. For example, as shown in the fourth row from the top in Fig. 4, a query vector may be coded by vector quantization (Method 1-2-1). For example, the first information processing device may further include a query vector coding unit configured to code a query vector. In that case, the query vector coding unit may perform entropy coding on an index indicating the query vector. Furthermore, the second information processing device may further include a query vector decoding unit configured to decode a bitstream to generate a query vector. In that case, the query vector decoding unit may perform entropy decoding on the bitstream to generate an index indicating the query vector.

<Octree coding unit>

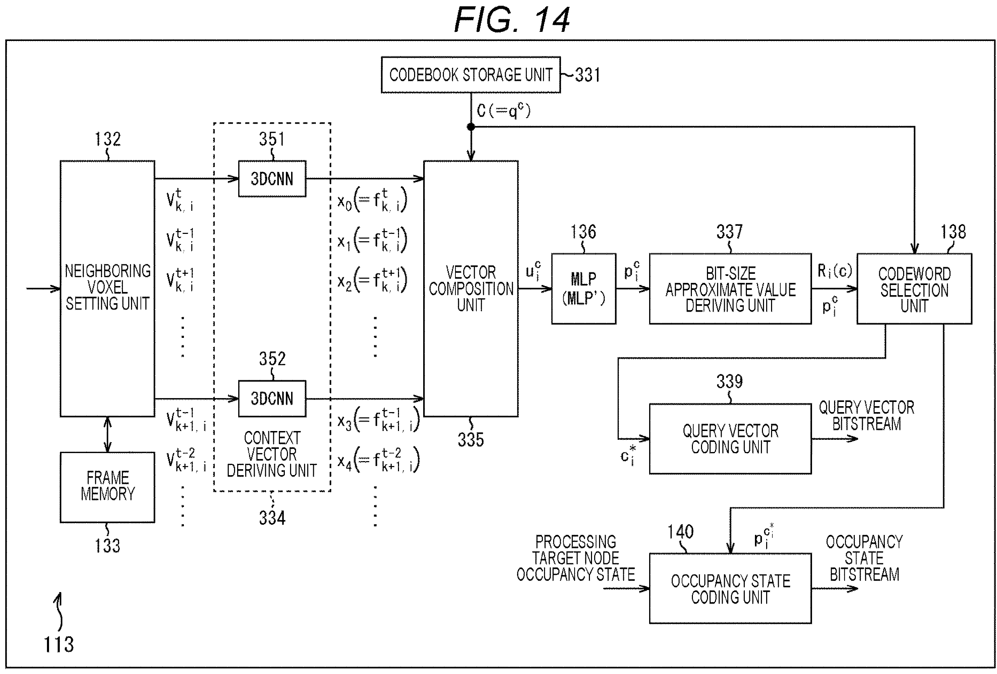

Fig. 14 illustrates a main configuration example of the octree coding unit 113 in this case. In the case of the example of this figure, the octree coding unit 113 includes a codebook storage unit 331 instead of the codebook storage unit 131 of Fig. 6. Furthermore, the octree coding unit 113 includes a context vector deriving unit 334 instead of the context vector deriving unit 134. Furthermore, the octree coding unit 113 includes a vector composition unit 335 instead of the vector composition unit 135. Furthermore, the octree coding unit 113 includes a bit-size approximate value deriving unit 337 instead of the bit-size approximate value deriving unit 137. Furthermore, the octree coding unit 113 includes a query vector coding unit 339 instead of the importance coefficient vector coding unit 139.

Similarly to the case of the codebook storage unit 131, the codebook storage unit 331 includes a storage medium and stores the codebook C. The codebook storage unit 331 supplies the stored codebook C to the vector composition unit 335 and the codeword selection unit 138. However, the codebook C in this case is a set of (candidates of) query vectors $q^c$. That is, the codebook storage unit 331 stores and provides the codebook $C = \{q^0, ..., g^{(|C|-1)}\}$ of the query vectors.

The context vector deriving unit 334 derives a context vector corresponding to each of a plurality of neighboring voxels by using a neural network for each layer, and supplies the context vector to the vector composition unit 335. For example, the context vector deriving unit 334 may include a 3DCNN 351 and a 3DCNN 352 which are neural networks for individual layers.

The 3DCNN 351 is $\{(3DCNN\_0)^{\wedge *}\}()$ corresponding to a processing target LoD. The 3DCNN 351 receives an input of a neighboring voxel (for example, $\{V\_(k, i)\}^t$, $\{V\_(k, i)\}^{\wedge}(t - 1)$, $\{V\_(k, i)\}^{\wedge}(t + 1)$, or the like) of any frame of the processing target LoD, generates a context vector corresponding the neighboring voxel, and supplies the context vector to the vector composition unit 135. For example, the 3DCNN 351 generates a context vector $\{f\_(k, i)\}^t$ corresponding to a processing target frame of the processing target LoD on the basis of the input neighboring voxel $\{V\_(k, i)\}^t$, and supplies the context vector to the vector composition unit 135. Furthermore, the 3DCNN 351 generates a context vector $\{f\_(k, i)\}^{\wedge}(t - 1)$ corresponding to a frame immediately before the processing target frame of the processing target LoD on the basis of the input neighboring voxel $\{V\_(k, i)\}^{\wedge}(t - 1)$, and supplies the context vector to the vector composition unit 135. Furthermore, the 3DCNN 351 generates a context vector $\{f\_(k, i)\}^{\wedge}(t + 1)$ corresponding to a frame immediately after the processing target frame of the processing target LoD on the basis of the input neighboring voxel $\{V\_(k, i)\}^{\wedge}(t + 1)$, and supplies the context vector to the vector composition unit 135.

The 3DCNN 352 is $\{(3DCNN\_+1)^{\wedge *}\}()$ corresponding to an LoD one level lower than the processing target LoD. The 3DCNN 352 receives an input of a neighboring voxel (for example, $\{V\_(k + 1, i)\}^{\wedge}(t - 1)$, $\{V\_(k + 1, i)\}^{\wedge}(t - 2)$, or the like) of any frame of the LoD one level lower than the processing target LoD, generates a context vector corresponding the neighboring voxel, and supplies the context vector to the vector composition unit 135. For example, the 3DCNN 352 generates a context vector $\{f\_(k + 1, i)\}^{\wedge}(t - 1)$ corresponding to a frame immediately before a processing target frame of the LoD one level lower than the processing target LoD on the basis of the input neighboring voxel $\{V\_(k + 1, i)\}^{\wedge}(t - 1)$, and supplies the context vector to the vector composition unit 135. Furthermore, the 3DCNN 352 generates a context vector $\{f\_(k + 1, i)\}^{\wedge}(t - 2)$ corresponding to a frame two frames before the processing target frame of the LoD one level lower than the processing target LoD on the basis of the input neighboring voxel $\{V\_(k + 1, i)\}^{\wedge}(t - 2)$, and supplies the context vector to the vector composition unit 135.

That is, since these 3DCNNs are applied in common in the time direction, the octree coding unit 113 can make the number of reference frames variable.

The vector composition unit 335 acquires a plurality of context vectors supplied from the context vector deriving unit 334. For example, the vector composition unit 335 acquires a context vector (for example, $\{f\_(k, i)\}^t$, $\{f\_(k, i)\}^{(t - 1)}$, $\{f\_(k, i)\}^{(t + 1)}$, or the like) supplied from the 3DCNN 351 and corresponding to the processing target LoD. Furthermore, the vector composition unit 335 acquires a context vector (for example, $\{f\_(k + 1, i)\}^{(t - 1)}$, $\{f\_(k + 1, i)\}^{(t - 2)}$, or the like) supplied from the 3DCNN 352 and corresponding to the LoD one level lower than the processing target LoD. Furthermore, the vector composition unit 335 reads and acquires the codebook C (query vector $(q\_i)^c$) from the codebook storage unit 331.

The vector composition unit 335 performs the scaled dot-product attention calculation described above by using the acquired query vector $(q\_i)^c$ (a query vector having the number of dimensions same as the number of dimensions of as the context vector) to combine a plurality of acquired context vectors to generate a composite vector. For example, the vector composition unit 335 derives a composite vector $(u\_i)^c$ as in the following Expression (24). Note that Q and K satisfy the following Expressions (25) and (26). The vector composition unit 335 supplies the generated composite vector to the MLP 136.

[Math. 23]

$$u_i^c = Attention\left(Q, K, V\right)^T$$

$$\cdots (24)$$

[Math. 24]

$$Q = q_i^{c^T}$$

$$\cdots (25)$$

[Math. 25]

$$K = V = F_i$$

$$\cdots (26)$$

The bit-size approximate value deriving unit 337 acquires a predicted probability vector p_i supplied from the MLP 136, and estimates a code amount (a total bit size after compression) (derives a bit-size approximate value R_i(c)) of a case where the predicted probability vector p_i is applied. That **is,** the bit-size approximate value deriving unit 337 can also be referred to as a code amount estimation unit. Note that the bit-size approximate value deriving unit 337 may estimate a code amount corresponding to each of a plurality of candidates of the query vector included in the codebook **C.** For example, the bit-size approximate value deriving unit 337 may derive the bit-size approximate value R_i(c) by the following Expression (27).

R_i(c) = -log$_2$ ({value of element of $(p\_i)^c$ corresponding to true occupancy state}) -log$_2$ ({c-th element of probability table for query vector compression})    (27)

The bit-size approximate value deriving unit 337 supplies, to the codeword selection unit 138, the bit-size approximate value R_i(c) corresponding to each candidate of the importance coefficient vector derived in this way and the predicted probability vector $(p\_i)^c$ used for the estimation.

The query vector coding unit 339 codes an index $(c\_i)^*$ of the query vector supplied from the codeword selection unit 138, to generate a bitstream thereof (also referred to as a query vector bitstream). That is, it can also be said that the query vector coding unit 339 codes a query vector selected by the codeword selection unit 138. The query vector coding unit 339 outputs the generated query vector bitstream to the outside of the octree coding unit 113 (the outside of the geometry coding device 100). This query vector bitstream may be provided to a geometry decoding device that decodes a geometry bitstream, via any transmission path or any recording medium.

Other processing units perform processing similar to those in the case of Fig. 6. With such a configuration, the geometry coding device 100 can easily make the number of reference frames variable.

<Flow of octree coding process>

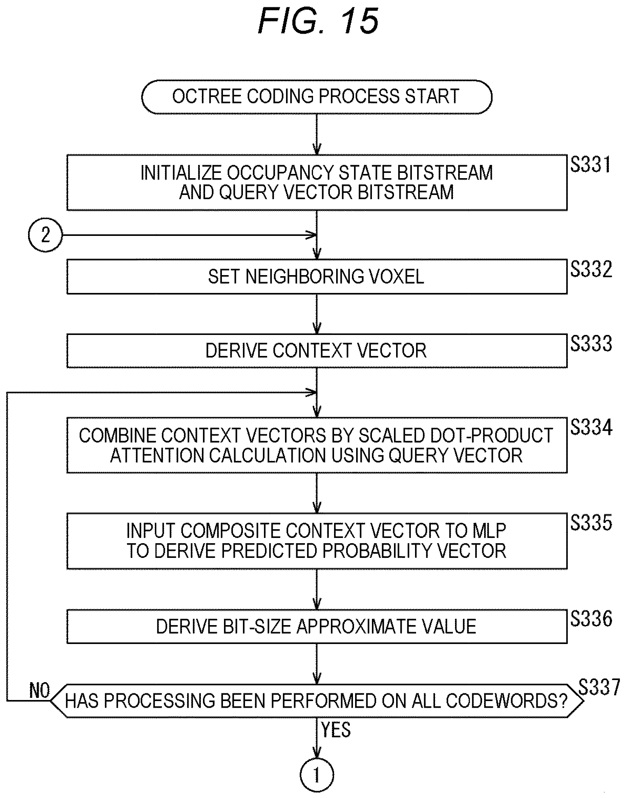

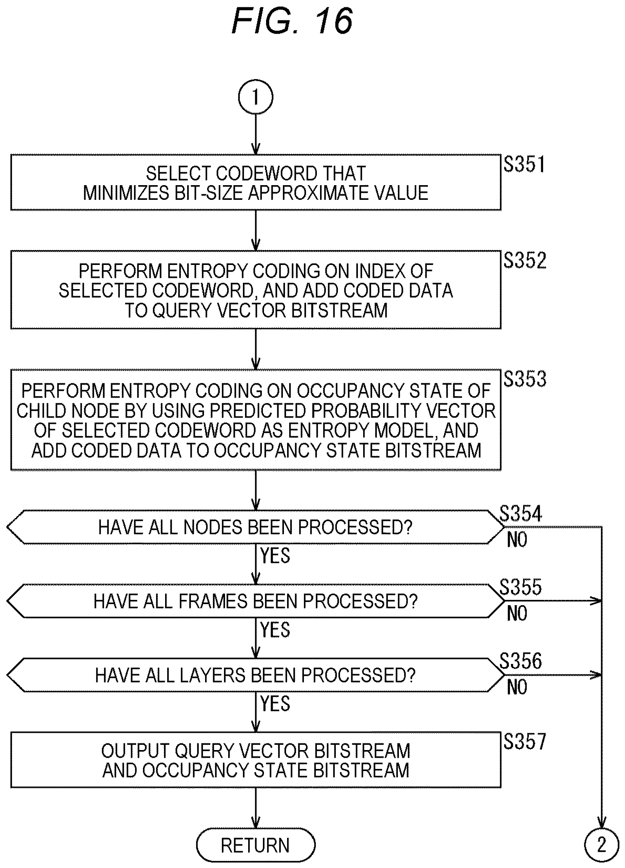

An example of a flow of the octree coding process in this case will be described with reference to the flowcharts of Figs. 15 and 16. In this case, when the octree coding process is started, the query vector coding unit 339 and the occupancy state coding unit 140 initialize an occupancy state bitstream and a query vector bitstream in step S331 of Fig. 15.

In step S332, the neighboring voxel setting unit 132 sets neighboring voxels similarly to the case of step S132 (Fig. 8). In step S333, the context vector deriving unit 334 derives a context vector corresponding to each neighboring voxel as described above.

In step S334, as described above, the vector composition unit 335 combines the context vectors by the scaled dot-product attention calculation using a query vector, to generate a composite vector.

In step S335, the MLP 136 inputs the composite vector to the multilayer perceptron (MLP') to derive a predicted probability vector. That is, the MLP 136 generates a predicted probability vector corresponding to a processing target candidate of the query vector.

In step S336, the bit-size approximate value deriving unit 337 derives a bit-size approximate value by using the above-described Expression (27). That is, the bit-size approximate value deriving unit 337 derives a bit-size approximate value corresponding to a candidate of the processing target of the query vector.

In step S337, the codeword selection unit 138 determines whether or not the processing has been performed on all codewords included in the codebook, and executes each process of steps S334 to S337 for each codeword until it is determined that the processing has been performed on all codewords. Then, when it is determined in step S337 that the processing has been performed on all the codewords, the process proceeds to Fig. 16.

In step S351 of Fig. 16, the codeword selection unit 138 selects a codeword (a candidate of the importance coefficient vector) that minimizes the bit-size approximate value derived in step S336.

In step S352, the query vector coding unit 339 performs entropy coding on an index of the selected codeword (a codeword corresponding to the query vector), and adds the coded data to the query vector bitstream.

In step S353, the occupancy state coding unit 140 performs entropy coding on information indicating an occupancy state of a child node of a processing target node by using a predicted probability vector corresponding to the selected codeword as an entropy model, and adds the coded data to the occupancy state bitstream.

In step S354, the occupancy state coding unit 140 determines whether or not all the nodes have been processed, and executes each process of steps S332 to S337 of Fig. 15 and each process of steps S351 to S354 of Fig. 16 for each node until it is determined that all the nodes of the processing target frame of the processing target LoD have been processed. Then, when it is determined in step S354 of Fig. 16 that the processing has been performed on all the nodes, the process proceeds to step S355.

In step S355, the occupancy state coding unit 140 determines whether or not all the frames have been processed, and executes each process of steps S332 to S337 of Fig. 15 and each process of steps S351 to S355 of Fig. 16 for each node of each frame until it is determined that all the nodes of all the frames of the processing target LoD have been processed. Then, when it is determined in step S355 of Fig. 16 that the processing has been performed on all the frames, the process proceeds to step S356.

In step S356, the occupancy state coding unit 140 determines whether or not all the layers have been processed, and executes each process of steps S332 to S337 of Fig. 15 and each process of steps S351 to S356 of Fig. 16 for each node of each frame of each LoD until it is determined that all the nodes of all the frames of all LoDs have been processed. Then, when it is determined in step S356 of Fig. 16 that the processing has been performed on all the layers, the process proceeds to step S357.

In step S357, the query vector coding unit 339 outputs the query vector bitstream. Furthermore, the occupancy state coding unit 140 outputs the occupancy state bitstream.

When the process of step S357 ends, the octree coding process ends, and the process returns to Fig. 7.

By executing each process in this manner, the geometry coding device 100 can easily make the number of reference frames variable.

<Octree decoding unit>

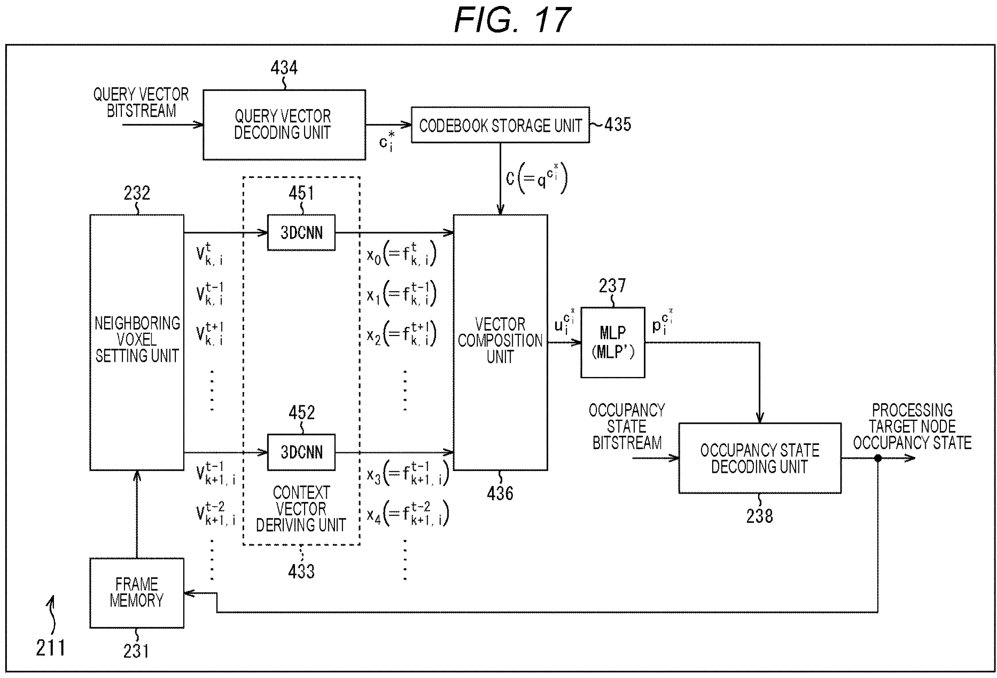

Fig. 17 illustrates a main configuration example of the octree decoding unit 211 in this case. In the case of the example in this figure, the octree decoding unit 211 includes a context vector deriving unit 433 instead of the context vector deriving unit 233 in Fig. 11. Furthermore, the octree decoding unit 211 includes a query vector decoding unit 434 instead of the importance coefficient vector decoding unit 234. Furthermore, the octree decoding unit 211 includes a codebook storage unit 435 instead of the codebook storage unit 235. Furthermore, the octree decoding unit 211 includes a vector composition unit 436 instead of the vector composition unit 236.

The context vector deriving unit 433 derives a context vector corresponding to each of a plurality of neighboring voxels by using a neural network for each layer, and supplies the context vector to the vector composition unit 436. For example, the context vector deriving unit 433 may include a 3DCNN 451 and a 3DCNN 452 which are neural networks for individual layers.

The 3DCNN 451 is $\{(3DCNN\_0)^{\wedge *}\}()$ corresponding to a processing target LoD. The 3DCNN 451 receives an input of a neighboring voxel (for example, $\{V\_(k, i)\}^t$, $\{V\_(k, i)\}^{\wedge}(t - 1)$, $\{V\_(k, i)\}^{\wedge}(t + 1)$, or the like) of any frame of the processing target LoD, generates a context vector corresponding the neighboring voxel, and supplies the context vector to the vector composition unit 436. For example, the 3DCNN 451 generates a context vector $\{f\_(k, i)\}^t$ corresponding to the processing target frame of the processing target LoD on the basis of the input neighboring voxel $\{V\_(k, i)\}^t$, and supplies the context vector to the vector composition unit 436. Furthermore, the 3DCNN 451 generates a context vector $\{f\_(k, i)\}^{\wedge}(t - 1)$ corresponding to a frame immediately before the processing target frame of the processing target LoD on the basis of the input neighboring voxel $\{V\_(k, i)\}^{\wedge}(t - 1)$, and supplies the context vector to the vector composition unit 436. Furthermore, the 3DCNN 451 generates a context vector $\{f\_(k, i)\}^{\wedge}(t + 1)$ corresponding to a frame immediately after the processing target frame of the processing target LoD on the basis of the input neighboring voxel $\{V\_(k, i)\}^{\wedge}(t + 1)$, and supplies the context vector to the vector composition unit 436.

The 3DCNN 452 is $\{(3DCNN\_+1)^{\wedge *}\}()$ corresponding to an LoD one level lower than the processing target LoD. The 3DCNN 452 receives an input of a neighboring voxel (for example, $\{V\_(k + 1, i)\}^{\wedge}(t - 1)$, $\{V\_(k + 1, i)\}^{\wedge}(t - 2)$, or the like) of any frame of the LoD one level lower than the processing target LoD, generates a context vector corresponding the neighboring voxel, and supplies the context vector to the vector composition unit 436. For example, the 3DCNN 452 generates a context vector $\{f\_(k + 1, i)\}^{\wedge}(t - 1)$ corresponding to a frame immediately before the processing target frame of the LoD one level lower than the processing target LoD on the basis of the input neighboring voxel $\{V\_(k + 1, i)\}^{\wedge}(t - 1)$, and supplies the context vector to the vector composition unit 436. Furthermore, the 3DCNN 452 generates a context vector $\{f\_(k + 1, i)\}^{\wedge}(t - 2)$ corresponding to a frame two frames before the processing target frame of the LoD one level lower than the processing target LoD on the basis of the input neighboring voxel $\{V\_(k + 1, i)\}^{\wedge}(t - 2)$, and supplies the context vector to the vector composition unit 436.

That is, since these 3DCNNs are applied in common in the time direction, the octree decoding unit 211 can make the number of reference frames variable.

The query vector decoding unit 434 acquires a query vector bitstream supplied from the outside of the octree decoding unit 211 (geometry decoding device 200), and performs entropy decoding on the query vector bitstream to generate (restore) an index $(c\_i)^{\wedge *}$ corresponding to a query vector applied at the time of coding. That is, it can also be said that the query vector decoding unit 434 decodes a query vector bitstream to generate a query vector. The query vector decoding unit 434 supplies the generated index $(c\_i)^{\wedge *}$ to the codebook storage unit 435.

Similarly to the case of the codebook storage unit 131, the codebook storage unit 435 includes a storage medium and stores the codebook C. The codebook storage unit 331 supplies the stored codebook C to the vector composition unit 335 and the codeword selection unit 138. However, the codebook C in this case is a set of (candidates of) query vectors $q^c$. That is, the codebook storage unit 435 stores the codebook $C = \{q^{\wedge}0, ..., g^{\wedge}(|C|-1)\}$ of the query vectors, and provides the vector composition unit 436 with a query vector $q^{\wedge}\{(c\_i)^{\wedge *}\}$ corresponding to the index $(c\_i)^{\wedge *}$ supplied from the query vector decoding unit 434.

The vector composition unit 436 acquires a plurality of context vectors supplied from the context vector deriving unit 433. For example, the vector composition unit 436 acquires a context vector (for example, $\{f\_(k, i)\}^t$, $\{f\_(k, i)\}^{\wedge}(t - 1)$, $\{f\_(k, i)\}^{\wedge}(t + 1)$, or the like) supplied from the 3DCNN 451 and corresponding to the processing target LoD. Furthermore, the vector composition unit 436 acquires a context vector (for example, $\{f\_(k + 1, i)\}^{\wedge}(t - 1)$, $\{f\_(k + 1, i)\}^{\wedge}(t - 2)$, or the like) supplied from the 3DCNN 452 and corresponding to an LoD one level lower than the processing target LoD. Furthermore, the vector composition unit 436 reads and acquires the codebook C (query vector $(q\_i)^c$) from the codebook storage unit 435.

The vector composition unit 436 performs the scaled dot-product attention calculation described above by using the acquired query vector $q^{\wedge}\{(c\_i)^{\wedge *}\}$ to combine a plurality of acquired context vectors to generate a composite vector. For example, the vector composition unit 436 derives a composite vector $(u\_i)^{\wedge}\{(c\_i)^{\wedge *}\}$ as in the above-described Expression (24). Note that Q and K satisfy the above-described Expressions (25) and (26). The vector composition unit 436 supplies the generated composite vector to the MLP 237.

Other processing units perform processing similar to those in the case of Fig. 11. With such a configuration, the geometry decoding device 200 can easily make the number of reference frames variable.

<Flow of octree decoding process>

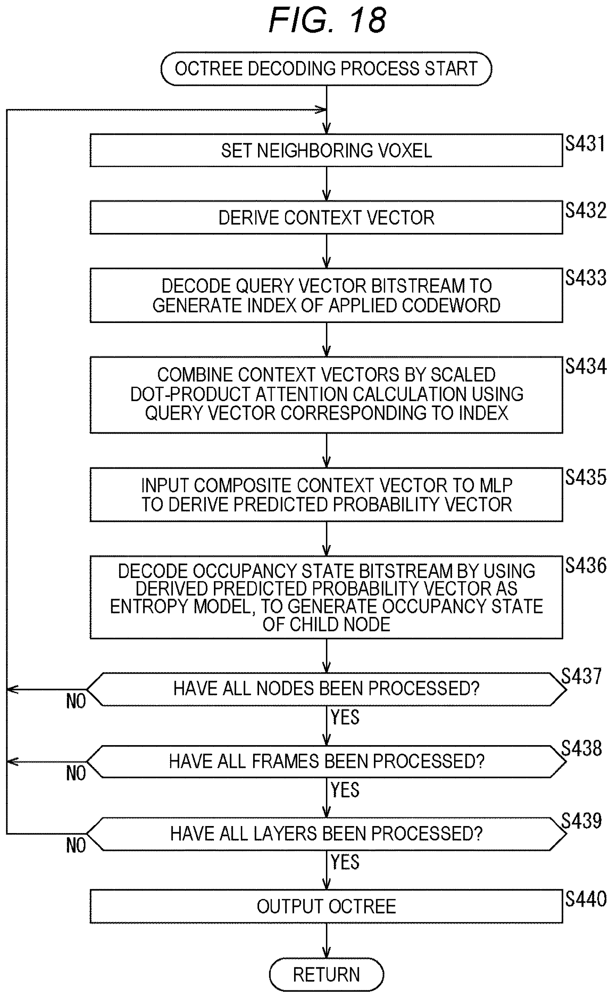

An example of a flow of the octree decoding process in this case will be described with reference to a flowchart in Fig. 18. In this case, when the octree coding process is started, the neighboring voxel setting unit 232 sets neighboring voxels in step S431 similarly to the case of step S231 (Fig. 13). In step S432, the context vector deriving unit 433 derives a context vector corresponding to each neighboring voxel by using a neural network for each layer as described above.

In step S433, the query vector decoding unit 434 decodes a query vector bitstream as described above, to generate (restore) an index $(c\_i)^{\wedge *}$ corresponding to a codeword (query vector) applied at the time of coding.

In step S434, the vector composition unit 436 executes the scaled dot-product attention calculation as described above by using a query vector $q^{\wedge}\{(c\_i)^{\wedge *}\}$ corresponding to the index $(c\_i)^{\wedge *}$, to combine the context vectors to generate the composite vector $(u\_i)^{\wedge}\{(c\_i)^{\wedge *}\}$.

In step S435, similarly to the case of step S235 (Fig. 13), the MLP 237 inputs the composite vector $(u\_i)^{\wedge}\{(c\_i)^{\wedge *}\}$ to a multilayer perceptron (MLP'), to derive a predicted probability vector $(p\_i)^{\wedge}\{(c\_i)^{\wedge *}\}$.

In step S436, similarly to the case of step S236 (Fig. 13), the occupancy state decoding unit 238 decodes an occupancy state bitstream by using the predicted probability vector $(p\_i)^{\wedge}\{(c\_i)^{\wedge *}\}$ as an entropy model, to generate (restore) information indicating an occupancy state of a child node of the processing target node.

In step S437, similarly to the case of step S237 (Fig. 13), the occupancy state decoding unit 238 determines whether or not all the nodes have been processed, and executes each process of steps S431 to S437 for each node until it is determined that all the nodes of the processing target frame of the processing target LoD have been processed. Then, when it is determined in step S437 that the processing has been performed on all the nodes, the process proceeds to step S438.

In step S438, similarly to the case of step S238 (Fig. 13), the occupancy state decoding unit 238 determines whether or not all the frames have been processed, and executes each process of steps S431 to S438 for each node of each frame until it is determined that all the nodes of all the frames of the processing target LoD have been processed. Then, when it is determined in step S438 that the processing has been performed on all the frames, the process proceeds to step S439.

In step S439, similarly to the case of step S239 (Fig. 13), the occupancy state decoding unit 238 determines whether or not all the layers have been processed, and executes each process of steps S431 to S439 for each node of each frame of each LoD until it is determined that all the nodes of all the frames of all LoD have been processed. Then, when it is determined in step S439 that the processing has been performed on all the layers, the process proceeds to step S440.

In step S440, the occupancy state decoding unit 238 outputs an octree, similarly to the case of step S240 (Fig. 13). When the process of step S440 ends, the octree decoding process ends, and the process returns to Fig. 12.

By executing each process in this manner, the geometry decoding device 200 can easily make the number of reference frames variable.

<Method 1-2-1-1>

For example, as shown in the fifth row from the top of the table of Fig. 4, a parameter of an entropy model of a query vector may be derived using a context vector. In this way, by dynamically changing the entropy model of the query vector in accordance with the context vector set, it is possible to suppress a decrease in coding efficiency.

For example, the first information processing device may further include an entropy model deriving unit configured to derive an entropy model of a query vector, and the query vector coding unit may apply the derived entropy model to perform entropy coding on an index. Furthermore, for example, the second information processing device may further include an entropy model deriving unit configured to derive an entropy model of a query vector, and the query vector decoding unit may apply the derived entropy model to perform entropy decoding on a bitstream to generate an index.

<Octree coding unit>

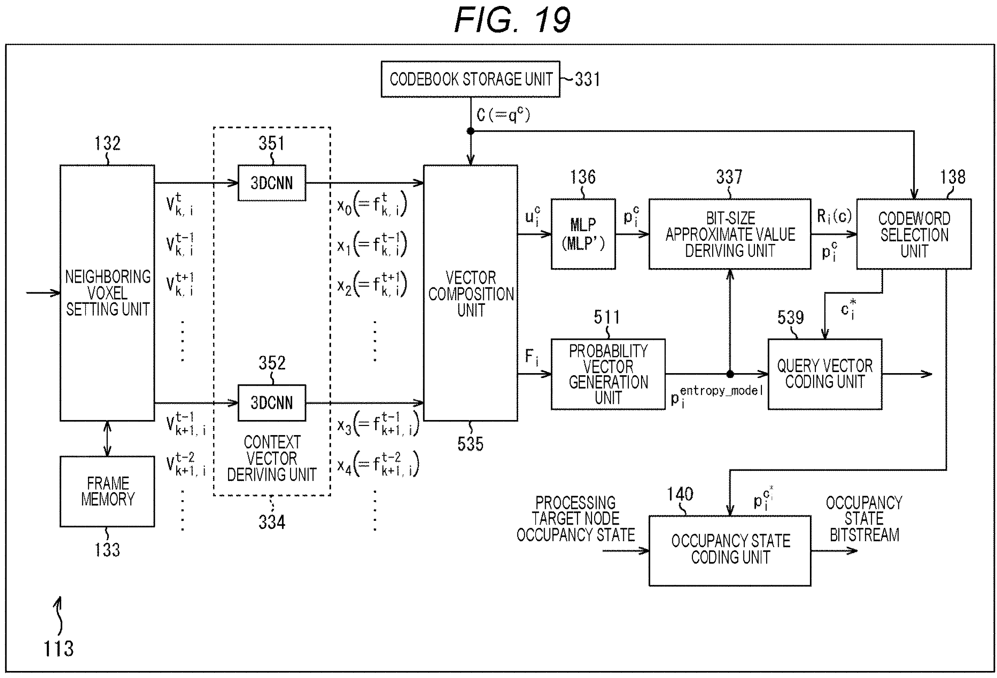

Fig. 19 illustrates a main configuration example of the octree coding unit 113 in this case. In the case of the example of this figure, the octree coding unit 113 includes a probability vector generation unit 511 in addition to the configuration illustrated in Fig. 14. Furthermore, the octree coding unit 113 includes a vector composition unit 535 instead of the vector composition unit 335 (Fig. 14). Furthermore, the octree coding unit 113 includes a query vector coding unit 539 instead of the query vector coding unit 339 (Fig. 14).

Similarly to the case of the vector composition unit 335 (Fig. 14), the vector composition unit 535 combines a plurality of context vectors by using a query vector to generate a composite vector, and supplies the composite vector to the MLP 136. Furthermore, the vector composition unit 535 generates a matrix $F\_i$ (the number of rows is equal to the number of context vectors, and the number of columns is equal to the number of dimensions of the context vector) in which a context vector set is arranged, and supplies the matrix $F\_i$ to the probability vector generation unit 511. The probability vector generation unit 511 derives a probability vector $(p\_i)^{\wedge}(entropy\_model)$ on the basis of the matrix $F\_i$ in which a context vector set is arranged, and supplies the probability vector $(p\_i)^{\wedge}(entropy\_model)$ as the entropy model to the bit-size approximate value deriving unit 337 and the query vector coding unit 539. That is, the probability vector generation unit 511 can also be referred to as an entropy model deriving unit that derives an entropy model of a query vector on the basis of a context vector group. The query vector coding unit 539 applies the probability vector $(p\_i)^{\wedge}(entropy\_model)$ as the entropy model, and performs entropy coding on the index $(c\_i)^{\wedge *}$ to generate a query vector bitstream. Note that, in this case, the bit-size approximate value deriving unit 337 may estimate a code amount corresponding to each of a plurality of candidates of the query vector included in the codebook C, by using the probability vector supplied from the probability vector generation unit 511.

By doing in this way, the geometry coding device 100 can dynamically change the entropy model of the query vector in accordance with the context vector set, and can suppress a decrease in coding efficiency.

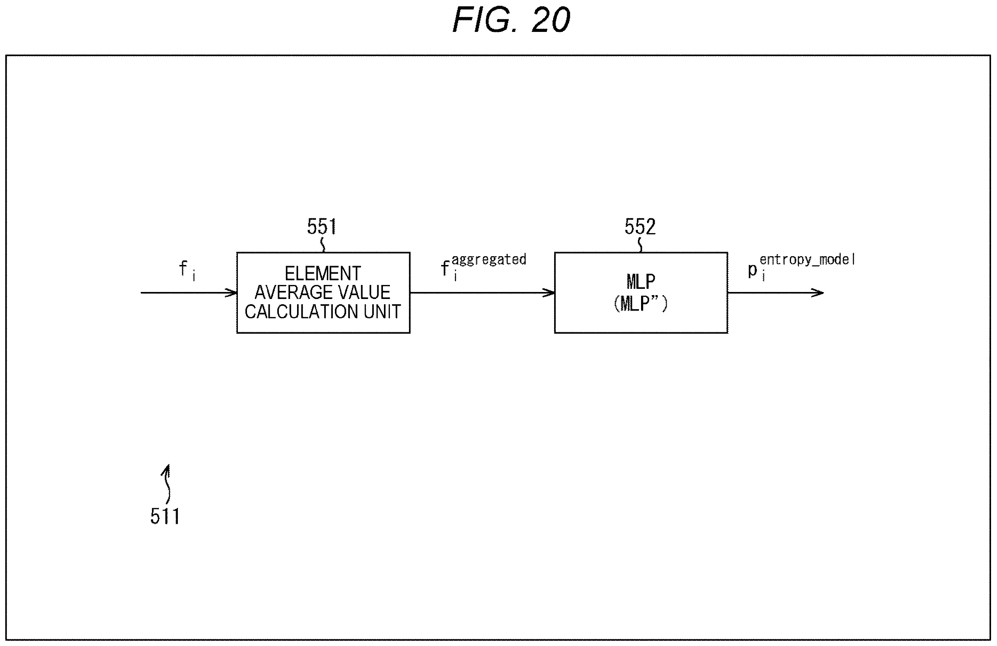

Note that a method of deriving the entropy model of the query vector by the probability vector generation unit 511 may be any method. For example, the probability vector generation unit 511 may derive the entropy model by calculating an average value of context vectors and inputting the average value to a neural network. In that case, as illustrated in Fig. 20, the probability vector generation unit 511 includes an element average value calculation unit 551 and an MLP 552. The element average value calculation unit 551 acquires, from the vector composition unit 535, the matrix F_i (the number of rows is equal to the number of context vectors, and the number of columns is equal to the number of dimensions of the context vector) in which a context vector set is arranged. The element average value calculation unit 551 calculates an average value of all elements for a column vector of each column of the matrix F_i. The element average value calculation unit 551 sets a vector having the obtained average value for all columns, as a new element as (f_i)^(aggregated). Note that the number of dimensions of (f_i)^(aggregated) is equal to the number of dimensions of the context vector. The element average value calculation unit 551 supplies (f_i)^(aggregated) to the MLP 552.

The MLP 552 is a multilayer perceptron, receives (f_i)^(aggregated) supplied from the element average value calculation unit 551 as an input, derives a predicted probability vector (p_i)^(entropy_model) of the query vector, and supplies the predicted probability vector (p_i)^(entropy_model) to the query vector coding unit 539. That is, the MLP 552 derives the predicted probability vector (p_i)^(entropy_model) of the query vector on the basis of (f_i)^(aggregated) . That is, the MLP 552 can also be referred to as a query vector predicted probability vector deriving unit.

For example, the MLP 552 may calculate the probability vector (p_i)^(entropy_model) in the |C| dimension as in the following Expression (28), by inputting (f_i)^(aggregated) to a newly prepared multilayer perceptron (MLP"). Note that, in Expression (28), an MLP" is used to distinguish from the MLP 13 and the MLP' of Fig. 3 (clearly indicate that the neural network is different). The number of input dimensions of the MLP" is equal to the number of dimensions of the context vector, the number of output dimensions is 256, and the softmax function is used as an activation function of a final layer.
[Math. 26]

$$p_i^{entropy\_model} = MLP'' \left( f_i^{aggregated} \right)$$

$$\cdots (28)$$

The query vector coding unit 539 codes the index (c_i)^* by using the probability vector (p_i)^(entropy_model) as the entropy model, to generate a query vector bitstream. That is, it can also be said that the query vector coding unit 339 codes a query vector selected by the codeword selection unit 138. The query vector coding unit 539 outputs the generated query vector bitstream to the outside of the octree coding unit 113 (the outside of the geometry coding device 100). This query vector bitstream may be provided to a geometry decoding device that decodes a geometry bitstream, via any transmission path or any recording medium.

Other processing units perform processing similar to those in the case of Fig. 14. By doing in this way, the geometry coding device 100 can dynamically change the entropy model of the query vector in accordance with the context vector set, and can suppress a decrease in coding efficiency.

<Flow of octree coding process>

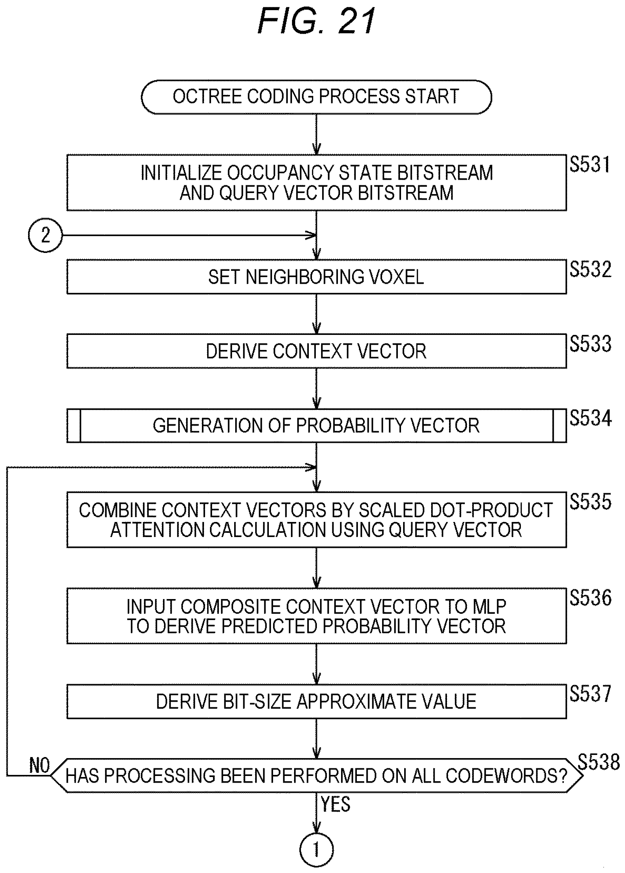

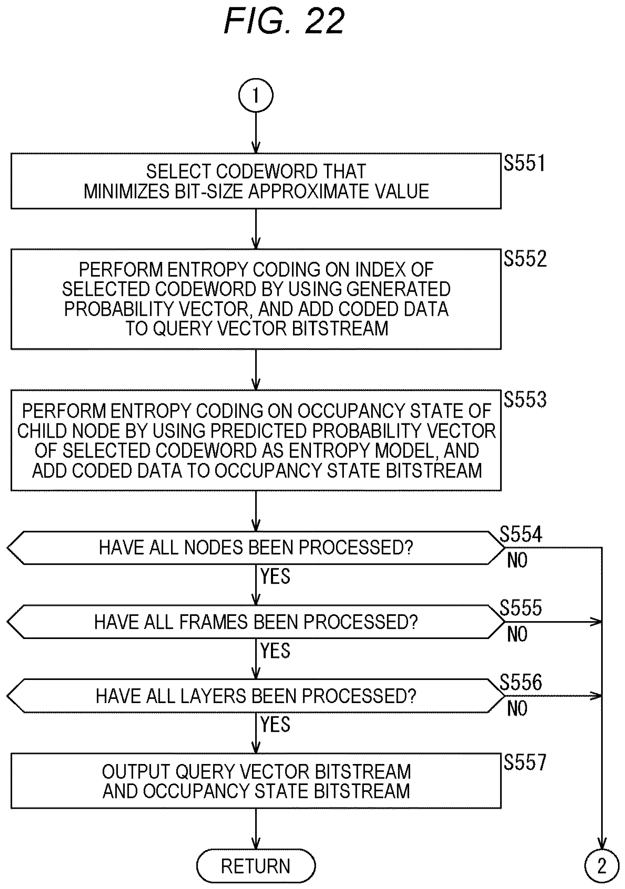

An example of a flow of the octree coding process in this case will be described with reference to the flowcharts of Figs. 21 and 22. In this case, when the octree coding process is started, the query vector coding unit 539 and the occupancy state coding unit 140 initialize an occupancy state bitstream and a query vector bitstream in step S531 of Fig. 21.

In step S532, the neighboring voxel setting unit 132 sets neighboring voxels similarly to the case of step S332 (Fig. 15). In step S533, the context vector deriving unit 334 derives a context vector corresponding to each neighboring voxel, similarly to the case of step S333 (Fig. 15).

In step S534, the vector composition unit 535 generates a matrix F_i in which a context vector set is arranged. The probability vector generation unit 511 executes a probability vector generation process using the matrix F_i to generate a probability vector.

In step S535, similarly to the case of step S334 (Fig. 15), the vector composition unit 535 combines the context vectors by the scaled dot-product attention calculation using the query vector, to generate a composite vector.

In step S536, similarly to the case of step S335 (Fig. 15), the MLP 136 inputs the composite vector generated in step S535 to the multilayer perceptron (MLP') to derive a predicted probability vector. That is, the MLP 136 generates a predicted probability vector corresponding to a processing target candidate of the query vector.

27

In step S537, similarly to the case of step S336 (Fig. 15), the bit-size approximate value deriving unit 337 derives a bit-size approximate value by using the above-described Expression (27). That is, the bit-size approximate value deriving unit 337 derives a bit-size approximate value corresponding to a candidate of the processing target of the query vector.

In step S538, similarly to the case of step S337 (Fig. 15), the codeword selection unit 138 determines whether or not the processing has been performed on all codewords included in the codebook, and executes each process of steps S535 to S538 for each codeword until it is determined that the processing has been performed on all codewords. Then, when it is determined in step S538 that the processing has been performed on all the codewords, the process proceeds to Fig. 22.

In step S551 of Fig. 22, similarly to the case of step S351 (Fig. 16), the codeword selection unit 138 selects a codeword (a candidate of the importance coefficient vector) that minimizes the bit-size approximate value derived in step S537 (Fig. 21).

In step S552, the query vector coding unit 539 codes an index (that is, an index of the query vector) of the selected codeword by using the probability vector generated in step S534 of Fig. 21, and adds the coded data to the query vector bitstream.

In step S553, similarly to the case of step S353 (Fig. 16), the occupancy state coding unit 140 performs entropy coding on information indicating an occupancy state of a child node of a processing target node by using the predicted probability vector corresponding to the selected codeword as the entropy model, and adds the coded data to the occupancy state bitstream.

In step S554, similarly to the case of step S354 (Fig. 16), the occupancy state coding unit 140 determines whether or not all the nodes have been processed, and executes each process of steps S532 to S538 of Fig. 21 and each process of steps S551 to S554 of Fig. 22 for each node until it is determined that all the nodes of the processing target frame of the processing target LoD have been processed. Then, when it is determined in step S554 of Fig. 22 that the processing has been performed on all the nodes, the process proceeds to step S555.

In step S555, similarly to the case of step S355 (Fig. 16), the occupancy state coding unit 140 determines whether or not all the frames have been processed, and executes each process of steps S532 to S538 of Fig. 21 and each process of steps S551 to S555 of Fig. 22 for each node of each frame until it is determined that all the nodes of all the frames of the processing target LoD have been processed. Then, when it is determined in step S555 of Fig. 22 that the processing has been performed on all the frames, the process proceeds to step S556.

In step S556, similarly to the case of step S356 (Fig. 16), the occupancy state coding unit 140 determines whether or not all the layers have been processed, and executes each process of steps S532 to S538 of Fig. 21 and each process of steps S551 to S556 of Fig. 22 for each node of each frame of each LoD until it is determined that all the nodes of all the frames of all LoD have been processed. Then, when it is determined in step S556 of Fig. 22 that the processing has been performed on all the layers, the process proceeds to step S557.

In step S557, the query vector coding unit 339 outputs the query vector bitstream, similarly to the case of step S357 (Fig. 16). Furthermore, the occupancy state coding unit 140 outputs the occupancy state bitstream, similarly to the case of step S357 (Fig. 16).

When the process of step S557 ends, the octree coding process ends, and the process returns to Fig. 7.

<Flow of probability vector generation process>

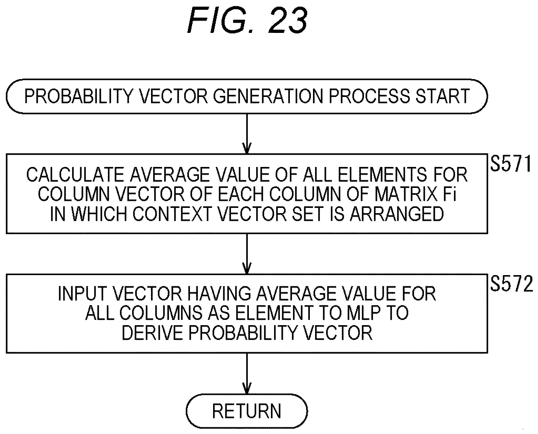

Next, an example of a flow of a probability vector generation process executed in step S552 of Fig. 22 will be described with reference to a flowchart of Fig. 23. When the probability vector generation process is started, in step S571, the element average value calculation unit 551 calculates an average value of all elements for a column vector of each column of the matrix $F_i$ in which a context vector set is arranged. In step S572, the MLP 552 inputs a vector $(f_i)^\wedge$ (aggregated) having an average value for all columns as an element to the multilayer perceptron (MLP''), to derive the predicted probability vector $(p_i)^\wedge$(entropy_model) of the query vector. When the process of step S572 ends, the probability vector generation process ends, and the process returns to Fig. 22.

By executing each process in this manner, the geometry coding device 100 can dynamically change the entropy model of the query vector in accordance with the context vector set, and can suppress a decrease in coding efficiency.

<Octree decoding unit>

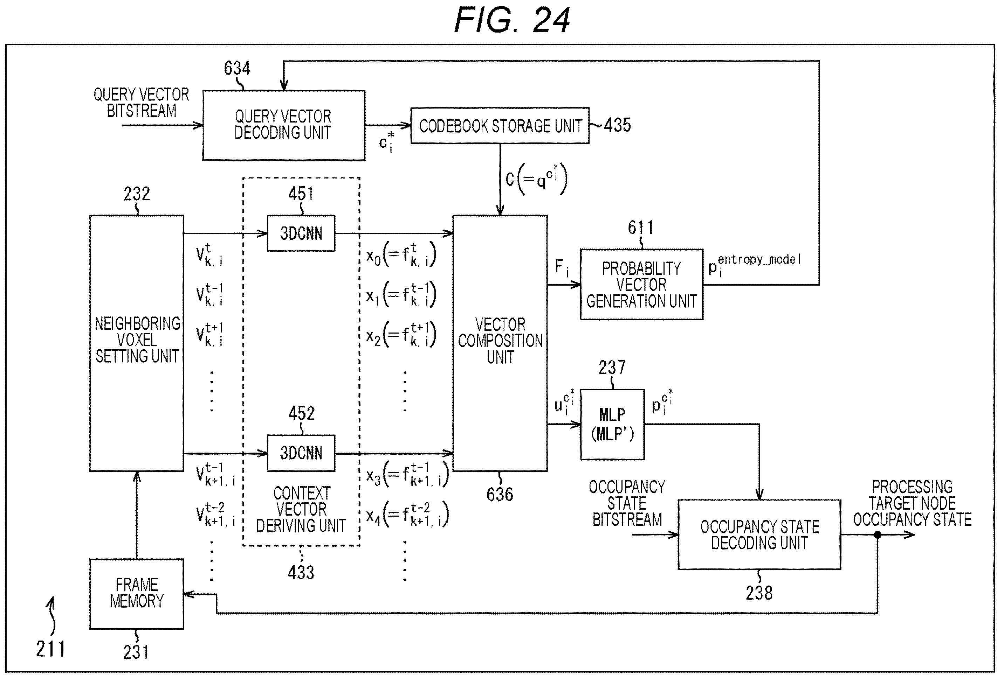

Fig. 24 illustrates a main configuration example of the octree decoding unit 211 in this case. In the case of the example of this figure, the octree decoding unit 211 includes a probability vector generation unit 611 in addition to the configuration illustrated in Fig. 17. Furthermore, the octree decoding unit 211 includes a vector composition unit 636 instead of the vector composition unit 436 (Fig. 17). Furthermore, the octree decoding unit 211 includes a query vector decoding unit 634 instead of the query vector decoding unit 434 (Fig. 17).

Similarly to the case of the vector composition unit 436 (Fig. 17), the vector composition unit 636 combines a plurality of context vectors by using a query vector to generate a composite vector, and supplies the composite vector to the MLP 136. Furthermore, the vector composition unit 636 generates a matrix $F_i$ (the number of rows is equal to the number of context vectors, and the number of columns is equal to the number of dimensions of the context vector) in which a context vector set is arranged, and supplies the matrix $F_i$ to the probability vector generation unit 611.

The probability vector generation unit 611 performs processing similarly to the probability vector generation unit 511. That is, the probability vector generation unit 611 derives the probability vector $(p\_i)^\wedge(entropy\_model)$ on the basis of the matrix $F_i$ in which a context vector set is arranged, and supplies the probability vector $(p\_i)^\wedge(entropy\_model)$ to the query vector decoding unit 634 as the entropy model. That is, the probability vector generation unit 611 can also be referred to as the entropy model deriving unit that derives an entropy model of a query vector on the basis of a context vector group.

The query vector decoding unit 634 applies the probability vector $(p\_i)^\wedge(entropy\_model)$ as the entropy model, and decodes a query vector bitstream to generate (restore) an index $(c\_i)^{\wedge *}$.

By doing in this way, the geometry decoding device 200 can dynamically change the entropy model of the query vector in accordance with the context vector set, and can suppress a decrease in coding efficiency.

Note that a method of deriving the entropy model of the query vector by the probability vector generation unit 611 may be any method. For example, the probability vector generation unit 611 may derive the entropy model by calculating an average value of context vectors and inputting the average value to a neural network. In that case, the probability vector generation unit 611 may have a configuration similar to that of the example illustrated in Fig. 20, for example, and execute similar processing.

By doing in this way, the geometry decoding device 200 can dynamically change the entropy model of the query vector in accordance with the context vector set, and can suppress a decrease in coding efficiency.

<Flow of octree decoding process>

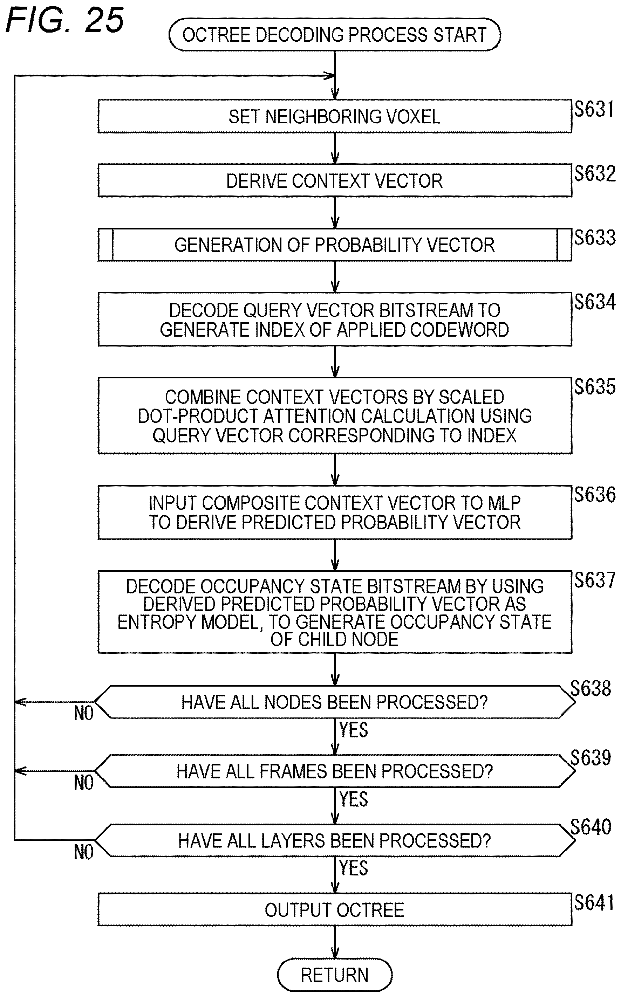

An example of a flow of the octree decoding process in this case will be described with reference to a flowchart in Fig. 25. In this case, when the octree decoding process is started, the neighboring voxel setting unit 232 sets neighboring voxels in step S631 similarly to the case of step S431 (Fig. 18). In step S632, the context vector deriving unit 433 derives a context vector corresponding to each neighboring voxel by using a neural network for each layer, similarly to the case of step S432 (Fig. 18).

In step S633, the probability vector generation unit 611 executes a probability vector generation process to generate a probability vector. The probability vector generation process in this case may have any contents, and for example, may be executed in a flow similar to the example of Fig. 23.

In step S634, the query vector decoding unit 634 decodes a query vector bitstream by using the probability vector, to generate (restore) an index $(c\_i)^{\wedge *}$ corresponding to a codeword (query vector) applied at the time of coding.

In step S635, similarly to the case of step S434 (Fig. 18), the vector composition unit 636 executes the scaled dot-product attention calculation as described above by using a query vector $q^{\wedge \{(c\_i)^{\wedge *}\}}$ corresponding to the index $(c\_i)^{\wedge *}$, to combine the context vectors to generate the composite vector $(u\_i)^{\wedge \{(c\_i)^{\wedge *}\}}$. Furthermore, the vector composition unit 636 generates a matrix $F_i$ in which a context vector set is arranged.

In step S636, similarly to the case of step S435 (Fig. 18), the MLP 237 inputs the composite vector $(u\_i)^{\wedge \{(c\_i)^{\wedge *}\}}$ to a multilayer perceptron (MLP'), to derive a predicted probability vector $(p\_i)^{\wedge \{(c\_i)^{\wedge *}\}}$.

In step S637, similarly to the case of step S436 (Fig. 18), the occupancy state decoding unit 238 decodes an occupancy state bitstream by using the predicted probability vector $(p\_i)^{\wedge \{(c\_i)^{\wedge *}\}}$ as the entropy model, to generate (restore) information indicating an occupancy state of a child node of the processing target node.

In step S638, similarly to the case of step S437 (Fig. 18), the occupancy state decoding unit 238 determines whether or not all the nodes have been processed, and executes each process of steps S631 to S638 for each node until it is determined that all the nodes of the processing target frame of the processing target LoD have been processed. Then, when it is determined in step S638 that the processing has been performed on all the nodes, the process proceeds to step S639.

In step S639, similarly to the case of step S438 (Fig. 18), the occupancy state decoding unit 238 determines whether or not all the frames have been processed, and executes each process of steps S631 to S639 for each node of each frame until it is determined that all the nodes of all the frames of the processing target LoD have been processed. Then, when it is determined in step S639 that the processing has been performed on all the frames, the process proceeds to step S640.

In step S640, similarly to the case of step S439 (Fig. 18), the occupancy state decoding unit 238 determines whether or not all the layers have been processed, and executes each process of steps S631 to S640 for each node of each frame of each LoD until it is determined that all the nodes of all the frames of all LoD have been processed. Then, when it is determined in step S640 that the processing has been performed on all the layers, the process proceeds to step S641.

In step S641, the occupancy state decoding unit 238 outputs an octree, similarly to the case of step S440 (Fig. 18). When the process of step S641 ends, the octree decoding process ends, and the process returns to Fig. 12.

By executing each process in this manner, the geometry decoding device 200 can dynamically change the entropy model of the query vector in accordance with the context vector set, and can suppress a decrease in coding efficiency.

<Method 1-2-2>

For example, as shown in the sixth row from the top of the table of Fig. 4, each element of a query vector may be entropy coded. For example, in the first information processing device, the query vector coding unit may perform entropy coding on each element of a query vector. Furthermore. In the second information processing device, the query vector decoding unit may perform entropy decoding on a bitstream to generate each element of the query vector.

For example, probability tables whose number of pieces is {number of dimensions of codeword} are prepared instead of one probability table of the number of elements $|C|$. Each probability table is used to perform entropy coding on a quantized value of each dimension of the codeword. For example, in the octree coding unit 113 in the example of Fig. 14, the query vector coding unit 339 has the probability table.

In this case, an estimated bit size $-\log_2$ ({c-th element of the probability table for query vector compression}) of the query vector is an estimated value of a bit size after entropy coding of each element of the query vector. As described with reference to Fig. 14, the codeword selection unit 138 selects an index $(c\_i)^*$ of a codeword that minimizes the bit size, and supplies the index $(c\_i)^*$ to the query vector coding unit 339. Instead of entropy coding of the index $(c\_i)^*$, the query vector coding unit 339 quantizes an element of each dimension of a corresponding codeword $q^{\{(c\_i)^*\}}$, performs entropy coding on the element by using a corresponding probability table, and writes the element into a bitstream. In the octree decoding unit 211 in the example of Fig. 17, the query vector decoding unit 434 also has the probability table. The query vector decoding unit 434 performs entropy decoding on a quantized value from a bitstream by using the probability table, and inversely quantizes the value.

<Method 1-2-3>

For example, as shown in the seventh row from the top of the table in Fig. 4, multi-head attention (multi-head attention calculation) may be applied to the attention calculation. In the multi-head attention calculation, the scaled dot-product attention calculation is performed a plurality of times, and results are connected in a column direction and linearly transformed by a weight matrix $W^O$. As described above, by applying the multi-head attention calculation, the scaled dot-product attention calculation is performed a plurality of times, so that improvement in performance can be expected as compared with the case of applying single scaled dot-product attention calculation. For example, in the first information processing device and the second information processing device, the vector composition unit may generate a composite vector by performing multi-head attention calculation using a query vector. In this case, for example, in the octree coding unit 113 in the example of Fig. 14, the vector composition unit 335 may generate a composite vector by executing the multi-head attention calculation, instead of executing the single scaled dot-product attention calculation. Furthermore, in the octree decoding unit 211 in the example of Fig. 17, the vector composition unit 436 may generate a composite vector by executing the multi-head attention calculation, instead of executing the single scaled dot-product attention calculation.

<Method 1-2-4>

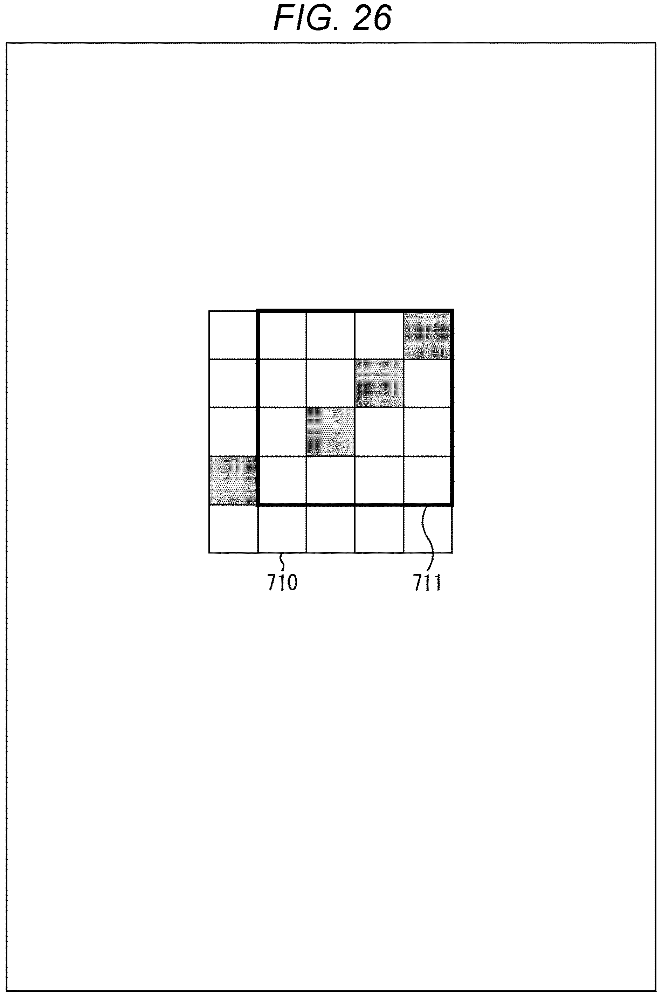

For example, as shown in the eighth row from the top of the table in Fig. 4, a query vector may be shared in units of macroblocks. For example, as illustrated in Fig. 26, a macroblock 711 having a predetermined size may be provided in a neighboring region 710, and a query vector may be shared by nodes in the macroblock. For example, in the first information processing device and the second information processing device, the vector composition unit may generate a composite vector by using a common query vector for each predetermined region (macroblock). In this case, for example, in the octree coding unit 113 in the example of Fig. 14, the vector composition unit 335 may generate a composite vector by using the common query vector for each macroblock. Furthermore, in the octree decoding unit 211 in the example of Fig. 17, the vector composition unit 436 may generate a composite vector using the common query vector for each macroblock. By doing in this way, decrease in coding efficiency can be suppressed.

<5. Division of neighboring region>

<Method 1-3>

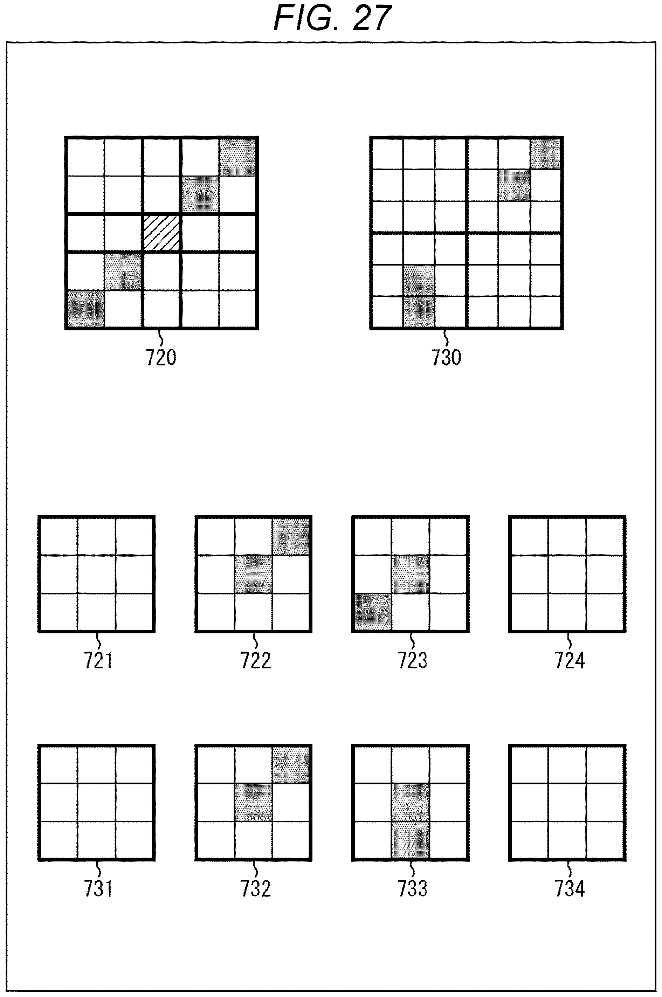

For example, as shown in the ninth row from the top of the table in Fig. 4, a neighboring voxel may be divided in a space direction. For example, as illustrated in Fig. 27, a neighboring region 720 may be divided into sub-neighboring regions 721 to 724, and a context vector may be derived individually. Furthermore, a neighboring region 730 of a lower layer may be divided into sub-neighboring regions 731 to 734, and a context vector may be derived individually. For example, the context vector may be made correspond to an occupancy state of the sub-neighboring region formed in the neighboring region, and the vector composition unit may combine the context vectors for individual sub-neighboring regions, in the first information processing device and the second information processing device.

In that case, for example, in the octree coding unit 113 in the example of Fig. 6, the context vector deriving unit 134 may derive a context vector for each sub-neighboring region, and the vector composition unit 135 may combine the context vectors for individual sub-neighboring regions to generate a composite vector. Furthermore, in the octree decoding unit 211 of the example of Fig. 11, the context vector deriving unit 233 may derive a context vector for each sub-neighboring region, and the vector composition unit 236 may combine the context vectors for individual sub-neighboring regions to generate a composite vector.

Furthermore, in the octree coding unit 113 of the example of Fig. 14, the context vector deriving unit 334 may derive a context vector for each sub-neighboring region, and the vector composition unit 335 may combine the context vectors for individual sub-neighboring regions to generate a composite vector. Furthermore, in the octree decoding unit 211 of the example of Fig. 17, the context vector deriving unit 433 may derive a context vector for each sub-neighboring region, and the vector composition unit 436 may combine the context vectors for individual sub-neighboring regions to generate a composite vector.

Furthermore, in the octree coding unit 113 of the example of Fig. 19, the context vector deriving unit 334 may derive a context vector for each sub-neighboring region, and the vector composition unit 535 may combine the context vectors for individual sub-neighboring regions to generate a composite vector. Furthermore, in the octree decoding unit 211 of the example of Fig. 24, the context vector deriving unit 433 may derive a context vector for each sub-neighboring region, and the vector composition unit 636 may combine the context vectors for individual sub-neighboring regions to generate a composite vector.

By doing in this way, it is possible to use a correlation for each direction. In a scene where there is movement, it is possible to select a time/space direction such as "which region at which time is emphasized", and improvement in coding efficiency is expected.

<6. Addition of metadata>

<Method 1-4>

For example, as shown at the bottom of the table in Fig. 4, metadata such as coordinate values, a depth of an octree, and a time may be added to a context vector. For example, a center coordinate value of a neighboring voxel corresponding to the context vector, a depth k of an octree, and time t may be connected to the context vector, to obtain a new context vector.

In this case, for example, in the octree coding unit 113 in the example of Fig. 6, the context vector deriving unit 134 may add metadata to the context vector. Furthermore, in the octree decoding unit 211 of the example of Fig. 11, the context vector deriving unit 233 may add metadata to the context vector. Furthermore, in the octree coding unit 113 in the example of Fig. 14, the context vector deriving unit 334 may add metadata to the context vector. Furthermore, in the octree decoding unit 211 of the example of Fig. 17, the context vector deriving unit 433 may add metadata to the context vector. This similarly applies to the case of the examples of Figs. 19 and 24.

<7. Supplementary note>

<Computer>

The above-described series of processing can be executed by hardware or software. When the series of processing is executed by the software, a program that configures the software is installed in a computer. Here, examples of the computer include, for example, a computer that is built in dedicated hardware, a general-purpose personal computer that can perform various functions by being installed with various programs, and the like.

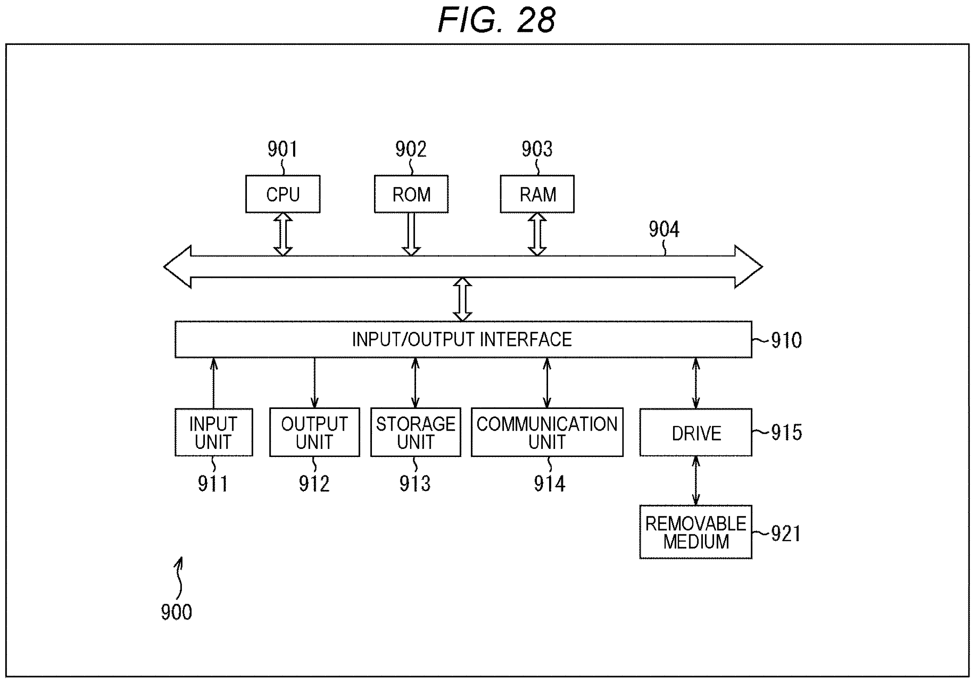

Fig. 28 is a block diagram illustrating a configuration example of hardware of a computer that executes the series of processes described above in accordance with a program.

In a computer 900 illustrated in Fig. 28, a central processing unit (CPU) 901, a read only memory (ROM) 902, and a random access memory (RAM) 903 are mutually connected via a bus 904.

The bus 904 is further connected with an input/output interface 910. To the input/output interface 910, an input unit 911, an output unit 912, a storage unit 913, a communication unit 914, and a drive 915 are connected.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921 such as a magnetic disk, an optical disk, a magneto-optical disk, or a semiconductor memory.

In the computer configured as described above, the series of processes described above are performed, for example, by the CPU 901 loading a program recorded in the storage unit 913 into the RAM 903 via the input/output interface 910 and the bus 904, and executing. The RAM 903 also appropriately stores data necessary for the CPU 901 to execute various processes, for example.

The program executed by the computer can be applied by being recorded on, for example, the removable medium 921 as a package medium or the like. In this case, by attaching the removable medium 921 to the drive 915, the program can be installed in the storage unit 913 via the input/output interface 910.

Furthermore, this program can also be provided via a wired or wireless transmission medium such as a local area network, the Internet, or digital satellite broadcasting. In this case, the program can be received by the communication unit 914 and installed in the storage unit 913.

Besides, the program can be installed in advance in the ROM 902 and the storage unit 913.

<Applicable target of present technology>

The present technology may be applied to any configuration. For example, the present technology may be applied to various electronic devices.

Furthermore, for example, the present technology can also be implemented as a partial configuration of a device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Furthermore, for example, the present technology can also be applied to a network system including a plurality of devices. For example, the present technology may be implemented as cloud computing shared and processed in cooperation by a plurality of devices via a network. For example, the present technology may be implemented in a cloud service that provides a service related to an image (moving image) to any terminal such as a computer, an audio visual (AV) device, a portable information processing terminal, or an Internet of Things (IoT) device.

Note that, in the present specification, a system means a set of a plurality of components (devices, modules (parts) and the like), and it does not matter whether or not all the components are in the same housing. Therefore, a plurality of devices stored in different housings and connected via a network and one device in which a plurality of modules is stored in one housing are both systems.

<Field and application to which present technology is applicable>

The system, device, processing unit, and the like to which the present technology is applied can be used in any field such as traffic, medical care, crime prevention, agriculture, livestock industry, mining, beauty care, factory, household appliance, weather, and natural surveillance, for example. Furthermore, application thereof is also arbitrary.

The present technology can be used for, for example, creation of a digital twin at a construction site by three-dimensional surveying, construction management using the digital twin, and the like, as a technology (so-called smart construction) intended to improve productivity and safety of the construction site and solve a shortage of manpower. For example, the present technology can be applied to three-dimensional surveying by using a sensor mounted on a drone or a construction machine, and feedback (for example, construction progress management, soil amount management, and the like) based on three-dimensional data (for example, a point cloud) obtained by the surveying.

Such surveying is generally performed a plurality of times at different times (for example, every other day or the like). That is, point cloud data obtained by surveying at different times is accumulated. Therefore, as the number of times of surveying increases, an increase in storage capacity and transmission cost of a point cloud data sequence may become a problem. Between point clouds at different times, there is redundancy such as having a similar structure. That is, there is temporal redundancy. By applying the present technology, it is expected that point cloud compression using the redundancy in the time direction, that is, the point cloud sequence compression is effective.

<Others>

Note that, in the present specification, a "flag" is information for identifying a plurality of states, and includes not only information used for identifying two states of true (1) and false (0) but also information capable of identifying three or more states. Hence, a value that may be taken by the "flag" may be, for example, a binary of 1/0 or a ternary or more. That is, the number of bits forming this "flag" is any number, and may be one bit or a plurality of bits. Furthermore, identification information (including the flag) is assumed to include not only identification information thereof in a bitstream but also difference information of the identification information with respect to certain reference information in the bitstream, and thus, in the present specification, the "flag" and "identification information" include not only the information thereof but also the difference information with respect to the reference information.

Furthermore, various kinds of information (such as metadata) related to coded data (a bitstream) may be transmitted or recorded in any form as long as it is associated with the coded data. Here, the term "associating" means, when processing one data, allowing other data to be used (to be linked), for example. That is, the data associated with each other may be collected as one data or may be made individual data. For example, information associated with the coded data (image) may be transmitted on a transmission path different from that of the coded data (image). Furthermore, for example, the information associated with the coded data (image) may be recorded in a recording medium different from that of the coded data (image) (or another recording area of the same recording medium). Note that, this "association" may be of not entire data but a part of data. For example, an image and information corresponding to the image may be associated with each other in any unit such as a plurality of frames, one frame, or a part within a frame.

Note that, in the present specification, terms such as "combine", "multiplex", "add", "merge", "include", "store", "put in", "introduce", and "insert" mean, for example, to combine a plurality of objects into one, such as to combine coded data and metadata into one data, and mean one method of "associating" described above.

Furthermore, the embodiment of the present technology is not limited to the above-described embodiment, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, as long as the configuration and operation of the entire system are substantially the same, a part of the configuration of a certain device (or processing unit) may be included in the configuration of another device (or another processing unit).

Furthermore, for example, the above-described programs may be executed in any device. In this case, the device is only required to have a necessary function (functional block or the like) and obtain necessary information.

Furthermore, for example, each step in one flowchart may be executed by one device, or may be executed by being shared by a plurality of devices. Moreover, when a plurality of pieces of processing is included in one step, the plurality of pieces of processing may be executed by one device, or may be shared and executed by a plurality of devices. In other words, the plurality of pieces of processing included in one step can also be executed as pieces of processing of a plurality of steps. Conversely, processing described as a plurality of steps can also be collectively executed as one step.

Furthermore, for example, in a program executed by the computer, process of steps describing the program may be executed in a time-series order in the order described in the present specification, or may be executed in parallel or individually at a required timing such as when a call is made. That is, the pieces of processing of the respective steps may be executed in an order different from the above-described order as long as there is no contradiction. Moreover, this processing in steps describing program may be executed in parallel with processing of another program, or may be executed in combination with processing of another program.

Furthermore, for example, a plurality of technologies related to the present technology can be implemented independently as a single entity as long as there is no contradiction. It goes without saying that any plurality of present technologies can be implemented in combination. For example, a part or all of the present technologies described in any of the embodiment can be implemented in combination with a part or all of the present technologies described in other embodiments. Furthermore, a part or all of any of the above-described present technologies can be implemented together with another technology that is not described above.

Note that the present technology may also provide the following configurations.

(1) An information processing device including:

a vector composition unit configured to generate a composite vector by combining a plurality of context vectors corresponding to a processing target node of 3D data having a tree structure, by using an importance coefficient vector for controlling a degree of contribution to prediction;

a predicted probability vector deriving unit configured to derive a predicted probability vector indicating a probability value of an occupancy state that can be taken by each child node of the processing target node on the basis of the composite vector; and

an occupancy state coding unit configured to code information indicating an occupancy state of the child node of the processing target node by using the predicted probability vector, in which

a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction,

a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and

the prediction is prediction of an occupancy state of the child node of the processing target node by using intra-frame correlation and inter-frame correlation.

(2) The information processing device according to (1), in which

the vector composition unit derives a weighted sum by weighting each of a plurality of the context vectors with each element of the importance coefficient vector, and sets the weighted sum as the composite vector.

(3) The information processing device according to (1) or (2), in which

the predicted probability vector deriving unit derives the predicted probability vector by using a multilayer perceptron using the composite vector as an input.

(4) The information processing device according to any one of (1) to (3), further including

a context vector deriving unit configured to derive each of the context vectors on the basis of an occupancy state of the neighboring region.

(5) The information processing device according to (4), in which

the context vector deriving unit derives, by using mutually different neural networks, the context vector corresponding to an occupancy state of the neighboring region in the processing target layer of the processing target frame, the context vector corresponding to an occupancy state of the neighboring region in the processing target layer of a frame immediately before the processing target frame, the context vector corresponding to an occupancy state of the neighboring region in the processing target layer of a frame immediately after the processing target frame, and the context vector corresponding to an occupancy state of the neighboring region in a layer lower than the processing target layer of a frame immediately before the processing target frame.

(6) The information processing device according to (5), in which

a number of dimensions of the importance coefficient vector is four.

(7) The information processing device according to any of (1) to (6), further including:

a code amount estimation unit configured to estimate a code amount of a case where the predicted probability vector derived by the predicted probability vector deriving unit is applied; and

a selection unit configured to select the importance coefficient vector to be applied, from among a plurality of candidates on the basis of the code amount estimated by the code amount estimation unit, in which

the vector composition unit generates the composite vector corresponding to each of a plurality of the candidates of the importance coefficient vector,

the predicted probability vector deriving unit derives the predicted probability vector corresponding to each of a plurality of the candidates,

the code amount estimation unit estimates the code amount corresponding to each of a plurality of the candidates,

the selection unit selects a candidate, among the candidates, corresponding to the code amount that is smallest among the code amounts individually corresponding to a plurality of the candidates, as the importance coefficient vector to be applied to coding of information indicating an occupancy state of the child node of the processing target node, and

the occupancy state coding unit codes information indicating an occupancy state of the child node of the processing target node by using the candidate selected by the selection unit.

(8) The information processing device according to any one of (1) to (7), further including

an importance coefficient vector coding unit configured to code the importance coefficient vector.

(9) The information processing device according to (8), in which

the importance coefficient vector coding unit performs entropy coding on an index indicating the importance coefficient vector.

(10) The information processing device according to any one of (1) to (9), in which

the vector composition unit generates the composite vector by performing scaled dot-product attention calculation using a query vector having a number of dimensions same as a number of dimensions of each of the context vectors.

(11) The information processing device according to (10), further including

a context vector deriving unit configured to derive each of the context vectors by using a neural network for each layer.

(12) The information processing device according to (10) or (11), further including

a query vector coding unit configured to code the query vector.

(13) The information processing device according to (12), in which

the query vector coding unit performs entropy coding on an index indicating the query vector.

(14) The information processing device according to (13), further including

an entropy model deriving unit configured to derive an entropy model of the query vector, in which
the query vector coding unit applies the derived entropy model to perform entropy coding on the index.

(15) The information processing device according to any one of (12) to (13), in which
the query vector coding unit performs entropy coding on each element of the query vector.

(16) The information processing device according to any one of (10) to (15), in which
the vector composition unit generates the composite vector by performing multi-head attention calculation using the query vector.

(17) The information processing device according to any one of (10) to (16), in which
the vector composition unit generates the composite vector by using the query vector that is common for each predetermined region.

(18) The information processing device according to any one of (1) to (17), in which

each of the context vectors corresponds to an occupancy state of a sub-neighboring region formed in the neighboring region, and
the vector composition unit combines the context vectors of the individual sub-neighboring regions.

(19) The information processing device according to any one of (1) to (18), in which
each of the context vectors includes metadata.

(20) An information processing method including:

generating a composite vector by combining a plurality of context vectors corresponding to a processing target node of 3D data having a tree structure, by using an importance coefficient vector for controlling a degree of contribution to prediction;
deriving a predicted probability vector indicating a probability value of an occupancy state that can be taken by each child node of the processing target node on the basis of the composite vector; and
coding information indicating an occupancy state of the child node of the processing target node by using the predicted probability vector, in which
a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction,
a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and
the prediction is prediction of an occupancy state of the child node of the processing target node by using intra-frame correlation and inter-frame correlation.

(21) An information processing device including:

a vector composition unit configured to generate a composite vector by combining a plurality of context vectors corresponding to a processing target node of 3D data having a tree structure, by using an importance coefficient vector for controlling a degree of contribution to prediction;
a predicted probability vector deriving unit configured to derive a predicted probability vector indicating a probability value of an occupancy state that can be taken by each child node of the processing target node on the basis of the composite vector; and
an occupancy state decoding unit configured to decode a bitstream by using the predicted probability vector to generate information indicating an occupancy state of the child node of the processing target node, in which
a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction,
a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and

the prediction is prediction of an occupancy state of the child node of the processing target node by using intra-frame correlation and inter-frame correlation.

(22) The information processing device according to (21), in which
the vector composition unit derives a weighted sum by weighting each of a plurality of the context vectors with each element of the importance coefficient vector, and sets the weighted sum as the composite vector.
(23) The information processing device according to (21) or (22), in which
the predicted probability vector deriving unit derives the predicted probability vector by using a multilayer perceptron using the composite vector as an input.
(24) The information processing device according to any one of (21) to (23), further including
a context vector deriving unit configured to derive each of the context vectors on the basis of an occupancy state of the neighboring region.
(25) The information processing device according to (24), in which
the context vector deriving unit derives, by using mutually different neural networks, the context vector corresponding to an occupancy state of the neighboring region in the processing target layer of the processing target frame, the context vector corresponding to an occupancy state of the neighboring region in the processing target layer of a frame immediately before the processing target frame, the context vector corresponding to an occupancy state of the neighboring region in the processing target layer of a frame immediately after the processing target frame, and the context vector corresponding to an occupancy state of the neighboring region in a layer lower than the processing target layer of a frame immediately before the processing target frame.
(26) The information processing device according to (25), in which
a number of dimensions of the importance coefficient vector is four.
(27) The information processing device according to (25) or (26), further including

a neighboring region occupancy state setting unit configured to set: an occupancy state of the neighboring region in the processing target layer of the processing target frame; an occupancy state of the neighboring region in the processing target layer of a frame immediately before the processing target frame; an occupancy state of the neighboring region in the processing target layer of a frame immediately after the processing target frame; and an occupancy state of the neighboring region in a layer lower than the processing target layer of a frame immediately before the processing target frame, in which

the context vector deriving unit derives each context vector on the basis of an occupancy state of each neighboring region set by the neighboring region occupancy state setting unit.

(28) The information processing device according to any one of (21) to (27), further including
an importance coefficient vector decoding unit configured to decode a bitstream to generate the importance coefficient vector.
(29) The information processing device according to (28), in which
the importance coefficient vector decoding unit performs entropy decoding on the bitstream to generate an index indicating the importance coefficient vector.
(30) The information processing device according to any one of (21) to (29), in which
the vector composition unit generates the composite vector by performing scaled dot-product attention calculation using a query vector having a number of dimensions same as a number of dimensions of each of the context vectors.
(31) The information processing device according to (30), further including
a context vector deriving unit configured to derive each of the context vectors by using a neural network for each layer.
(32) The information processing device according to (30) or (31), further including
a query vector decoding unit configured to decode a bitstream to generate the query vector.
(33) The information processing device according to (32), in which
the query vector decoding unit performs entropy decoding on the bitstream to generate an index indicating the query vector.
(34) The information processing device according to (33), further including

an entropy model deriving unit configured to derive an entropy model of the query vector, in which
the query vector decoding unit applies the derived entropy model to perform entropy decoding on the bitstream to generate the index.

(35) The information processing device according to any one of (32) to (34), in which
the query vector decoding unit performs entropy decoding on the bitstream to generate each element of the query vector.

(36) The information processing device according to any one of (30) to (35), in which
the vector composition unit generates the composite vector by performing multi-head attention calculation using the query vector.

(37) The information processing device according to any one of (30) to (36), in which
the vector composition unit generates the composite vector by using the query vector that is common for each predetermined region.

(38) The information processing device according to any one of (21) to (37), in which

    each of the context vectors corresponds to an occupancy state of a sub-neighboring region formed in the neighboring region, and
    the vector composition unit combines the context vectors of the individual sub-neighboring regions.

(39) The information processing device according to any one of (21) to (38), in which
each of the context vectors includes metadata.

(40) An information processing method including:

    generating a composite vector by combining a plurality of context vectors corresponding to a processing target node of 3D data having a tree structure, by using an importance coefficient vector for controlling a degree of contribution to prediction;
    deriving a predicted probability vector indicating a probability value of an occupancy state that can be taken by each child node of the processing target node on the basis of the composite vector; and
    decoding a bitstream by using the predicted probability vector to generate information indicating an occupancy state of the child node of the processing target node, in which
    a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction,
    a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and
    the prediction is prediction of an occupancy state of the child node of the processing target node by using intra-frame correlation and inter-frame correlation.

REFERENCE SIGNS LIST

| | |
|---|---|
| 100 | Geometry coding device |
| 111 | Quantization unit |
| 112 | Octree construction unit |
| 113 | Octree coding unit |
| 131 | Codebook storage unit |
| 132 | Neighboring voxel setting unit |
| 133 | Frame memory |
| 134 | Context vector deriving unit |
| 135 | Vector composition unit |
| 136 | MLP |
| 137 | Bit-size approximate value deriving unit |
| 138 | Codeword selection unit |
| 139 | Importance coefficient vector coding unit |
| 140 | Occupancy state coding unit |
| 151 to 154 | 3DCNN |
| 200 | Geometry decoding device |

| 211 | Octree decoding unit |
| 212 | Point cloud construction unit |
| 231 | Frame memory |
| 232 | Neighboring voxel setting unit |
| 233 | Context vector deriving unit |
| 234 | Importance coefficient vector decoding unit |
| 235 | Codebook storage unit |
| 236 | Vector composition unit |
| 237 | MLP |
| 238 | Occupancy state decoding unit |
| 331 | Codebook storage unit |
| 334 | Context vector deriving unit |
| 335 | Vector composition unit |
| 337 | Bit-size approximate value deriving unit |
| 339 | Query vector coding unit |
| 433 | Context vector deriving unit |
| 435 | Codebook storage unit |
| 436 | Vector composition unit |
| 511 | Probability vector generation unit |
| 535 | Vector composition unit |
| 539 | Query vector coding unit |
| 551 | Element average value calculation unit |
| 552 | MLP |
| 611 | Probability vector generation unit |
| 634 | Query vector decoding unit |
| 636 | Vector composition unit |
| 900 | Computer |

**Claims**

1. An information processing device comprising:

   a vector composition unit configured to generate a composite vector by combining a plurality of context vectors corresponding to a processing target node of three-dimensional (3D) data having a tree structure, by using an importance coefficient vector for controlling a degree of contribution to prediction;
   a predicted probability vector deriving unit configured to derive a predicted probability vector indicating a probability value of an occupancy state that can be taken by each child node of the processing target node on a basis of the composite vector; and
   an occupancy state coding unit configured to code information indicating an occupancy state of the child node of the processing target node by using the predicted probability vector, wherein
   a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction,
   a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and
   the prediction is prediction of an occupancy state of the child node of the processing target node by using intra-frame correlation, inter-frame correlation, or both of the intra-frame correlation and the inter-frame correlation.

2. The information processing device according to claim 1, wherein
   the vector composition unit derives a weighted sum by weighting each of a plurality of the context vectors with each element of the importance coefficient vector, and sets the weighted sum as the composite vector.

3. The information processing device according to claim 1, wherein
   the predicted probability vector deriving unit derives the predicted probability vector by using a multilayer perceptron using the composite vector as an input.

4. The information processing device according to claim 1, further comprising
a context vector deriving unit configured to derive each of the context vectors on a basis of an occupancy state of the neighboring region.

5. The information processing device according to claim 4, wherein
the context vector deriving unit derives, by using mutually different neural networks, the context vector corresponding to an occupancy state of the neighboring region in the processing target layer of the processing target frame, the context vector corresponding to an occupancy state of the neighboring region in the processing target layer of a frame immediately before the processing target frame, the context vector corresponding to an occupancy state of the neighboring region in the processing target layer of a frame immediately after the processing target frame, and the context vector corresponding to an occupancy state of the neighboring region in a layer lower than the processing target layer of a frame immediately before the processing target frame.

6. The information processing device according to claim 1, further comprising
an importance coefficient vector coding unit configured to code the importance coefficient vector.

7. The information processing device according to claim 6, wherein
the importance coefficient vector coding unit performs entropy coding on an index indicating the importance coefficient vector.

8. The information processing device according to claim 1, wherein
the vector composition unit generates the composite vector by performing scaled dot-product attention calculation using a query vector having a number of dimensions same as a number of dimensions of each of the context vectors.

9. The information processing device according to claim 8, further comprising
a context vector deriving unit configured to derive each of the context vectors by using a neural network for each layer.

10. The information processing device according to claim 8, further comprising
a query vector coding unit configured to code the query vector.

11. The information processing device according to claim 10, wherein
the query vector coding unit performs entropy coding on an index indicating the query vector.

12. The information processing device according to claim 11, further comprising

an entropy model deriving unit configured to derive an entropy model of the query vector, wherein
the query vector coding unit applies the derived entropy model to perform entropy coding on the index.

13. The information processing device according to claim 10, wherein
the query vector coding unit performs entropy coding on each element of the query vector.

14. The information processing device according to claim 8, wherein
the vector composition unit generates the composite vector by performing multi-head attention calculation using the query vector.

15. The information processing device according to claim 8, wherein
the vector composition unit generates the composite vector by using the query vector that is common for each predetermined region.

16. The information processing device according to claim 1, wherein

each of the context vectors corresponds to an occupancy state of a sub-neighboring region formed in the neighboring region, and
the vector composition unit combines the context vectors of the individual sub-neighboring regions.

17. The information processing device according to claim 1, wherein

each of the context vectors includes metadata.

18. An information processing method comprising:

generating a composite vector by combining a plurality of context vectors corresponding to a processing target node of three-dimensional (3D) data having a tree structure, by using an importance coefficient vector for controlling a degree of contribution to prediction;

deriving a predicted probability vector indicating a probability value of an occupancy state that can be taken by each child node of the processing target node on a basis of the composite vector; and

coding information indicating an occupancy state of the child node of the processing target node by using the predicted probability vector, wherein

a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction,

a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and

the prediction is prediction of an occupancy state of the child node of the processing target node by using intra-frame correlation, inter-frame correlation, or both of the intra-frame correlation and the inter-frame correlation.

19. An information processing device comprising:

a vector composition unit configured to generate a composite vector by combining a plurality of context vectors corresponding to a processing target node of three-dimensional (3D) data having a tree structure, by using an importance coefficient vector for controlling a degree of contribution to prediction;

a predicted probability vector deriving unit configured to derive a predicted probability vector indicating a probability value of an occupancy state that can be taken by each child node of the processing target node on a basis of the composite vector; and

an occupancy state decoding unit configured to decode a bitstream by using the predicted probability vector to generate information indicating an occupancy state of the child node of the processing target node, wherein

a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction,

a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and

the prediction is prediction of an occupancy state of the child node of the processing target node by using intra-frame correlation, inter-frame correlation, or both of the intra-frame correlation and the inter-frame correlation.

20. An information processing method comprising:

generating a composite vector by combining a plurality of context vectors corresponding to a processing target node of three-dimensional (3D) data having a tree structure, by using an importance coefficient vector for controlling a degree of contribution to prediction;

deriving a predicted probability vector indicating a probability value of an occupancy state that can be taken by each child node of the processing target node on a basis of the composite vector; and

decoding a bitstream by using the predicted probability vector to generate information indicating an occupancy state of the child node of the processing target node, wherein

a context vector among the context vectors corresponds to an occupancy state of a neighboring region in a space direction of the processing target node in a processing target frame or an occupancy state of a neighboring region in a space direction of a node corresponding to the processing target node in a neighboring frame in a time direction,

a plurality of the context vectors includes: the context vector corresponding to an occupancy state of the neighboring region in a processing target layer of the processing target frame; the context vector corresponding to an occupancy state of the neighboring region in the processing target layer of the neighboring frame; and the context vector corresponding to an occupancy state of the neighboring region in a layer lower than the processing target layer of the neighboring frame, and

the prediction is prediction of an occupancy state of the child node of the processing target node by using intra-frame correlation, inter-frame correlation, or both of the intra-frame correlation and the inter-frame correlation.

# FIG. 1

# FIG. 2

TIME t

$V_{k,i}^{t-1}$    $V_{k,i}^{t}$    $V_{k,i}^{t+1}$

DEPTH k

9

10

$V_{k+1,i}^{t-1}$

PREDICTION

EIGHT CHILD NODES
(8bit, 256 PATTERNS)

EP 4 657 855 A1

# FIG. 3

## FIG. 4

| METHOD 1 | PREDICTED PROBABILITY VECTOR IS DERIVED BY USING WEIGHTED SUM OF CONTEXT VECTOR USING IMPORTANCE COEFFICIENT VECTOR. IMPORTANCE COEFFICIENT VECTOR IS TRANSMITTED |
|---|---|
| METHOD 1-1 | IMPORTANCE COEFFICIENT VECTOR IS CODED BY VECTOR QUANTIZATION |
| METHOD 1-2 | IMPORTANCE COEFFICIENT VECTOR IS DERIVED BY ATTENTION CALCULATION USING QUERY VECTOR AND CONTEXT VECTOR. QUERY VECTOR IS TRANSMITTED |
| METHOD 1-2-1 | QUERY VECTOR IS CODED BY VECTOR QUANTIZATION |
| METHOD 1-2-1-1 | PARAMETER OF ENTROPY MODEL OF QUERY VECTOR IS DERIVED USING CONTEXT VECTOR |
| METHOD 1-2-2 | EACH ELEMENT OF QUERY VECTOR IS ENTROPY CODED |
| METHOD 1-2-3 | MULTI-HEAD ATTENTION IS APPLIED TO ATTENTION CALCULATION |
| METHOD 1-2-4 | QUERY VECTOR IS SHARED IN UNITS OF MACROBLOCKS |
| METHOD 1-3 | NEIGHBORING VOXEL IS DIVIDED IN SPACE DIRECTION |
| METHOD 1-4 | METADATA SUCH AS COORDINATE VALUES AND DEPTH OF Octree IS ADDED TO CONTEXT VECTOR |

EP 4 657 855 A1

## FIG. 5

POINT CLOUD
SEQUENCE
$\{PC_t \mid t=1, \cdots, T\}$

111 QUANTIZATION UNIT

112 OCTREE CONSTRUCTION UNIT

Octree SEQUENCE
$\{Octree_t \mid t=1, \cdots, T\}$

113 OCTREE CODING UNIT

BITSTREAM

100

EP 4 657 855 A1

## FIG. 6

# *FIG. 7*

```
        ┌─────────────────────────────┐
        │    CODING PROCESS START     │
        └─────────────────────────────┘
                       │
                       ▼
   ┌──────────────────────────────────────┐
   │         QUANTIZE GEOMETRY            │ S101
   └──────────────────────────────────────┘
                       │
                       ▼
   ┌──────────────────────────────────────┐
   │         CONSTRUCT OCTREE             │ S102
   └──────────────────────────────────────┘
                       │
                       ▼
   ┌──────────────────────────────────────┐
   │      PERFORM CODING OF OCTREE        │ S103
   └──────────────────────────────────────┘
                       │
                       ▼
             ┌─────────────────┐
             │       END       │
             └─────────────────┘
```

# FIG. 8

```
                OCTREE CODING PROCESS START

          INITIALIZE OCCUPANCY STATE BITSTREAM      S131
          AND IMPORTANCE COEFFICIENT BITSTREAM

  ②                    SET NEIGHBORING VOXEL        S132

                    DERIVE CONTEXT VECTOR           S133

          COMBINE CONTEXT VECTORS BY WEIGHTED       S134
    OPERATION USING IMPORTANCE COEFFICIENT VECTOR

          INPUT COMPOSITE CONTEXT VECTOR TO MLP     S135
          TO DERIVE PREDICTED PROBABILITY VECTOR

              DERIVE BIT-SIZE APPROXIMATE VALUE     S136

  NO                                                S137
     HAS PROCESSING BEEN PERFORMED ON ALL CODEWORDS?

                         YES

                          ①
```

# FIG. 9

①

| SELECT CODEWORD THAT MINIMIZES BIT-SIZE APPROXIMATE VALUE | S151 |

| PERFORM ENTROPY CODING ON INDEX OF SELECTED CODEWORD, AND ADD CODED DATA TO IMPORTANCE COEFFICIENT BITSTREAM | S152 |

| PERFORM ENTROPY CODING ON OCCUPANCY STATE OF CHILD NODE BY USING PREDICTED PROBABILITY VECTOR OF SELECTED CODEWORD AS ENTROPY MODEL, AND ADD CODED DATA TO OCCUPANCY STATE BITSTREAM | S153 |

HAVE ALL NODES BEEN PROCESSED? — S154 — NO

YES

HAVE ALL FRAMES BEEN PROCESSED? — S155 — NO

YES

HAVE ALL LAYERS BEEN PROCESSED? — S156 — NO

YES

| OUTPUT IMPORTANCE COEFFICIENT BITSTREAM AND OCCUPANCY STATE BITSTREAM | S157 |

RETURN

②

FIG. 10

EP 4 657 855 A1

## FIG. 11

# FIG. 12

```
( CODING PROCESS START )
            |
            v
┌─────────────────────────────────────┐
│| DECODING OF BITSTREAM OF OCTREE   |│ S201
└─────────────────────────────────────┘
            |
            v
┌─────────────────────────────────────┐
│ CONSTRUCT POINT CLOUD FROM OCTREE   │ S202
└─────────────────────────────────────┘
            |
            v
        ( END )
```

## FIG. 13

```
( OCTREE DECODING PROCESS START )
```

SET NEIGHBORING VOXEL — S231

DERIVE CONTEXT VECTOR — S232

DECODE IMPORTANCE COEFFICIENT BITSTREAM TO GENERATE INDEX OF APPLIED CODEWORD — S233

COMBINE CONTEXT VECTORS BY WEIGHTED OPERATION USING IMPORTANCE COEFFICIENT VECTOR CORRESPONDING TO INDEX — S234

INPUT COMPOSITE CONTEXT VECTOR TO MLP TO DERIVE PREDICTED PROBABILITY VECTOR — S235

DECODE OCCUPANCY STATE BITSTREAM BY USING DERIVED PREDICTED PROBABILITY VECTOR AS ENTROPY MODEL, TO GENERATE OCCUPANCY STATE OF CHILD NODE — S236

HAVE ALL NODES BEEN PROCESSED? — S237
NO
YES

HAVE ALL FRAMES BEEN PROCESSED? — S238
NO
YES

HAVE ALL LAYERS BEEN PROCESSED? — S239
NO
YES

OUTPUT OCTREE — S240

( RETURN )

# FIG. 14

EP 4 657 855 A1

# FIG. 15

```
          ( OCTREE CODING PROCESS START )
                        │
                        ▼
        ┌──────────────────────────────────┐
        │  INITIALIZE OCCUPANCY STATE      │ S331
        │  BITSTREAM                       │
        │  AND QUERY VECTOR BITSTREAM      │
        └──────────────────────────────────┘
②──────────────────────►│
                        ▼
        ┌──────────────────────────────────┐
        │     SET NEIGHBORING VOXEL        │ S332
        └──────────────────────────────────┘
                        │
                        ▼
        ┌──────────────────────────────────┐
        │    DERIVE CONTEXT VECTOR         │ S333
        └──────────────────────────────────┘
              ────────►│
                        ▼
        ┌──────────────────────────────────┐
        │ COMBINE CONTEXT VECTORS BY       │ S334
        │ SCALED DOT-PRODUCT ATTENTION     │
        │ CALCULATION USING QUERY VECTOR   │
        └──────────────────────────────────┘
                        │
                        ▼
        ┌──────────────────────────────────┐
        │ INPUT COMPOSITE CONTEXT VECTOR   │ S335
        │ TO MLP TO DERIVE PREDICTED       │
        │ PROBABILITY VECTOR               │
        └──────────────────────────────────┘
                        │
                        ▼
        ┌──────────────────────────────────┐
        │  DERIVE BIT-SIZE APPROXIMATE     │ S336
        │  VALUE                           │
        └──────────────────────────────────┘
                        │
                        ▼
   NO ╱ HAS PROCESSING BEEN PERFORMED ON  ╲ S337
  ◄───  ALL CODEWORDS?                     ╱
        ╲                                ╱
                     │ YES
                     ▼
                    ( 1 )
```

## FIG. 16

①
↓

| SELECT CODEWORD THAT MINIMIZES BIT-SIZE APPROXIMATE VALUE | S351 |

↓

| PERFORM ENTROPY CODING ON INDEX OF SELECTED CODEWORD, AND ADD CODED DATA TO QUERY VECTOR BITSTREAM | S352 |

↓

| PERFORM ENTROPY CODING ON OCCUPANCY STATE OF CHILD NODE BY USING PREDICTED PROBABILITY VECTOR OF SELECTED CODEWORD AS ENTROPY MODEL, AND ADD CODED DATA TO OCCUPANCY STATE BITSTREAM | S353 |

↓

HAVE ALL NODES BEEN PROCESSED?  — S354 — NO

YES ↓

HAVE ALL FRAMES BEEN PROCESSED?  — S355 — NO

YES ↓

HAVE ALL LAYERS BEEN PROCESSED?  — S356 — NO

YES ↓

| OUTPUT QUERY VECTOR BITSTREAM AND OCCUPANCY STATE BITSTREAM | S357 |

↓

( RETURN )

②

FIG. 17

# FIG. 18

```
            ( OCTREE DECODING PROCESS START )
                          │
      ┌───────────────────┤
      │                   ▼
      │         ┌──────────────────────────────┐
      │         │     SET NEIGHBORING VOXEL     │ S431
      │         └──────────────────────────────┘
      │                   │
      │                   ▼
      │         ┌──────────────────────────────┐
      │         │     DERIVE CONTEXT VECTOR     │ S432
      │         └──────────────────────────────┘
      │                   │
      │                   ▼
      │         ┌──────────────────────────────┐
      │         │  DECODE QUERY VECTOR BITSTREAM TO │ S433
      │         │  GENERATE INDEX OF APPLIED CODEWORD │
      │         └──────────────────────────────┘
      │                   │
      │                   ▼
      │         ┌──────────────────────────────┐
      │         │  COMBINE CONTEXT VECTORS BY SCALED │ S434
      │         │  DOT-PRODUCT ATTENTION CALCULATION USING │
      │         │  QUERY VECTOR CORRESPONDING TO INDEX │
      │         └──────────────────────────────┘
      │                   │
      │                   ▼
      │         ┌──────────────────────────────┐
      │         │  INPUT COMPOSITE CONTEXT VECTOR TO MLP │ S435
      │         │  TO DERIVE PREDICTED PROBABILITY VECTOR │
      │         └──────────────────────────────┘
      │                   │
      │                   ▼
      │         ┌──────────────────────────────┐
      │         │  DECODE OCCUPANCY STATE BITSTREAM BY USING │ S436
      │         │  DERIVED PREDICTED PROBABILITY VECTOR AS │
      │         │  ENTROPY MODEL, TO GENERATE OCCUPANCY STATE │
      │         │  OF CHILD NODE │
      │         └──────────────────────────────┘
      │                   │
      │  NO               ▼
      ├─────< HAVE ALL NODES BEEN PROCESSED? > S437
      │                   │ YES
      │  NO               ▼
      ├─────< HAVE ALL FRAMES BEEN PROCESSED? > S438
      │                   │ YES
      │  NO               ▼
      └─────< HAVE ALL LAYERS BEEN PROCESSED? > S439
                          │ YES
                          ▼
                ┌──────────────────┐
                │   OUTPUT OCTREE   │ S440
                └──────────────────┘
                          │
                          ▼
                      ( RETURN )
```

FIG. 19

FIG. 20

# FIG. 21

```
          ( OCTREE CODING PROCESS START )
                         │
                         ▼
        ┌─────────────────────────────────────┐
        │  INITIALIZE OCCUPANCY STATE BITSTREAM │ S531
        │    AND QUERY VECTOR BITSTREAM         │
        └─────────────────────────────────────┘
   ②────────────────────►│
                         ▼
        ┌─────────────────────────────────────┐
        │         SET NEIGHBORING VOXEL         │ S532
        └─────────────────────────────────────┘
                         │
                         ▼
        ┌─────────────────────────────────────┐
        │         DERIVE CONTEXT VECTOR         │ S533
        └─────────────────────────────────────┘
                         │
                         ▼
        ┌─────────────────────────────────────┐
        │    GENERATION OF PROBABILITY VECTOR   │ S534
        └─────────────────────────────────────┘
                         │
    ┌───────────────────►│
    │                    ▼
    │   ┌────────────────────────────────────────────┐
    │   │ COMBINE CONTEXT VECTORS BY SCALED DOT-PRODUCT│ S535
    │   │   ATTENTION CALCULATION USING QUERY VECTOR   │
    │   └────────────────────────────────────────────┘
    │                    │
    │                    ▼
    │   ┌────────────────────────────────────────────┐
    │   │   INPUT COMPOSITE CONTEXT VECTOR TO MLP      │ S536
    │   │   TO DERIVE PREDICTED PROBABILITY VECTOR     │
    │   └────────────────────────────────────────────┘
    │                    │
    │                    ▼
    │   ┌────────────────────────────────────────────┐
    │   │       DERIVE BIT-SIZE APPROXIMATE VALUE      │ S537
    │   └────────────────────────────────────────────┘
    │                    │
    │                    ▼
    │  NO ╱ HAS PROCESSING BEEN PERFORMED ON ALL CODEWORDS? ╲ S538
    └────╲                                                  ╱
                         │ YES
                         ▼
                        ( ① )
```

# FIG. 22

①

SELECT CODEWORD THAT
MINIMIZES BIT-SIZE APPROXIMATE VALUE

S551

PERFORM ENTROPY CODING ON INDEX OF
SELECTED CODEWORD BY USING GENERATED
PROBABILITY VECTOR, AND ADD CODED DATA
TO QUERY VECTOR BITSTREAM

S552

PERFORM ENTROPY CODING ON OCCUPANCY STATE OF
CHILD NODE BY USING PREDICTED PROBABILITY VECTOR
OF SELECTED CODEWORD AS ENTROPY MODEL, AND
ADD CODED DATA TO OCCUPANCY STATE BITSTREAM

S553

HAVE ALL NODES BEEN PROCESSED?    S554
NO

YES

HAVE ALL FRAMES BEEN PROCESSED?    S555
NO

YES

HAVE ALL LAYERS BEEN PROCESSED?    S556
NO

YES

OUTPUT QUERY VECTOR BITSTREAM
AND OCCUPANCY STATE BITSTREAM

S557

RETURN

②

# FIG. 23

( PROBABILITY VECTOR GENERATION PROCESS START )

↓

| CALCULATE AVERAGE VALUE OF ALL ELEMENTS FOR COLUMN VECTOR OF EACH COLUMN OF MATRIX Fi IN WHICH CONTEXT VECTOR SET IS ARRANGED | S571 |

↓

| INPUT VECTOR HAVING AVERAGE VALUE FOR ALL COLUMNS AS ELEMENT TO MLP TO DERIVE PROBABILITY VECTOR | S572 |

↓

( RETURN )

## FIG. 24

EP 4 657 855 A1

## FIG. 25

( OCTREE DECODING PROCESS START )

→ SET NEIGHBORING VOXEL — S631

DERIVE CONTEXT VECTOR — S632

GENERATION OF PROBABILITY VECTOR — S633

DECODE QUERY VECTOR BITSTREAM TO GENERATE INDEX OF APPLIED CODEWORD — S634

COMBINE CONTEXT VECTORS BY SCALED DOT-PRODUCT ATTENTION CALCULATION USING QUERY VECTOR CORRESPONDING TO INDEX — S635

INPUT COMPOSITE CONTEXT VECTOR TO MLP TO DERIVE PREDICTED PROBABILITY VECTOR — S636

DECODE OCCUPANCY STATE BITSTREAM BY USING DERIVED PREDICTED PROBABILITY VECTOR AS ENTROPY MODEL, TO GENERATE OCCUPANCY STATE OF CHILD NODE — S637

HAVE ALL NODES BEEN PROCESSED? — S638
NO ← / YES ↓

HAVE ALL FRAMES BEEN PROCESSED? — S639
NO ← / YES ↓

HAVE ALL LAYERS BEEN PROCESSED? — S640
NO ← / YES ↓

OUTPUT OCTREE — S641

( RETURN )

# FIG. 26

710      711

# FIG. 27

## FIG. 28

EP 4 657 855 A1

## INTERNATIONAL SEARCH REPORT

| International application No. |
| --- |
| **PCT/JP2024/000343** |

| A. | CLASSIFICATION OF SUBJECT MATTER |
| --- | --- |

*H04N 19/13*(2014.01)i; *H04N 19/50*(2014.01)i; *H04N 19/96*(2014.01)i
FI:    H04N19/13; H04N19/50; H04N19/96

According to International Patent Classification (IPC) or to both national classification and IPC

| B. | FIELDS SEARCHED |
| --- | --- |

Minimum documentation searched (classification system followed by classification symbols)

H04N19/13; H04N19/50; H04N19/96

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | QUE, Zizheng et al., VoxelContext-Net: An Octree based Framework for Point Cloud Compression [online], Published in: 2021 IEEE/CVF Conference on Computer Vision and Pattern Recognition (CVPR), [retrieved on 14 February 2024], 02 November 2021, pages 6038-6047, Internet <URL:https://ieeexplore.ieee.org/stamp/stamp.jsp?tp=&arnumber=9578231>, DOI: 10.1109/CVPR46437.2021.00598<br>    chapter 1, sections 3.1-3.7 | 1-7, 16-20 |
| A | | 8-15 |
| Y | CN 114972551 A (PEKING UNIVERSITY SHENZHEN GRADUATE SCHOOL) 30 August 2022 (2022-08-30)<br>    paragraphs [0006]-[0018], [0036]-[0144], fig. 1-13 | 1-7, 16-20 |
| A | | 8-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 February 2024** | **05 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/000343**

| Patent document cited in search report | | | Publication date (day/month/year) | Patent family member(s) | Publication date (day/month/year) |
|---|---|---|---|---|---|
| CN | 114972551 | A | 30 August 2022 | WO 2023/151170 A1<br>page 1, line 15 to page 4, line 29, page 5, line 28 to page 16, line 7, fig. 1-13 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZIZHENG QUE** ; **GUO LU** ; **DONG XU**. VoxelContext-Net: An Octree based Framework for Point Cloud Compression. *Proceedings of the IEEE/CVF Conference on Computer Vision and Pattern Recognition (CVPR)*, 2021, 6042-6051